# EUROPEAN PATENT APPLICATION

(11) **EP 1 280 353 A1**
(43) Date of publication of application: **29.01.2003**
(21) Application number: 01921923.7
(22) Date of filing: 19.04.2001
(51) Int. Cl.: H04N 7/173

(54) **INFORMATION DELIVERY SYSTEM, INFORMATION DELIVERY METHOD, AND PROGRAM FOR ALLOWING COMPUTER TO EXECUTE THAT METHOD**

(30) Priority: 24.04.2000 JP 2000123254
(71) Applicant: MITSUBISHI DENKI KABUSHIKI KAISHA, Tokyo 100-8310 (JP)
(72) Inventor: WAKIMOTO, Koji, Mitsubishi Denki Kabushiki Kaisha, Chiyoda-ku, Tokyo 100-8310 (JP); KANDA, Junshiro, Mitsubishi Denki Kabushiki Kaisha, Chiyoda-ku, Tokyo 100-8310 (JP)
(74) Representative: Pfenning, Meinig & Partner
(86) International application number: JP0103366
(87) International publication number: WO01082620

(57) **Abstract**

A buffer apparatus (1) receives unit information from a server(2); stores the delivery receiver information about each delivery receiver; stores additional information to be added to the unit information; generates transmission information for instructing to add the stored additional information to the received unit information on the basis of the unit attribute information concerning the attribute and time period of the received unit information and on the basis of the stored delivery receiver information and to transmit the resultant unit information to which the additional information has been added; and adds the stored additional information to the received unit information to transmit the unit information to which the additional information has been added to a terminal (4), on the basis of the generated transmission information.

## Description

### TECHNICAL FIELD

The present invention relates to an information delivery system (such as a VOD (Video On Demand) system and the like) that delivers information, which is temporally continuous, such as multimedia information, sound, and images (i.e. dynamic images) from a server device toga terminal device via a buffer device and in which the terminal device receives the continuous information from the server device and plays it, an information delivery method for the above system, and a computer program for executing the method on a computer. In particular, this invention relates to an information delivery system, an information delivery method, and a program for executing the method on a computer in which processing such as the insertion of advertisements or such as filtering is performed on source information from a server device and the processed information then delivered to the terminal device.

### BACKGROUND ART

A well-known example of a conventional information delivery system for delivering temporally continuous data such as images (i.e. dynamic images), sound, and multimedia information is a system using the RealServer from RealNetworks, Inc. In this conventional system, a streaming delivery technology is employed in which data is continuously transmitted from a server to a terminal and the terminal simultaneously plays the data while the data is being received. For many reasons, it is very convenient to employ the streaming delivery technology. For example, a huge storage capacity would be necessary in the terminal if a large volume of data, such as is generated by dynamic images, were to be first delivered to the terminal and the playing of that data were only started once all the data had been delivered. Moreover, a huge amount of data is required to be transmitted, and the delivery of the data would require a great deal of time before the playing could begin.

A streaming delivery server such as the RealServer can deliver the data in two ways. The two ways are: the simultaneous multiple address delivery and the on-demand delivery. In the simultaneous multiple address delivery, the server simultaneously delivers same data to a plurality of terminals . In the on-demand delivery, the server delivers the data to the terminal only when the terminal makes a demand for the data to the server. The streaming delivery server may provide a service that employs any one or both of the simultaneous multiple address delivery and the on-demand delivery. However, in the case of the simultaneous multiple address delivery, because the data is delivered simultaneously to each of the terminals, there is a drawback that the user has to receive the data irrespective of the fact whether the timing at which the data is delivered is suitable for the user or not. In other words, the user can not freely choose a timing for delivery of the data. On the other hand, in the case of the on-demand delivery, because the communication amount and load on the server increases as the number of terminals performing communication ( "communicating terminals") or the frequency of the requests by the communicating terminals increases, there is a drawback that a response can not be given to connection requests that exceed the communication capacity and capabilities of the server.

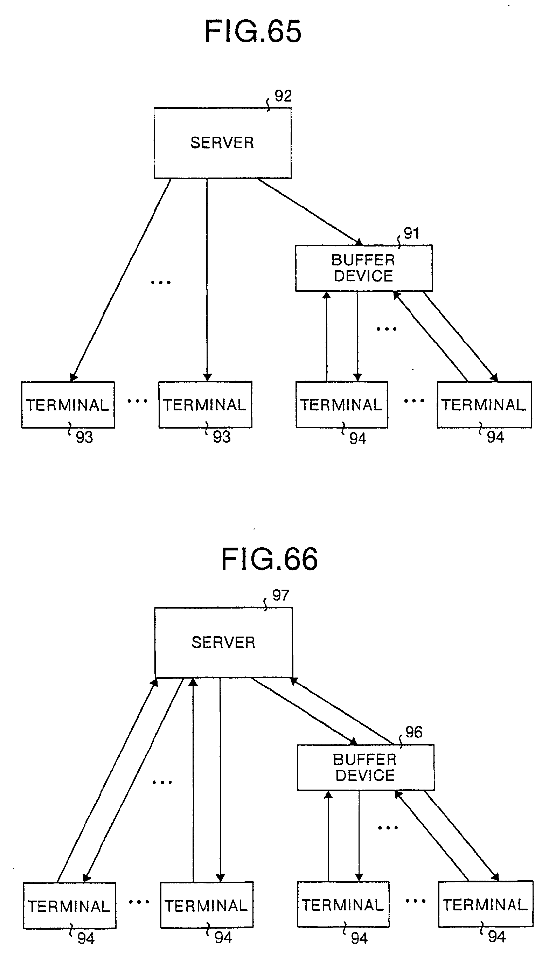

The "Video File Delivery System" disclosed in Japanese Patent Application Laid-Open (JP-A) No. 7-200380 is known as a conventional information delivery system that solves the above-mentioned problems. Figs. 65 and 66 show the structure of the conventional information delivery system disclosed in this publication. In these information delivery systems, buffer devices 91 and 96 are provided between terminals 94 and a server 92 respectively for performing simultaneous multiple address delivery and also between terminals 94 and a server.97 for performing on-demand delivery. Data is transferred in advance from the servers 92 and 97 to the buffers 91 and 96 and the transferred data is then delivered to a terminal 94 in response to a request from that terminal 94. As a result, the communication amount and load on the servers 92 and 97 are decreased.

In the case of the server 92 for performing simultaneous multiple address delivery, the buffer 91 receives and stores the data of the simultaneous multiple address delivery and thereafter performs on-demand delivery in response to a request from a terminal 94. In the case of the server 97 for performing on-demand delivery, the buffer 96 sends a request to the server 97 instead of the terminal 94 and then acquires and stores the data. Thereafter, the on-demand delivery is performed in response to a request from a terminal 94. The services to the terminals 93 and 94 that do not use the buffer devices 91 and 96 are able to continue unchanged as they are.

When an Internet connection provider provides the buffer devices 91 and 96, because the state of the communication paths are changed by the state of the network congestion and the like in connections on the Internet from the servers 92 and 97 to the buffer devices 91 and 96 of the Internet connection provider, it is not possible to guarantee throughput, however, if the connections from the buffer devices 91 and 96 of the Internet connection provider are dedicated line connections or are formed using telephone lines, then it is possible to guarantee the desired throughput. Moreover, in cases such as this when it is not possible to guarantee the throughput, at the Internet connection provider side it is possible to implement various measures such as restricting the number of users so that it is possible to secure the throughput. Thus, as a result of the Internet connection provider using the buffer devices 91 and 96, it is possible for a user to be provided with a stable information delivery service.

In the above described examples, source data supplied from the server is delivered unchanged in its existing state to all the terminals. However, there are cases when it is desirable to process the source data to correspond to factors such as the terminal type or the interest level of the user or the like that are different for each session. An information delivery system that uses the "Video On Demand Device" disclosed in JP-A No. 9-65321 is known as a conventional information delivery system for processing the source data to correspond to factors such as the terminal type or the interest level of the user or the like that are different for each session.

In this type of information delivery system, individual information showing the requests of a user that are different for each session is held in a server that performs on-demand delivery. This server (video on-demand device) receives requests from the user and delivers source data that it has processed on the basis of the individual information of that user to the terminal. Namely, information on the destination of the delivery is managed in the server having the source data; the source data is also processed and delivered to the terminal by the server having the source data.

In addition, the "Information Processing Method Using Filter Processing" disclosed in JP-A No. 9-160897 is known as a conventional information delivery method for processing source data to correspond to factors such as the terminal type or the interest level of the user or the like that are different for each session. In this type of information deliverymethod, the source data is separated into data units of a plurality of time bands on the server side. Header information is then inserted into each data unit and simultaneous multiple address deliveries are made to the terminals. In addition, processing such as selection of the received data is performed on the terminal side and the data is then presented to the user. In this case, the modified data (i.e. after the header information has been inserted therein) is taken as being sent from the server.

However, the problem with information delivery systems that use the above described conventional "Video On Demand Device" is that, when the server device goes through a buffer in order to perform the processing on the source data, the same source data is delivered to each terminal connected to the buffer device and it is not possible to process the source data to correspond to each of the buffer device delivery destinations. In addition, because the server device performs the processing, there is also the problem of the server device not being able to perform the service of processing the source data independently from the service providing the source data.

Furthermore, because the server device modifies the source data before transmitting it according to the above described conventional "Information Processing Method Using Filter Processing", if this information delivery method is introduced into an information delivery system that transmits source data without first modifying it, the problem arises that existing terminals that do not respond to modified source data become unusable.

### DISCLOSURE OF THE INVENTION

It is an object of the present invention to provide a method of and a system for delivering information, and a computer program for executing the method on a computer in which a buffer device is provided between a server device and a terminal and in which processing is performed on source data that is appropriate for each delivery destination of the buffer device while providing a stable information delivery service, and in which it is possible to perform a service of processing source data independently from a service of providing the source data.

The information delivery system according to one aspect of the present invention comprises a server device connected to at least one terminal device via a buffer device, wherein the server device delivers to the terminal device via the buffer device an information that is temporally continuous and includes a plurality of unit information. The buffer device comprises: a receiving unit which receives units of information from the server device; a delivery destination information storage unit which stores delivery destination information that relates to a destination of a delivery of each delivery destination; an additional information storage unit for storing additional information that is to be added to the units of information; a transmission information creation unit that, based on the delivery destination information stored in the delivery destination information storage unit as well as unit attribute information that relates to time spans and attributes of the unit information received by the receiving unit, creates transmission information that instructs that the additional information stored in the additional information storage unit is to be added to the units of information received by the receiving unit and then transmitted; and a transmitting unit that, based on the transmission information created by the transmission information creation unit, adds additional information stored in the additional information storage unit to units of information received by the receiving unit and transmits units of information to which the additional information has been added to the terminal device.

According to the above-mentioned aspect of this invention, the receiving unit receives the unit information from a server device; the delivery destination information storage unit stores the delivery destination information that relates to the destination of a delivery for each delivery destination; the additional information storage unit stores additional information to is to be added to the unit information; the transmission information creation unit creates the transmission information that instructs that the additional information stored in the additional information storage unit is to be added to the unit information received by the receiving unit and then transmitted based on the delivery destination information stored in the delivery destination information storage unit as well as unit attribute information of the unit information received by the receiving unit; and the transmitting unit adds additional information stored in the additional information storage unit to the unit information received by the receiving unit based on the transmission information created by the transmission information creation unit, and transmits the unit information to which the additional information has been added to the terminal device. As a result, it is possible to perform processing of source data in the buffer device.

The information delivery system according to another aspect of the present invention comprises a server device connected to at least one terminal device via a buffer device, wherein the server device delivers to the terminal device via the buffer device an information that is temporally continuous and includes a plurality of unit information. The buffer device comprises: a receiving unit which receives units of information from the server device; a delivery destination information storage unit which stores delivery destination information that relates to a destination of a delivery of each delivery destination; an additional information storage unit for storing additional information that is to be added to the units of information; a transmission information creation unit that, based on the delivery destination information stored in the delivery destination information storage unit as well as unit attribute information that relates to time spans and attributes of the unit information received by the receiving unit, creates transmission information that instructs that the additional information stored in the additional information storage unit is to be added to the units of information received by the receiving unit and then transmitted; and a transmitting unit that transmits the transmission information created by the transmission information creation unit to the terminal device and, in accordance with a transmission request from the terminal device that is based on the transmission information, adds additional information stored in the additional information storage unit to units of information received by the receiving unit and transmits units of information to which the additional information has been added to the terminal device.

According to the above-mentioned aspect of this invention, the receiving unit receives the unit information from a server device; the delivery destination information storage unit stores the delivery destination information that relates to the destination of a delivery for each delivery destination; the additional information storage unit stores additional information is to be added to the unit information; the transmission information creation unit creates the transmission information that instructs that the additional information stored in the additional information storage unit is to be added to the unit information received by the receiving unit and then transmitted based on the delivery destination information stored in the delivery destination information storage unit as well as unit attribute information that relates to time spans and attributes of the unit information received by the receiving unit; and the transmitting unit transmits the transmission information created by the transmission information creation unit to the terminal device and, in accordance with a transmission request from the terminal device that is based on the transmission information, adds additional information stored in the additional information storage unit to units of information received by the receiving unit and transmits units of information to which the additional information has been added to the terminal device. As a result, it is possible to perform processing of source data in the buffer device.

The information delivery system according to still another aspect of the present invention comprises a server device connected to at least one terminal device via a buffer device, wherein the server device delivers to the terminal device via the buffer device an information that is temporally continuous and includes a plurality of unit information. A buffer device that transmits the unit information to an another buffer device comprises: a receiving unit which receives unit information from the buffer device; a delivery destination information storage unit which stores delivery destination information that relates to a destination of a delivery of each delivery destination; an additional information storage unit for storing additional information that is to be added to the unit information; a transmission information creation unit that, based on the delivery destination information stored in the delivery destination information storage unit as well as unit attribute information that relates to time spans and attributes of the unit information received by the receiving unit, creates transmission information that instructs that the additional information stored in the additional information storage unit is to be added to the unit information received by the receiving unit and then transmitted; an information-unit transmitting unit that, based on the transmission information created by the transmission information creation unit, adds additional information stored in the additional information storage unit to the unit information received by the receiving unit and transmits the unit information to which the additional information has been added to the another buffer device; a new-unit attribute information creation unit which creates new unit attribute information that corresponds to unit information transmitted by the transmitting unit; and a new-unit attribute information transmitting unit which transmits the new unit attribute information created by the new-unit attribute information creation unit to the another buffer device.

According to the above-mentioned aspect of this invention, the receiving unit receives the unit information from a server device; the delivery destination information storage unit stores the delivery destination information that relates to the destination of a delivery for each delivery destination; the additional information storage unit stores additional information is to be added to the unit information; the transmission information creation unit creates the transmission information that instructs that the additional information stored in the additional information storage unit is to be added to the unit information received by the receiving unit and then transmitted based on the delivery destination information stored in the delivery destination information storage unit as well as unit attribute information that relates to time spans and attributes of the unit information received by the receiving unit; the information-unit transmitting unit adds additional information stored in the additional information storage unit to the unit information received by the receiving unit based on the transmission information created by the transmission information creation unit and transmits the unit information to which the additional information has been added to the another buffer device; the new-unit attribute information creation unit creates new unit attribute information that corresponds to unit information transmitted by the transmitting unit; and the new-unit attribute information transmitting unit transmits the new unit attribute information created by the new-unit attribute information creation unit to the another buffer device. As a result, it is possible to perform processing of source data in the buffer device.

In the information delivery system according to the above-mentioned aspects, the buffer device further comprises: an information unit detecting unit that, based on the delivery destination information stored in the delivery destination information storage unit and the unit attribute information in the unit information received by the receiving unit, detects unit information whose unit attribute information fulfills predetermined conditions, and the transmission information creation unit creates the transmission information that instructs that the additional information stored in the additional information storage unit is to be added to the unit information detected by the information unit detecting unit and then transmitted.

According to the above-mentioned aspect of this invention, the unit information detection unit detects unit information whose unit attribute information meets predetermined conditions based on the delivery destination information stored in the delivery destination information storage unit and the unit attribute information in the unit information received by the receiving unit; and the transmission information creation unit creates the transmission information that instructs that the additional information stored in the additional information storage unit is to be added to the unit information detected by the information unit detecting unit and then transmitted. As a result, it is possible to add the additional information to the appropriate position in accordance with the delivery destination.

In the information delivery system according to the above-mentioned aspects, the buffer device further comprises: an additional attribute information storage unit that stores additional attribute information that relates to attributes of the additional information; and an additional information detecting unit that, based on the additional attribute information stored in the additional attribute information storage unit and at least one of the unit attribute information in the unit information received by the receiving unit and the delivery destination information stored in the delivery destination information storage unit, detects additional information whose additional attribute information meets predetermined conditions, and the transmission information creation unit creates the transmission information that instructs that the additional information detected by the additional information detecting unit is to be added to the unit information received by the receiving unit and then transmitted.

According to the above-mentioned aspect of this invention, the additional attribute information storage unit stores additional attribute information that relates to attributes of the additional information; the additional information detecting unit detects additional information whose additional attribute information meets predetermined conditions based on the additional attribute information stored in the additional attribute information storage unit and at least one of the unit attribute information in the unit information received by the receiving unit and the delivery destination information stored in the delivery destination information storage unit; and the transmission information creation unit creates the transmission information that instructs that the additional information detected by the additional information detecting unit is is to be added to the unit information received by the receiving unit and then transmitted. As a result, it is possible to add the appropriate additional information in accordance with the delivery destination.

The information delivery system according to still another aspect of the present invention comprises a server device connected to at least one terminal device via a buffer device, wherein the server device delivers to the terminal device via the buffer device an information that is temporally continuous and includes a plurality of unit information. The buffer device comprises: a receiving unit which receives unit information from the server device; a delivery destination information storage unit which stores delivery destination information that relates to a destination of a delivery of each delivery destination; a link information storage unit which stores link information used for forming a link to the additional information that is to be added to the unit information; a transmission information creation unit that, based on the delivery destination information stored in the delivery destination information storage unit as well as unit attribute information that relates to time spans and attributes of the unit information received by the receiving unit, creates transmission information that instructs that the link information stored in the link information storage unit is to be added to the unit information received by the receiving unit and then transmitted; and a transmitting unit that, based on the transmission information created by the transmission information creation unit, adds the link information stored in the link information storage unit to the unit information received by the receiving unit and transmits the unit information to which the link information has been added to the terminal device.

According to the above-mentioned aspect of this invention, the receiving unit receives the unit information from the server device; the delivery destination information storage unit stores the delivery destination information that relates to a destination of a delivery of each delivery destination; the link information storage unit stores the link information used for forming a link to the additional information that is to be added to the unit information; the transmission information creation unit creates the transmission information that instructs that the link information stored in the link information storage unit is to be added to the unit information received by the receiving unit and then transmitted based on the delivery destination information stored in the delivery destination information storage unit as well as unit attribute information that relates to time spans and attributes of the unit information received by the receiving unit; and the transmitting unit adds the link information stored in the link information storage unit to the unit information received by the receiving unit based on the transmission information created by the transmission information creation unit, and transmits the unit information to which the link information has been added to the terminal device. As a result, it is possible for source data to be processed in the buffer device.

The information delivery system according to still another aspect of the present invention comprises a server device connected to at least one terminal device via a buffer device, wherein the server device delivers to the terminal device via the buffer device an information that is temporally continuous and includes a plurality of unit information. The buffer device comprises : a receiving unit which receives unit information from the server device; a delivery destination information storage unit which stores delivery destination information that relates to a destination of a delivery of each delivery destination; a link information storage unit which stores link information used for forming a link to the additional information that is to be added to unit information; a transmission information creation unit that, based on the delivery destination information stored in the delivery destination information storage unit as well as unit attribute information that relates to time spans and attributes of the unit information received by the receiving unit, creates transmission information that instructs that the link information stored in the link information storage unit is to be added to the unit information received by the receiving unit and then transmitted; and a transmitting unit that transmits the transmission information created by the transmission information creation unit to the terminal device and, in accordance with a transmission request from the terminal device that is based on the transmission information, adds the link information stored in the link information storage unit to the unit information received by the receiving unit and transmits the unit information to which the link information has been added to the terminal device.

According to the above-mentioned aspect of this invention, the receiving unit receives the unit information from the server device; the delivery destination information storage unit stores the delivery destination information that relates to a destination of a delivery of each delivery destination; the link information storage unit stores the link information used for forming a link to the additional information that is to be added to unit information; the transmission information creation unit creates the transmission information that instructs that the link information stored in the link information storage unit is to be added to the unit information received by the receiving unit and then transmitted based on the delivery destination information stored in the delivery destination information storage unit as well as unit attribute information that relates to time spans and attributes of the unit information received by the receiving unit; and the transmitting unit transmits the transmission information created by the transmission information creation unit to the terminal device and, in accordance with a transmission request from the terminal device that is based on the transmission information, adds the link information stored in the link information storage unit to the unit information received by the receiving unit and transmits the unit information to which the link information has been added to the terminal device. As a result, it is possible for source data to be processed in the buffer device.

The information delivery system according to still another aspect of the present invention comprises a server device connected to at least one terminal device via a buffer device, wherein the server device delivers to the terminal device via the buffer device an information that is temporally continuous and includes a plurality of unit information. A buffer device that transmits the unit information to an another buffer device comprises: a receiving unit which receives unit information from the buffer device; a delivery destination information storage unit which stores delivery destination information that relates to a destination of a delivery of each delivery destination; a link information storage unit which stores link information to additional information that is to be added to the unit information; a transmission information creation unit that, based on the delivery destination information stored in the delivery destination information storage unit as well as unit attribute information that relates to time spans and attributes of the unit information received by the receiving unit, creates transmission information that instructs that the link information stored in the link information storage unit is to be added to the unit information received by the receiving unit and then transmitted; an information-unit transmitting unit that, based on the transmission information created by the transmission information creation unit, adds the link information stored in the link information storage unit to the unit information received by the receiving unit and transmits the unit information to which the link information has been added to the another buffer device; a new-unit attribute information creation unit which creates new unit attribute information that corresponds to unit information transmitted by the transmitting unit; and a new-unit attribute information transmitting unit which transmits the new unit attribute information created by the new-unit 'attribute information creation unit to the another buffer device.

According to the above-mentioned aspect of this invention, the receiving unit receives the unit information from the buffer device; the delivery destination information storage unit stores the delivery destination information that relates to a destination of a delivery of each delivery destination; the link information storage unit stores the link information to additional information that is to be added to the unit information; the transmission information creation unit creates the transmission information that instructs that the link information stored in the link information storage unit is to be added to the unit information received by the receiving unit and then transmitted based on the delivery destination information stored in the delivery destination information storage unit as well as unit attribute information that relates to time spans and attributes of the unit information received by the receiving unit; the information-unit transmitting unit adds the link information stored in the link information storage unit to the unit information received by the receiving unit based on the transmission information created by the transmission information creation unit, and transmits the unit information to which the link information has been added to the another buffer device; the new-unit attribute information creation unit creates new unit attribute information that corresponds to unit information transmitted by the transmitting unit; and the new-unit attribute information transmitting unit transmits the new unit attribute information created by the new-unit attribute information creation unit to the another buffer device. As a result, it is possible for source data to be processed in the buffer device.

In the information delivery system described above, the buffer device further comprises: an information unit detecting unit that, based on the delivery destination information stored in the delivery destination information storage unit and the unit attribute information in the unit information received by the receiving unit, detects unit information whose unit attribute information fulfills predetermined conditions, and the transmission information creation unit creates the transmission information that instructs that the link information stored in the link information storage unit be added to unit information detected by the information unit detecting unit and then transmitted.

According to the above-mentioned aspect of this invention, the information unit detecting unit detects unit information whose unit attribute information fulfills predetermined conditions based on the delivery destination information stored in the delivery destination information storage unit and the unit attribute information in the unit information received by the receiving unit; and the transmission information creation unit creates the transmission information that instructs that the link information stored in the link information storage unit is to be added to unit information detected by the information unit detecting unit and then transmitted. As a result, it is possible for additional information to be added to the appropriate position in accordance with the delivery destination.

In the information delivery system described above, the buffer device further comprises: an additional attribute information storage unit that stores additional attribute information that relates to attributes of the additional information; and an additional information detecting unit that, based on the additional attribute information stored in the additional attribute information storage unit and at least one of the unit attribute information in the unit information received by the receiving unit and the delivery destination information stored in the delivery destination information storage unit, detects link information used for forming a link to the additional information whose additional attribute information meets predetermined conditions, and the transmission information creation unit creates the transmission information that instructs that link information detected by the additional information detecting unit is to be added to the unit information received by the receiving unit and then transmitted.

According to the above-mentioned aspect of this invention, the additional attribute information storage unit stores additional attribute information that relates to attributes of the additional information; the additional information detecting unit detects link information used for forming a link to the additional information whose additional attribute information meets predetermined conditions based on the additional attribute information stored in the additional attribute information storage unit and at least one of the unit attribute information in the unit information received by the receiving unit and the delivery destination information stored in the delivery destination information storage unit; and the transmission information creation unit creates the transmission information that instructs that link information detected by the additional information detecting unit is to be added to the unit information received by the receiving unit and then transmitted. As a result, it is possible for the appropriate additional information in accordance with the delivery destination.

The information delivery system according to still another aspect of the present invention comprises a server device connected to at least one terminal device via a buffer device, wherein the server device delivers to the terminal device via the buffer device an information that is temporally continuous and includes a plurality of unit information. The buffer device comprises: a receiving unit which receives unit information from the server device; a delivery destination information storage unit which stores delivery destination information that relates to a destination of a delivery of each delivery destination; a priority degree information creation unit that, based on the delivery destination information stored in the delivery destination information storage unit as well as unit attribute information that relates to time spans and attributes of the unit information received by the receiving unit, creates information about a degree of priority of the information unit received by the receiving unit; a transmission information creation unit that, based on the priority degree information created by the priority degree creation unit, creates transmission information that instructs that only the unit information whose degree of priority meets predetermined conditions is to be transmitted; and a transmitting unit that, based on the transmission information created by the transmission information creation unit, transmits only the unit information whose degree of priority meets the predetermined conditions.

According to the above-mentioned aspect of this invention, the receiving unit receives the unit information from the server device; the delivery destination information storage unit stores the delivery destination information that relates to a destination of a delivery of each delivery destination; the priority degree information creation unit creates information about a degree of priority of the information unit received by the receiving unit based on the delivery destination information stored in the delivery destination information storage unit as well as unit attribute information that relates to time spans and attributes of the unit information received by the receiving unit; the transmission information creation unit creates the transmission information that instructs that only the unit information whose degree of priority meets predetermined conditions is to be transmitted based on the priority degree information created by the priority degree creation unit; and the transmitting unit transmits only the unit information whose degree of priority meets the predetermined conditions based on the transmission information created by the transmission information creation unit. As a result, it is possible for source data to be processed in the buffer device.

The information delivery system according to still another aspect of the present invention comprises a server device connected to at least one terminal device via a buffer device, wherein the server device delivers to the terminal device via the buffer device an information that is temporally continuous and includes a plurality of unit information. The buffer device comprises: a receiving unit which receives unit information from the server device; a delivery destination information storage unit which stores delivery destination information that relates to a destination of a delivery of each delivery destination; a priority degree information creation unit that, based on the delivery destination information stored in the delivery destination information storage unit as well as unit attribute information that relates to time spans and attributes of the unit information received by the receiving unit, creates information about a degree of priority of the information unit received by the receiving unit; a transmission information creation unit that, based on the priority degree information created by the priority degree creation unit, creates transmission information showing a sequence for transmitting unit information received by the receiving unit; and a transmitting unit that arranges and transmits unit information in a sequence that is based on the transmission information created by the transmission information creation unit.

According to the above-mentioned aspect of this invention, the receiving unit receives the unit information from the server device; the delivery destination information storage unit stores the delivery destination information that relates to a destination of a delivery of each delivery destination; the priority degree information creation unit creates information about a degree of priority of the information unit received by the receiving unit based on the delivery destination information stored in the delivery destination information storage unit as well as unit attribute information that relates to time spans and attributes of the unit information received by the receiving unit; the transmission information creation unit creates the transmission information showing a sequence for transmitting unit information received by the receiving unit based on the priority degree information created by the priority degree creation unit; and the transmitting unit arranges and transmits unit information in a sequence that is based on the transmission information created by the transmission information creation unit. As a result, it is possible for source data to be processed in the buffer device.

The information delivery system according to still another aspect of the present invention comprises a server device connected to at least one terminal device via a buffer device, wherein the server device delivers to the terminal device via the buffer device an information that is temporally continuous and includes a plurality of unit information. The buffer device comprises: a receiving unit which receives unit information from the server device; a delivery destination information storage unit which stores delivery destination information that relates to a destination of a delivery of each delivery destination; a priority degree information creation unit that, based on the delivery destination information stored in the delivery destination information storage unit as well as unit attribute information that relates to time spans and attributes of the unit information received by the receiving unit, creates information about a degree of priority of the information unit received by the receiving unit; a transmission information creation unit that, based on the priority degree information created by the priority degree creation unit, creates transmission information that instructs that only the unit information whose degree of priority meets predetermined conditions is to be transmitted; and a transmitting unit that transmits the transmission information created by the transmission information creation unit to the terminal device and, in accordance with a transmission request from the terminal device that is based on the transmission information, wherein the transmitting unit transmits only the unit information whose degree of priority meets the predetermined conditions.

According to the above-mentioned aspect of this invention, the receiving unit receives the unit information from the server device; the delivery destination information storage unit stores the delivery destination information that relates to a destination of a delivery of each delivery destination; the priority degree information creation unit creates information about a degree of priority of the information unit received by the receiving unit based on the delivery destination information stored in the delivery destination information storage unit as well as unit attribute information that relates to time spans and attributes of the unit information received by the receiving unit; the transmission information creation unit creates the transmission information that instructs that only the unit information whose degree of priority meets predetermined conditions is to be transmitted based on the priority degree information created by the priority degree creation unit; and the transmitting unit transmits the transmission information created by the transmission information creation unit to the terminal device and, in accordance with a transmission request from the terminal device that is based on the transmission information, wherein the transmitting unit transmits only the unit information whose degree of priority meets the predetermined conditions. As a result, it is possible for source data to be processed in the buffer device.

The information delivery system according to still another aspect of the present invention comprises a server device connected to at least one terminal device via a buffer device, wherein the server device delivers to the terminal device via the buffer device an information that is temporally continuous and includes a plurality of unit information. The buffer device comprises: a receiving unit which receives unit information from the server device; a delivery destination information storage unit which stores delivery destination information that relates to a destination of a delivery of each delivery destination; a priority degree information creation unit that, based on the delivery destination information stored in the delivery destination information storage unit as well as unit attribute information that relates to time spans and attributes of the unit information received by the receiving unit, creates information about a degree of priority of the information unit received by the receiving unit; a transmission information creation unit that, based on the priority degree information created by the priority degree creation unit, creates transmission information showing a sequence for transmitting unit information received by the receiving unit; and a transmitting unit that transmits the transmission information created by the transmission information creation unit to the terminal device and that arranges and transmits the unit information in a sequence that is in accordance with a transmission request from the terminal device that is based on the transmission information.

According to the above-mentioned aspect of this invention, the receiving unit receives the unit information from the server device; the delivery destination information storage unit stores the delivery destination information that relates to a destination of a delivery of each delivery destination; the priority degree information creation unit creates information about a degree of priority of the information unit received by the receiving unit based on the delivery destination information stored in the delivery destination information storage unit as well as unit attribute information that relates to time spans and attributes of the unit information received by the receiving unit; the transmission information creation unit creates the transmission information showing a sequence for transmitting unit information received by the receiving unit based on the priority degree information created by the priority degree creation unit; and the transmitting unit transmits the transmission information created by the transmission information creation unit to the terminal device and arranges and transmits unit information in a sequence that is in accordance with a transmission request from the terminal device that is based on the transmission information. As a result, it is possible for source data to be processed in the buffer device.

In the information delivery system described above, when the receiving unit receives the unit information and the priority degree information creation unit creates information on the degree of priority of those unit information, based on this information on the degree of priority, the transmission information creation unit creates new transmission information that updates the sequence of transmission shown by the previously created transmission information.

According to the above-mentioned aspect of this invention, when the receiving unit receives the unit information and the priority degree information creation unit creates information on the degree of priority of those unit information, based on this information on the degree of priority, the transmission information creation unit creates new transmission information that updates the sequence of transmission shown by the previously created transmission information. As a result, it is possible for the data units to be transmitted as the transmission information is being sequentially updated even while the buffer device is still receiving continuous information from the server device.

In the information delivery system described above, the terminal device includes: a transmission information receiving unit which receives transmission information from the transmission unit; a terminal input unit for inputting an instruction from a user to alter the sequence of transmission shown by the transmission information received by the transmission information receiving unit; a transmission requesting unit for making a transmission request to the transmission unit for unit information to be transmitted in the altered sequence based on the instruction from the user input by the terminal input unit; and a receiving playback unit which receives and also playing back unit information transmitted from the transmission unit in accordance with a transmission request made by the transmission requesting unit.

According to the above-mentioned aspect of this invention, the transmission information receiving unit receives transmission information from the transmission unit; the terminal input unit inputs an instruction from a user to alter the sequence of transmission shown by the transmission information received by the transmission information receiving unit; the transmission requesting unit makes a transmission request to the transmission unit for unit information to be transmitted in the altered sequence based on the instruction from the user input by the terminal input unit; and the receiving playback unit receives and also plays back unit information transmitted from the transmission unit in accordance with a transmission request made by the transmission requesting unit. As a result, it is possible to alter the sequence of the unit information to a sequence desired by the user.

In the information delivery system described above, the unit attribute information contains information on the degree of importance, and the delivery destination information stored in the delivery destination information storage unit contains information on the degree of interest of the delivery destination in each attribute of an information unit, and the priority degree information creation unit creates information on a priority degree based on the information on the degree of importance that is contained in the unit attribute information of the unit information received by the receiving unit and on the information on the degree of interest of the delivery destination in each attribute that is contained in the delivery destination information stored in the delivery destination information storage unit.

According to the above-mentioned aspect of this invention, the priority degree information creation unit creates priority degree information based on the information on the degree of importance that is contained in the unit attribute information of the unit information received by the receiving unit and on the information on the degree of interest of the delivery destination in each attribute that is contained in the delivery destination information stored in the delivery destination information storage unit. As a result, it is possible to create priority degree information in accordance with the degree of importance of the unit information and the degree of interest of the delivery destination.

In the information delivery system described above, the buffer device further comprises: a detecting unit which detects attributes and changes in the attributes from continuous information received by the receiving unit; and a unit attribute information creation unit that, based on the results of a detection by the detecting unit, defines the unit information contained in the continuous information received by the receiving unit and creates unit attribute information for these unit information.

According to the above-mentioned aspect of this invention, the detecting unit detects attributes and changes in the attributes from continuous information received by the receiving unit; and, based on the results of a detection by the detecting unit, the unit attribute information creation unit defines the unit information contained in the continuous information received by the receiving unit and creates unit attribute information for these unit information. As a result, it is possible to create unit attribute information in the buffer device.

In the information delivery system described above, the detecting unit detects changes in attributes by detecting change points in topics or scenes from the continuous information.

According to the above-mentioned aspect of this invention, the detecting unit detects changes in attributes by detecting change points in topics or scenes from the continuous information. As a result, it becomes possible to detect changes in the attributes even more reliably and easily.

In the information delivery system described above, the detecting unit detects attributes by detecting predetermined patterns linked to the attributes from the continuous information.

According to the above-mentioned aspect of this invention, the detecting unit detects attributes by detecting predetermined patterns linked to the attributes from the continuous information. As a result, it becomes possible to detect the attributes of continuous information even more reliably and easily.

In the information delivery system described above, the buffer device further comprises: an input unit for inputting an instruction from a user to modify the unit attribute information; and an unit attribute information modifying unit which modifies the unit attribute information based on the instruction from the user input by the input unit.

According to the above-mentioned aspect of this invention, a user inputs an instruction to modify the unit attribute information using the input unit; and the unit attribute information modifying unit modifies the unit attribute information based on the instruction from the user input by the input unit. As a result, it becomes possible to modify the unit attribute information.

The method of delivering information that is temporally continuous and includes a plurality of unit information, according to still another aspect of the present invention comprises following steps. That is, a receiving step of receiving unit information; a delivery destination information storage step of storing delivery destination information that relates to a destination of a delivery of each delivery destination; an additional information storage step of storing additional information that is to be added to the unit information; a transmission information creation step that, based on the delivery destination information stored in the delivery destination information storage step as well as unit attribute information that relates to time spans and attributes of unit information received in the receiving step, creates transmission information that instructs that the additional information stored in the additional information storage step is to be added to the unit information received in the receiving step and then transmitted; and a transmitting step that, based on the transmission information created in the transmission information creation step, adds additional information stored in the additional information storage step to the unit information received in the receiving step and transmits the unit information to which the additional information has been added.

According to the above-mentioned aspect of this invention, unit information is received in the receiving step; delivery destination information that relates to a destination of a delivery is stored in the delivery destination information storage step of each delivery destination; additional information that is to be added to the unit information is stored in the additional information storage step; transmission information that instructs that the additional information stored in the additional information storage step is to be added to the unit information received in the receiving step and then transmitted is created in the transmission information creation step based on the delivery destination information stored in the delivery destination information storage step as well as unit attribute information that relates to time spans and attributes of unit information received in the receiving step; and, based on the transmission information created in the transmission information creation step, additional information stored in the additional information storage step is added in the transmitting step to the unit information received in the receiving step and unit information to which the additional information has been added are transmitted. As a result, it is possible to perform processing of source data in the buffer device.

The method of delivering information that is temporally continuous and includes a plurality of unit information, according to still another aspect of the present invention comprises following steps. That is, a receiving step of receiving unit information; a delivery destination information storage step of storing delivery destination information that relates to a destination of a delivery of each delivery destination; an additional information storage step of storing additional information that is to be added to the unit information; a transmission information creation step that, based on the delivery destination information stored in the delivery destination information storage step as well as unit attribute information that relates to time spans and attributes of unit information received in the receiving step, creates transmission information that instructs that the additional information stored in the additional information storage step is to be added to the unit information received in the receiving step and then transmitted; and a transmitting step of transmitting the transmission information created in the transmission information creation step to the delivery destination and, in accordance with a transmission request from the delivery destination that is based on the transmission information, adds additional information stored in the additional information storage step to the unit information received in the receiving step and transmits the unit information to which the additional information has been added.

According to the above-mentioned aspect of this invention, unit information is received in the receiving step; delivery destination information that relates to a destination of a delivery is stored in the delivery destination information storage step of each delivery destination; additional information that is to be added to the unit information is stored in the additional information storage step; based on the delivery destination information stored in the delivery destination information storage step as well as unit attribute information that relates to time spans and attributes of unit information received in the receiving step, transmission information that instructs that the additional information stored in the additional information storage step is to be added to the unit information received in the receiving step and then transmitted is created in the transmission information creation step; and transmission information created in the transmission information creation step is transmitted in the transmitting step to the delivery destination and, in accordance with a transmission request from the delivery destination that is based on the transmission information, additional information stored in the additional information storage step is added to the unit information received in the receiving step and unit information to which the additional information has been added are transmitted. As a result, it is possible to perform processing of source data in the buffer device.

The method of delivering information that is temporally continuous and includes a plurality of unit information, according to still another aspect of the present invention comprises following steps. That is, a receiving step of receiving unit information; a delivery destination information storage step of storing delivery destination information that relates to a destination of a delivery of each delivery destination; an additional information storage step of storing additional information that is to be added to the unit information; a transmission information creation step that, based on the delivery destination information stored in the delivery destination information storage step as well as unit attribute information that relates to time spans and attributes of unit information received in the receiving step, creates transmission information that instructs that the additional information stored in the additional information storage step is to be added to the unit information received in the receiving step and then transmitted; an information unit transmitting step that, based on the transmission information created in the transmission information creation step, adds additional information stored in the additional information storage step to the unit information received in the receiving step and transmits the unit information to which the additional information has been added; a new-unit attribute information creation step of creating new unit attribute information that corresponds to the unit information transmitted in the transmitting step; and a new-unit attribute information transmitting step of transmitting the new unit attribute information created in the new-unit attribute information creation step.

According to the above-mentioned aspect of this invention, unit information is received in the receiving step; delivery destination information that relates to a destination of a delivery is stored in the delivery destination information storage step of each delivery destination; additional information that is to be added to the unit information is stored in the additional information storage step; based on the delivery destination information stored in the delivery destination information storage step as well as unit attribute information that relates to time spans and attributes of unit information received in the receiving step, transmission information that instructs that the additional information stored in the additional information storage step is to be added to the unit information received in the receiving step and then transmitted is created in the transmission information creation step; based on the transmission information created in the transmission information creation step, additional information stored in the additional information storage step is added to the unit information received in the receiving step and unit information to which the additional information has been added are transmitted in the information unit transmitting step; new unit attribute information that corresponds to the unit information transmitted in the transmitting step is created in the new-unit attribute information creation step; and new unit attribute information created in the new-unit attribute information creation step is transmitted in the new-unit attribute information transmitting step. As a result, it is possible to perform processing of source data in the buffer device.

The method of delivering information that is temporally continuous and includes a plurality of unit information, according to still another aspect of the present invention comprises following steps. That is, a receiving step of receiving unit information; a delivery destination information storage step of storing delivery destination information that relates to a destination of a delivery of each delivery destination; a link information storage step of storing link information used for forming a link to the additional information that is to be added to the unit information; a transmission information creation step that, based on the delivery destination information stored in the delivery destination information storage step as well as unit attribute information that relates to time spans and attributes of unit information received in the receiving step, creates transmission information that instructs that the link information stored in the link information storage step is to be added to the unit information received in the receiving step and then transmitted; and a transmitting step that, based on the transmission information created in the transmission information creation step, adds the link information stored in the link information storage step to the unit information received in the receiving step and transmits the unit information to which the link information has been added.

According to the above-mentioned aspect of this invention, unit information is received in the receiving step; delivery destination information that relates to a destination of a delivery is stored in the delivery destination information storage step of each delivery destination; link information for forming a link to the additional information is to be added to the unit information is stored in the link information storage step; based on the delivery destination information stored in the delivery destination information storage step as well as unit attribute information that relates to time spans and attributes of unit information received in the receiving step, transmission information that instructs that the link information stored in the link information storage step is to be added to the unit information received in the receiving step and then transmitted is created in the transmission information creation step; and, based on the transmission information created in the transmission information creation step, link information stored in the link information storage step is added in the transmitting step to the unit information received in the receiving step and unit information to which the additional information has been added are transmitted. As a result, it is possible to perform processing of source data in the buffer device.

The method of delivering information that is temporally continuous and includes a plurality of unit information, according to still another aspect of the present invention comprises following steps. That is, a receiving step of receiving unit information; a delivery destination information storage step of storing delivery destination information that relates to a destination of a delivery of each delivery destination; a link information storage step of storing link information used for forming a link to the additional information that is to be added to unit information; a transmission information creation step that, based on the delivery destination information stored in the delivery destination information storage step as well as unit attribute information that relates to time spans and attributes of unit information received in the receiving step, creates transmission information that instructs that the link information stored in the link information storage step is to be added to the unit information received in the receiving step and then transmitted; and a transmitting step of transmitting the transmission information created in the transmission information creation step to a delivery destination and, in accordance with a transmission request from the delivery destination that is based on the transmission information, adds the link information stored in the link information storage step to the unit information received in the receiving step and transmits the unit information to which the link information has been added.

According to the above-mentioned aspect of this invention, unit information is received in the receiving step; delivery destination information that relates to a destination of a delivery is stored in the delivery destination information storage step of each delivery destination; link information for forming a link to the additional information is to be added to the unit information is stored in the link information storage step; based on the delivery destination information stored in the delivery destination information storage step as well as unit attribute information that relates to time spans and attributes of unit information received in the receiving step, transmission information that instructs that the link information stored in the link information storage step is to be added to the unit information received in the receiving step and then transmitted is created in the transmission information creation step; and transmission information created in the transmission information creation step is transmitted in the transmitting step to the delivery destination and, in accordance with a transmission request from the delivery destination that is based on the transmission information, link information stored in the link information storage step is added to the unit information received in the receiving step and unit information to which the link information has been added are transmitted. As a result, it is possible to perform processing of source data in the buffer device.

The method of delivering information that is temporally continuous and includes a plurality of unit information, according to still another aspect of the present invention comprises following steps. That is, a receiving step of receiving unit information; a delivery destination information storage step of storing delivery destination information that relates to a destination of a delivery of each delivery destination; a link information storage step of storing link information to additional information that is to be added to the unit information; a transmission information creation step that, based on the delivery destination information stored in the delivery destination information storage step as well as unit attribute information that relates to time spans and attributes of unit information received in the receiving step, creates transmission information that instructs that the link information stored in the link information storage step is to be added to the unit information received in the receiving step and then transmitted; an information unit transmitting step that, based on the transmission information created in the transmission information creation step, adds the link information stored in the link information storage step to the unit information received in the receiving step and transmits the unit information to which the link information has been added; a new-unit attribute information creation step of creating new unit attribute information that corresponds to the unit information transmitted in the transmitting step; and a new-unit attribute information transmitting step of transmitting the new unit attribute information created in the new-unit attribute information creation step.

According to the above-mentioned aspect of this invention, unit information is received in the receiving step; delivery destination information that relates to a destination of a delivery is stored in the delivery destination information storage step of each delivery destination; link information to the additional information is to be added to the unit information is stored in the link information storage step; based on the delivery destination information stored in the delivery destination information storage step as well as unit attribute information that relates to time spans and attributes of unit information received in the receiving step, transmission information that instructs that the link information stored in the link information storage step is to be added to the unit information received in the receiving step and then transmitted is created in the transmission information creation step; based on the transmission information created in the transmission information creation step, link information stored in the link information storage step is added to the unit information received in the receiving step and unit information to which the link information has been added are transmitted in the information unit transmitting step; new unit attribute information that corresponds to the unit information transmitted in the transmitting step is created in the new-unit attribute information creation step; and new unit attribute information created in the new-unit attribute information creation step is transmitted in the new-unit attribute information transmitting step. As a result, it is possible to perform processing of source data in the buffer device.

The method of delivering information that is temporally continuous and includes a plurality of unit information, according to still another aspect of the present invention comprises following steps. That is, a receiving step of receiving unit information; a delivery destination information storage step of storing delivery destination information that relates to a destination of a delivery of each delivery destination; a priority degree information creation step that, based on the delivery destination information stored in the delivery destination information storage step as well as unit attribute information that relates to time spans and attributes of unit information received in the receiving step, creates information about a degree of priority of the information unit received in the receiving step; a transmission information creation step that, based on priority degree information created in the priority degree creation step, creates transmission information that instructs that only the unit information whose degree of priority meets predetermined conditions is to be transmitted; and a transmitting step that, based on the transmission information created in the transmission information creation step, transmits only the unit information whose degree of priority meets the predetermined conditions.

According to the above-mentioned aspect of this invention, unit information is received in the receiving step; delivery destination information that relates to a destination of a delivery is stored in the delivery destination information storage step of each delivery destination; based on the delivery destination information stored in the delivery destination information storage step as well as unit attribute information that relates to time spans and attributes of unit information received in the receiving step, information about a degree of priority of the information unit received in the receiving step is created in the priority degree information creation step; based on priority degree information created in the priority degree creation step, transmission information that instructs that only the unit information whose degree of priority meets predetermined conditions is to be transmitted is created in the transmission information creation step; and, based on the transmission information created in the transmission information creation step, only unit information, whose degree of priority meets the predetermined conditions are transmitted in the transmitting step. As a result, it is possible to perform processing of source data in the buffer device.

The method of delivering information that is temporally continuous and includes a plurality of unit information, according to still another aspect of the present invention comprises following steps. That is, a receiving step of receiving unit information; a delivery destination information storage step of storing delivery destination information that relates to a destination of a delivery of each delivery destination; a priority degree information creation step that, based on the delivery destination information stored in the delivery destination information storage step as well as unit attribute information that relates to time spans and attributes of unit information received in the receiving step, creates information about a degree of priority of the information unit received in the receiving step; a transmission information creation step that, based on priority degree information created in the priority degree creation step, creates transmission information showing a sequence for transmitting the unit information received in the receiving step; and a transmitting step that arranges and transmits unit information in a sequence that is based on the transmission information created in the transmission information creation step.

According to the above-mentioned aspect of this invention, unit information is received in the receiving step; delivery destination information that relates to a destination of a delivery is stored in the delivery destination information storage step of each delivery destination; based on the delivery destination information stored in the delivery destination information storage step as well as unit attribute information that relates to time spans and attributes of unit information received in the receiving step, information about a degree of priority of the information unit received in the receiving step is created in the priority degree information creation step; based on priority degree information created in the priority degree creation step, transmission information showing a sequence for transmitting the unit information received in the receiving step is created in the transmission information creation step; and unit information are arranged and transmitted in the transmitting step in a sequence that is based on the transmission information created in the transmission information creation step. As a result, it is possible to perform processing of source data in the buffer device.

The method of delivering information that is temporally continuous and includes a plurality of unit information, according to still another aspect of the present invention comprises following steps. That is, a receiving step of receiving unit information; a delivery destination information storage step of storing delivery destination information that relates to a destination of a delivery of each delivery destination; a priority degree information creation step that, based on the delivery destination information stored in the delivery destination information storage step as well as unit attribute information that relates to time spans and attributes of unit information received in the receiving step, creates information about a degree of priority of the information unit received in the receiving step; a transmission information creation step that, based on priority degree information created in the priority degree creation step, creates transmission information that instructs that only the unit information whose degree of priority meets predetermined conditions is to be transmitted; and a transmitting step of transmitting the transmission information created in the transmission information creation step to a delivery destination and, in accordance with a transmission request from the delivery destination that is based on the transmission information, transmits only the unit information whose degree of priority meets the predetermined conditions.

According to the above-mentioned aspect of this invention, unit information is received in the receiving step; delivery destination information that relates to a destination of a delivery is stored in the delivery destination information storage step of each delivery destination; based on the delivery destination information stored in the delivery destination information storage step as well as unit attribute information that relates to time spans and attributes of unit information received in the receiving step, information about a degree of priority of the information unit received in the receiving step is created in the priority degree information creation step; based on priority degree information created in the priority degree creation step, transmission information that instructs that only the unit information whose degree of priority meets predetermined conditions is to be transmitted is created in the transmission information creation step; and transmission information created in the transmission information creation step is transmitted in the transmitting step to a delivery destination and, in accordance with a transmission request from the delivery destination that is based on the transmission information, only unit information whose degree of priority meets the predetermined conditions are transmitted. As a result, it is possible to perform processing of source data in the buffer device.

The method of delivering information that is temporally continuous and includes a plurality of unit information, according to still another aspect of the present invention comprises following steps. That is, a receiving step of receiving unit information; a delivery destination information storage step of storing delivery destination information that relates to a destination of a delivery of each delivery destination; a priority degree information creation step that, based on the delivery destination information stored in the delivery destination information storage step as well as unit attribute information that relates to time spans and attributes of unit information received in the receiving step, creates information about a degree of priority of the information unit received in the receiving step; a transmission information creation step that, based on priority degree information created in the priority degree creation step, creates transmission information showing a sequence for transmitting the unit information received in the receiving step; and a transmitting step of transmitting the transmission information created in the transmission information creation step to the delivery destination and that arranges' and transmits the unit information in a sequence that is in accordance with a transmission request from the delivery destination that is based on the transmission information.

According to the above-mentioned aspect of this invention, unit information is received in the receiving step; delivery destination information that relates to a destination of a delivery is stored in the delivery destination information storage step of each delivery destination; based on the delivery destination information stored in the delivery destination information storage step as well as unit attribute information that relates to time spans and attributes of unit information received in the receiving step, information about a degree of priority of the information unit received in the receiving step is created in the priority degree information creation step; based on priority degree information created in the priority degree creation step, transmission information showing a sequence for transmitting the unit information received in the receiving step is created in the transmission information creation step; and transmission information created in the transmission information creation step is transmitted in the transmitting step to the delivery destination and unit information are arranged and transmitted in a sequence that is in accordance with a transmission request from the delivery destination that is based on the transmission information. As a result, it is possible to perform processing of source data in the buffer device.

According to the next aspect of the present invention is a program for executing on a computer the methods according to the above described aspects of the invention. As a result, it becomes possible to actualize the operation of the methods according to the above described aspects of the invention on a computer.

### BRIEF DESCRIPTION OF THE DRAWINGS

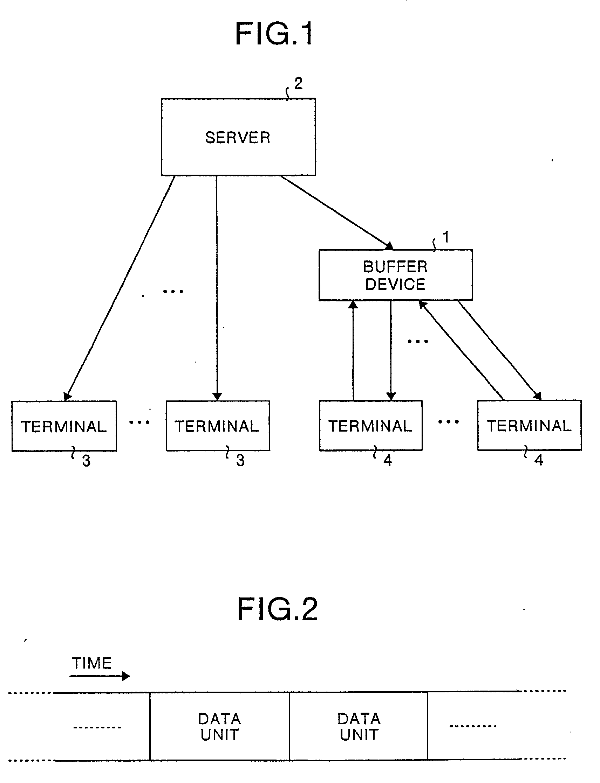

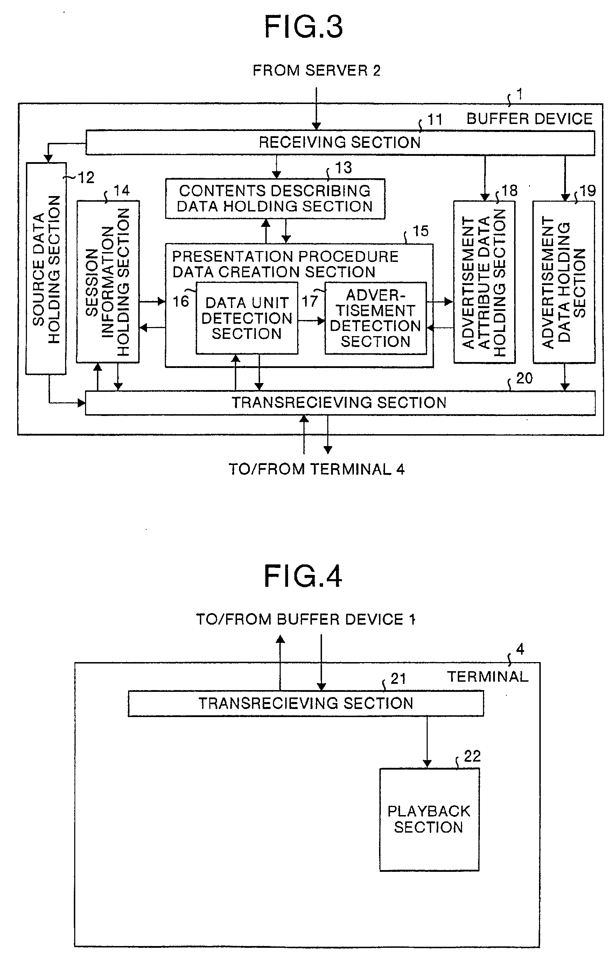

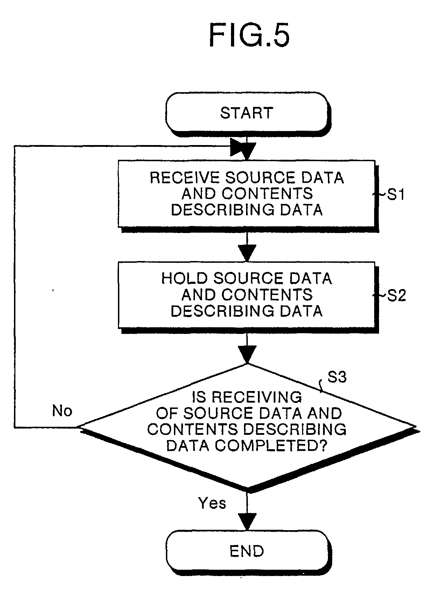

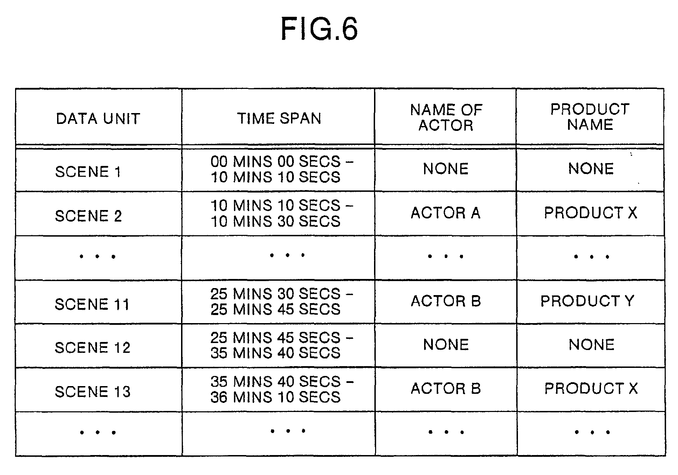

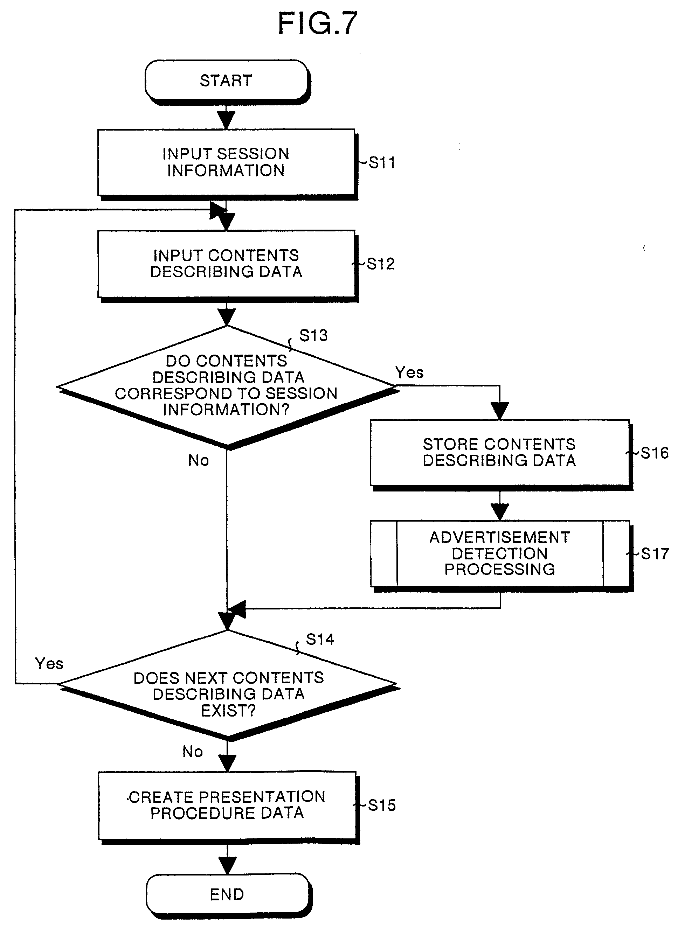

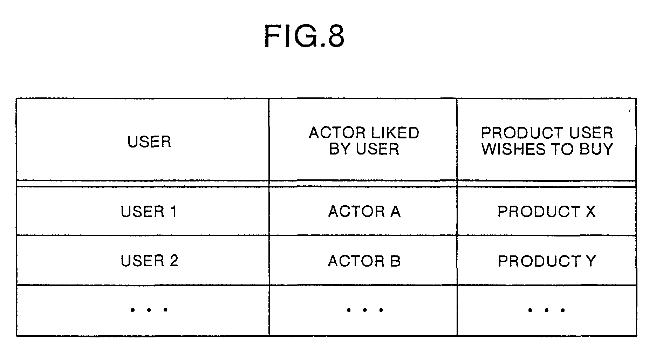

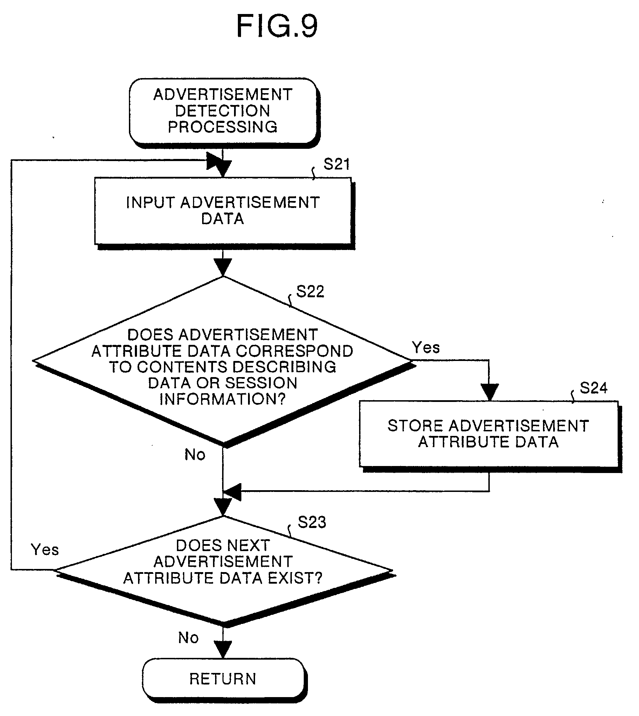

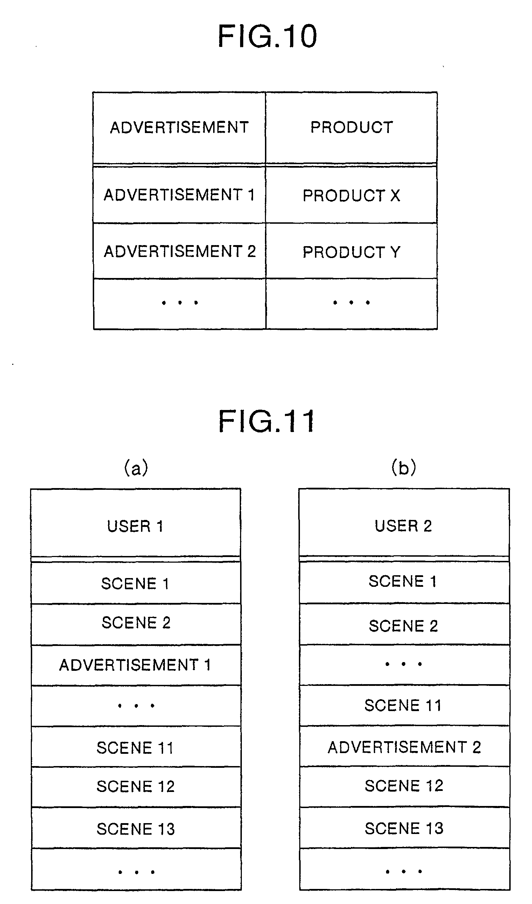

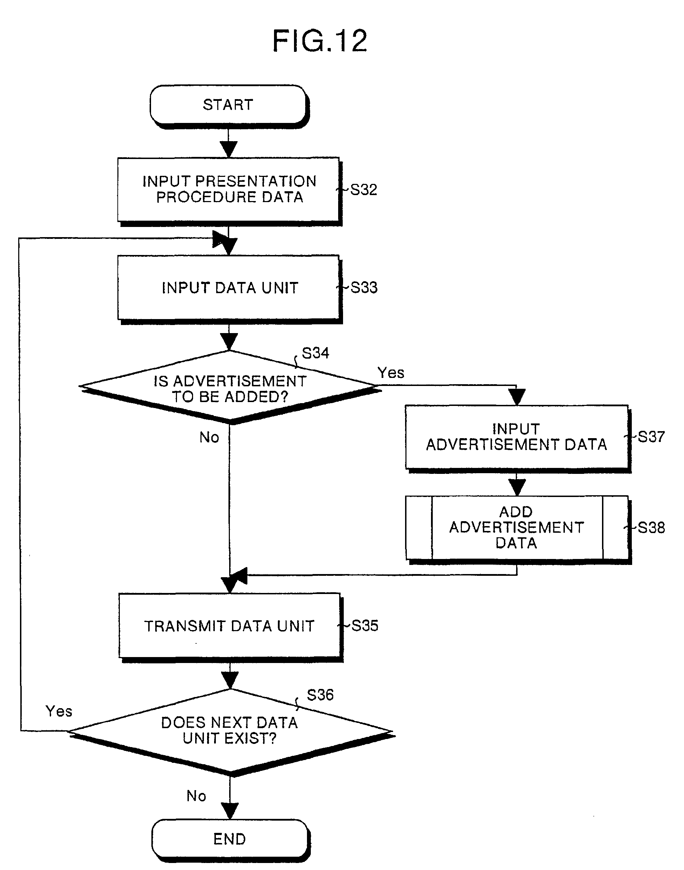

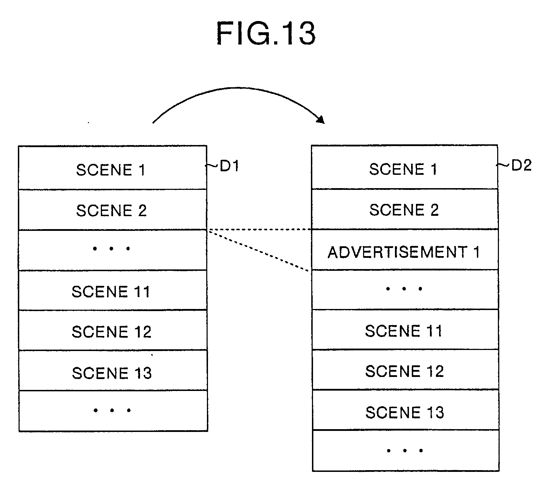

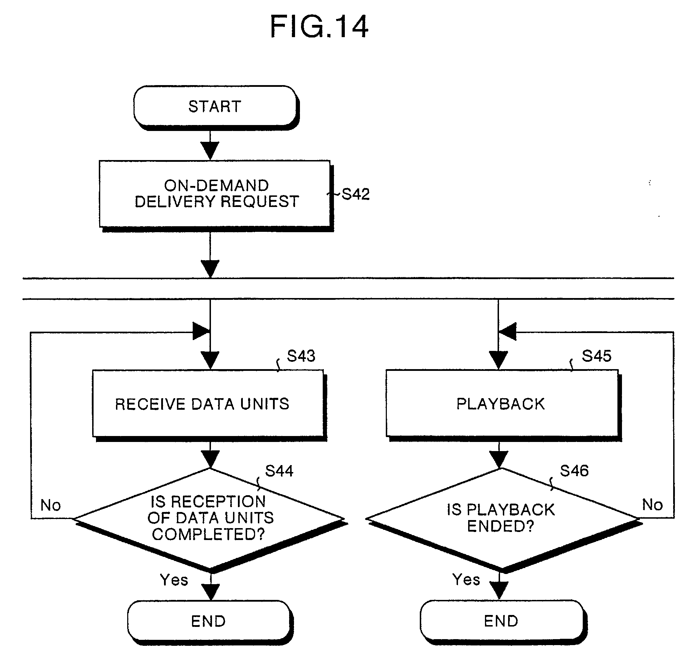

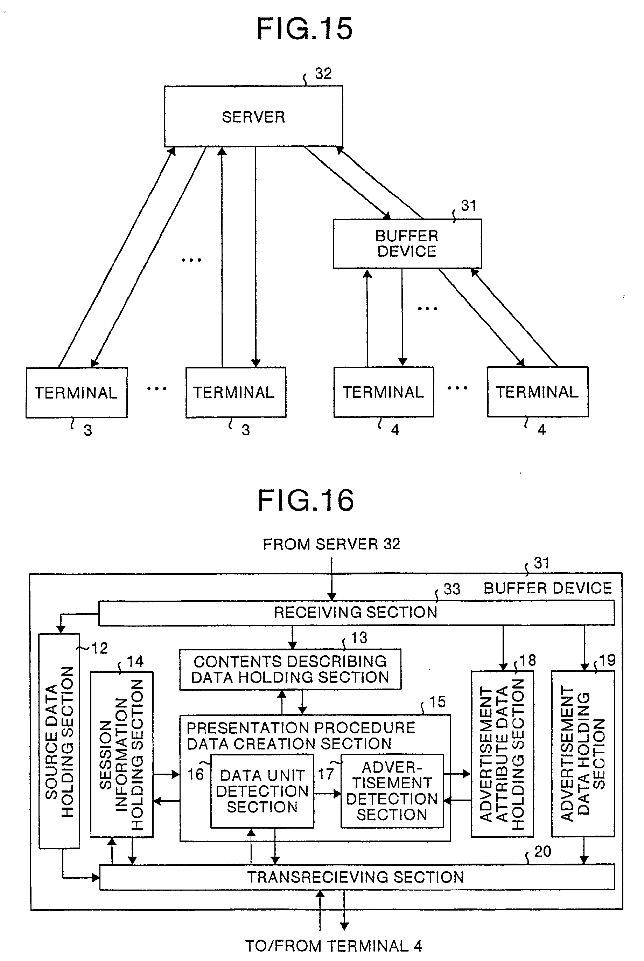

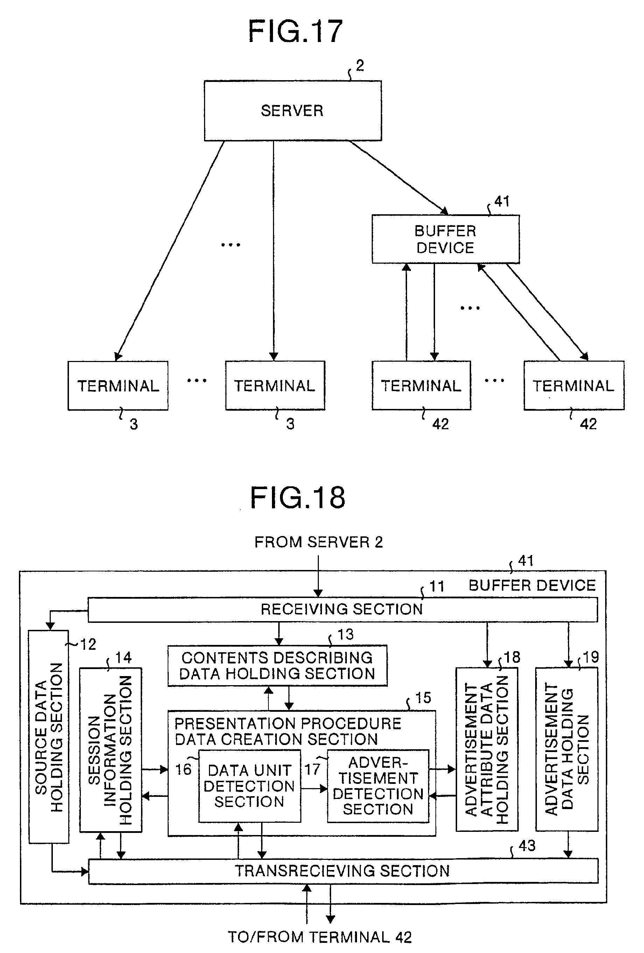

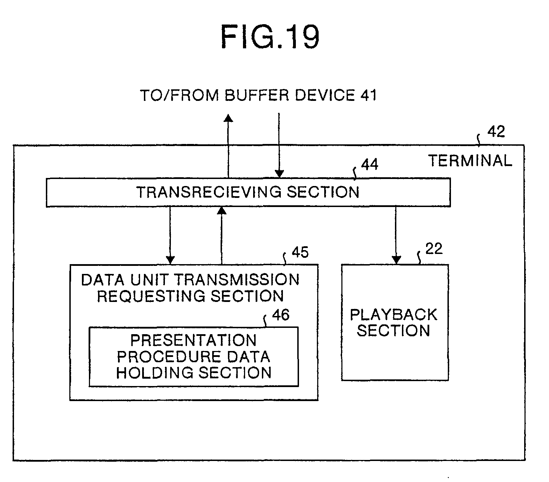

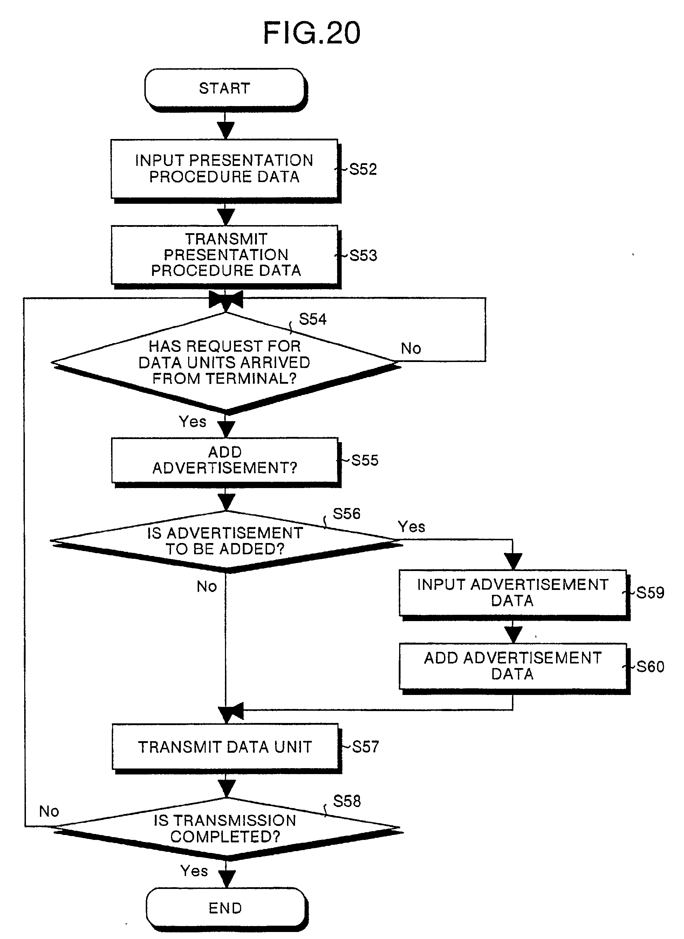

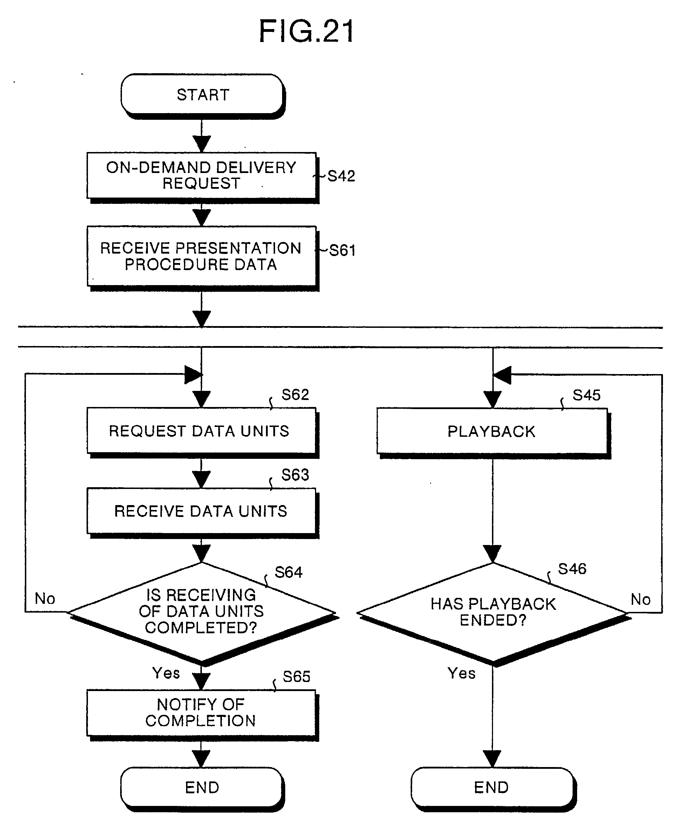

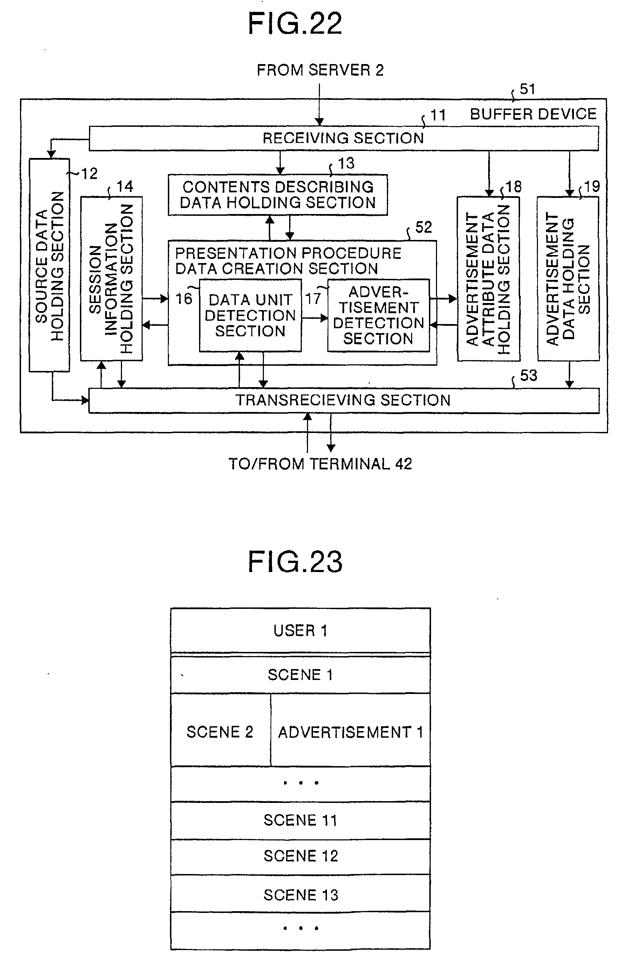

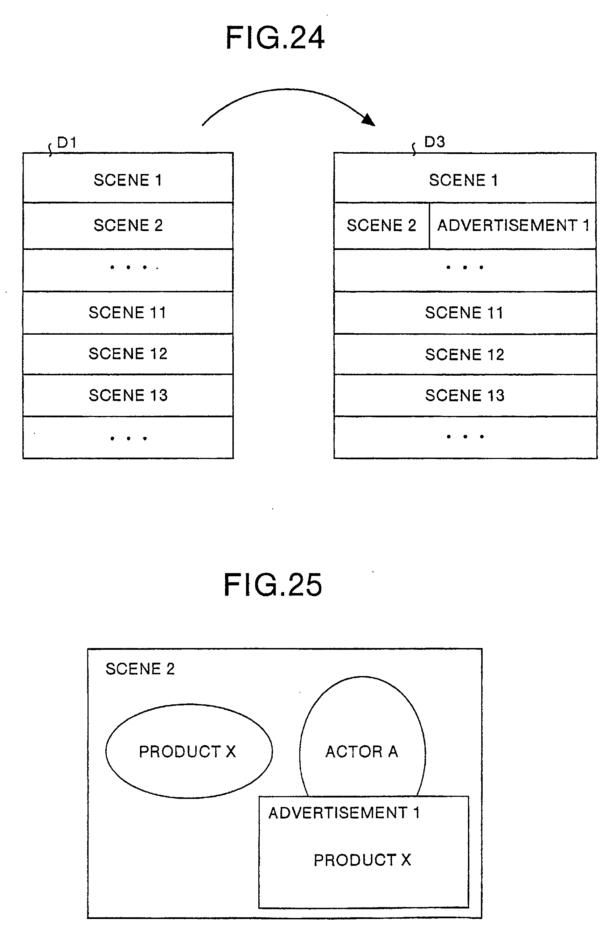

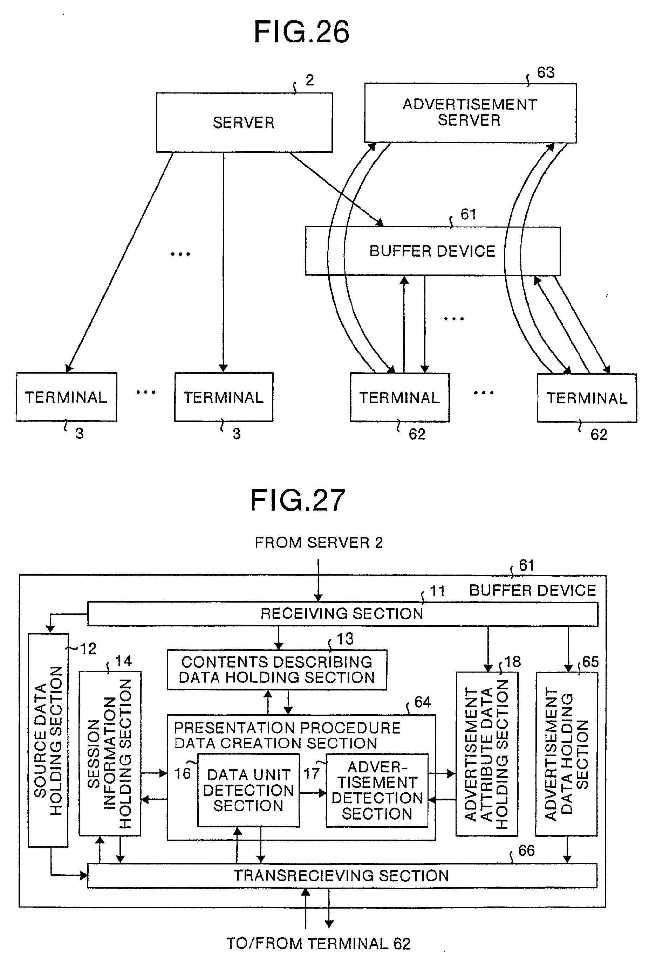

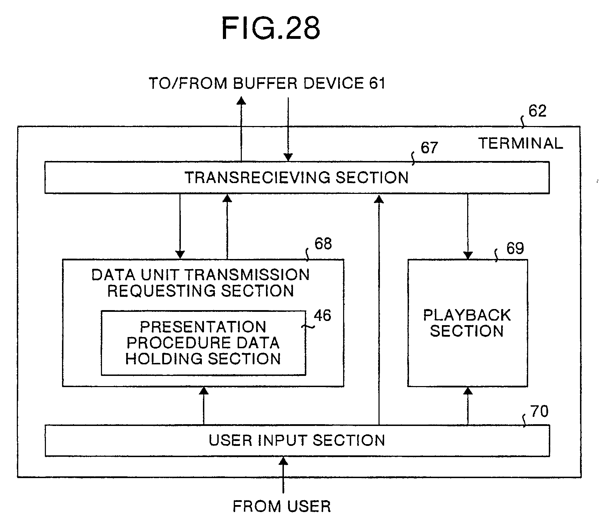

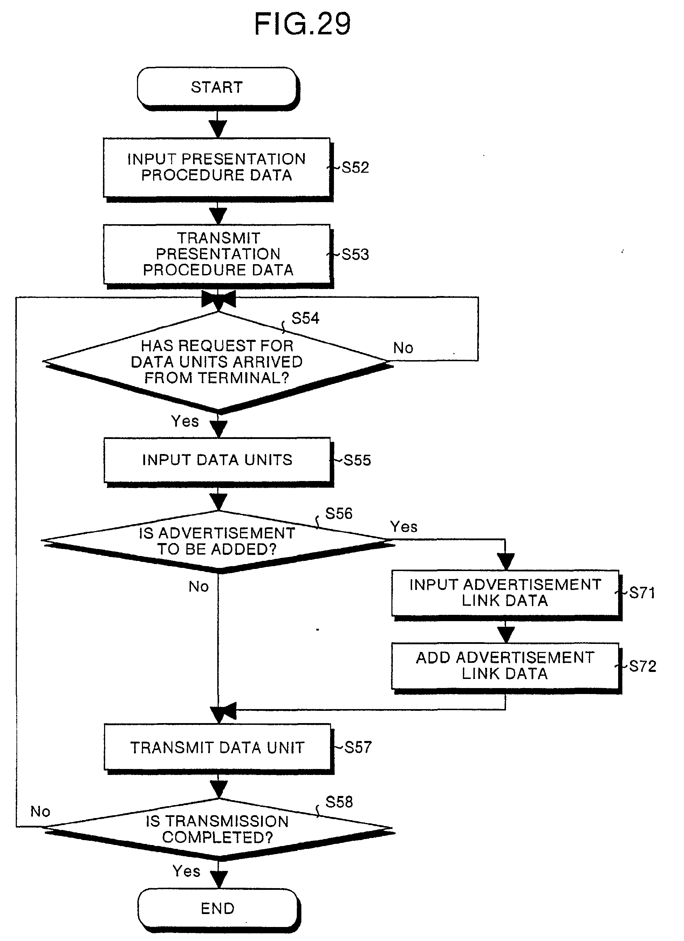

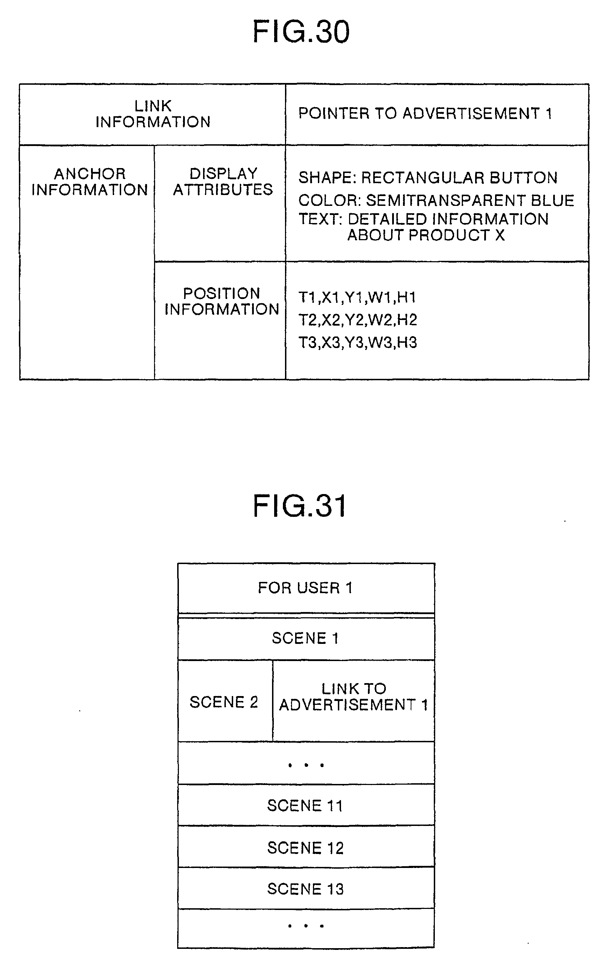

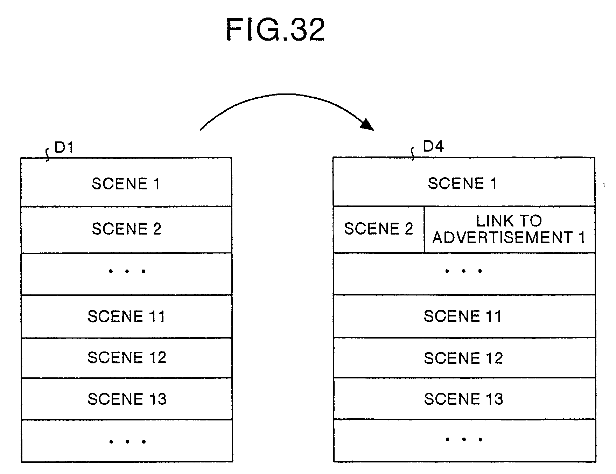

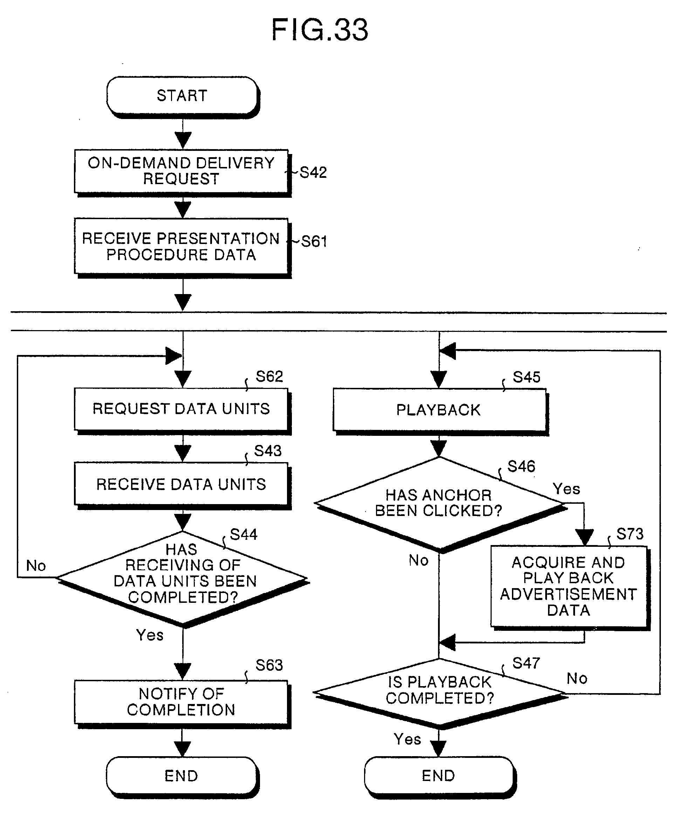

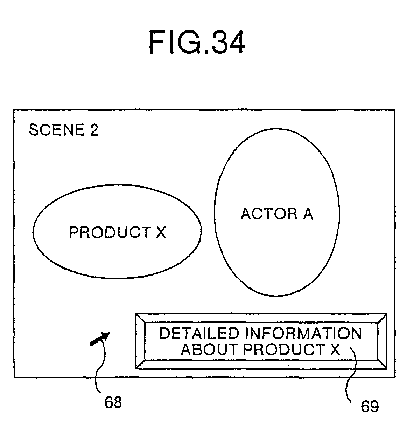

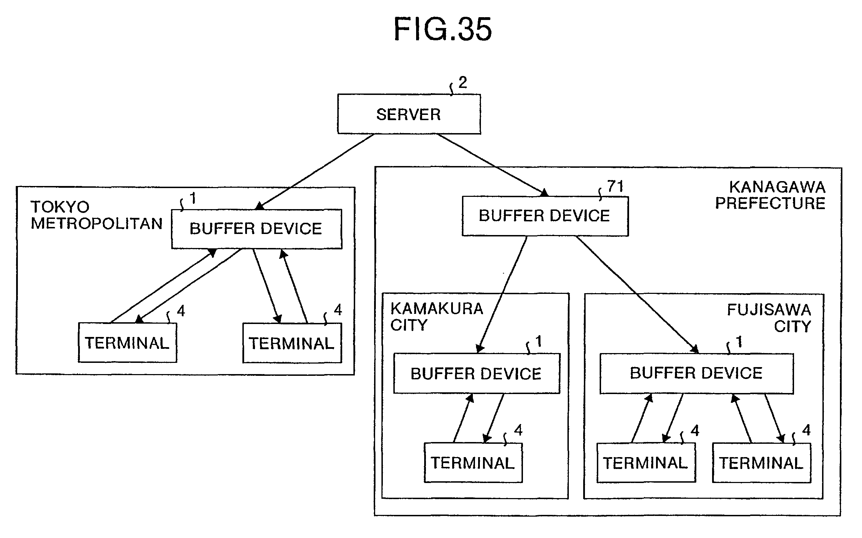

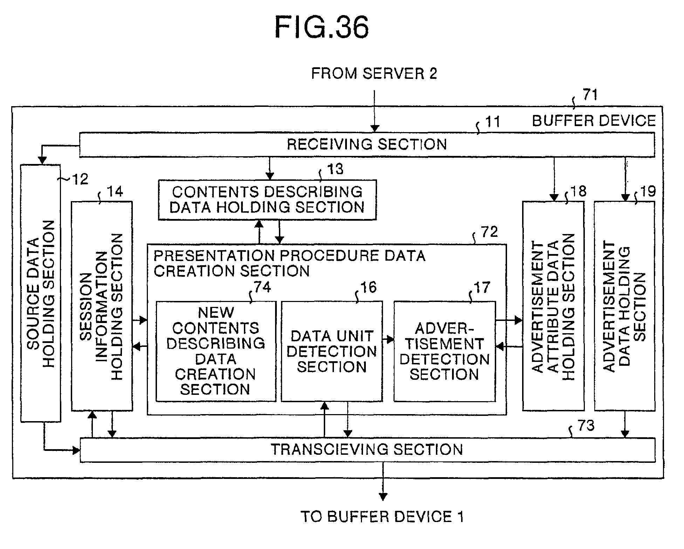

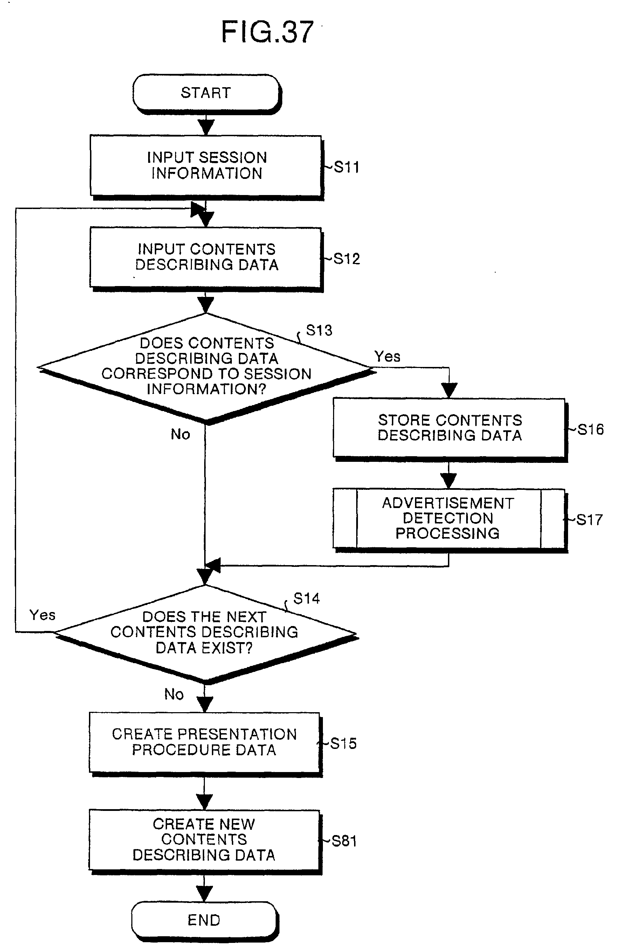

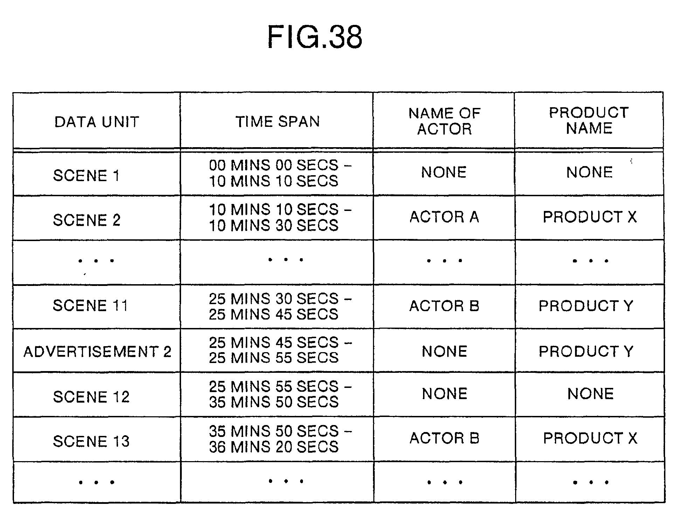

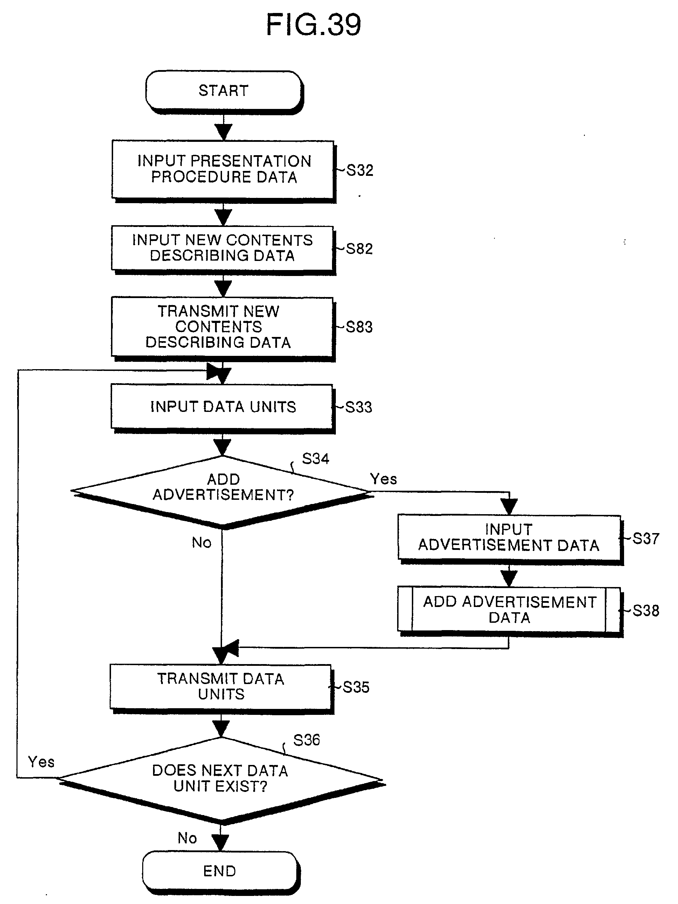

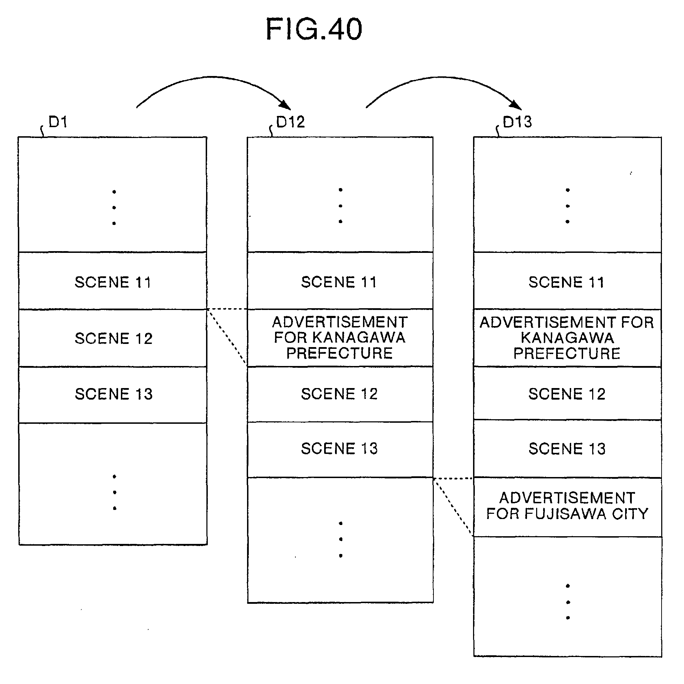

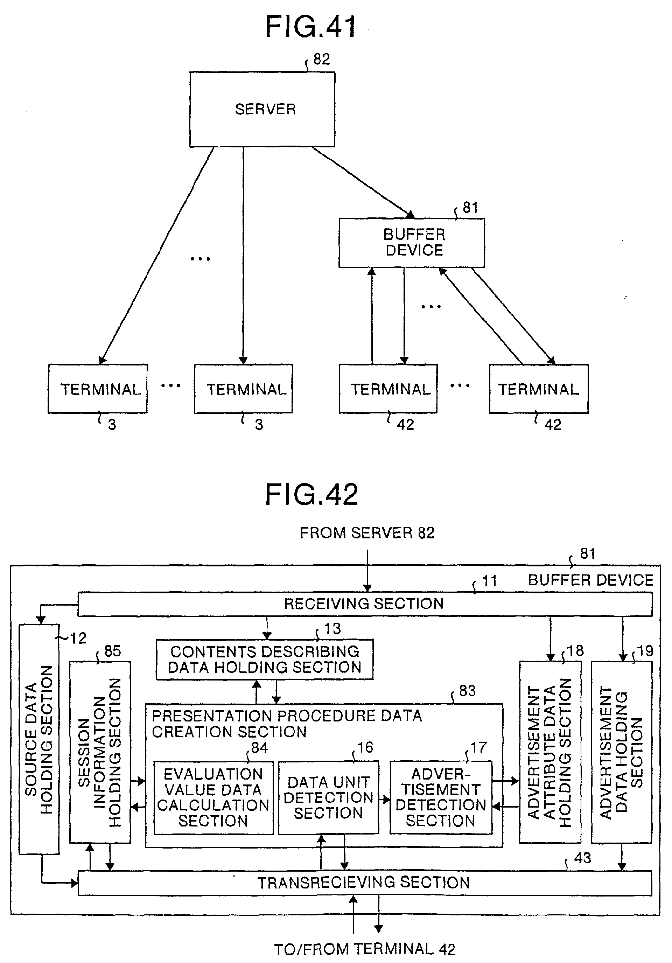

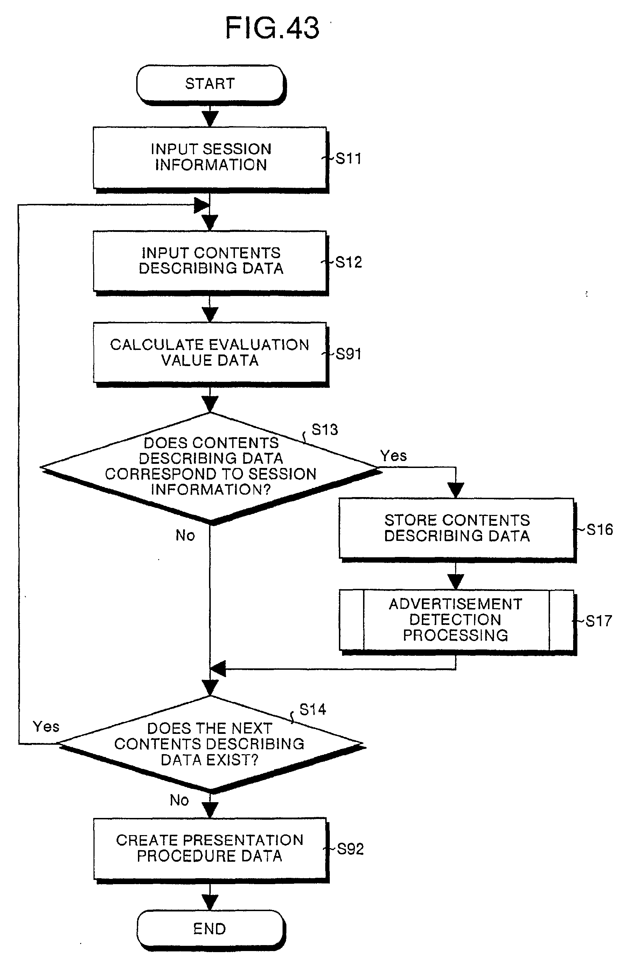

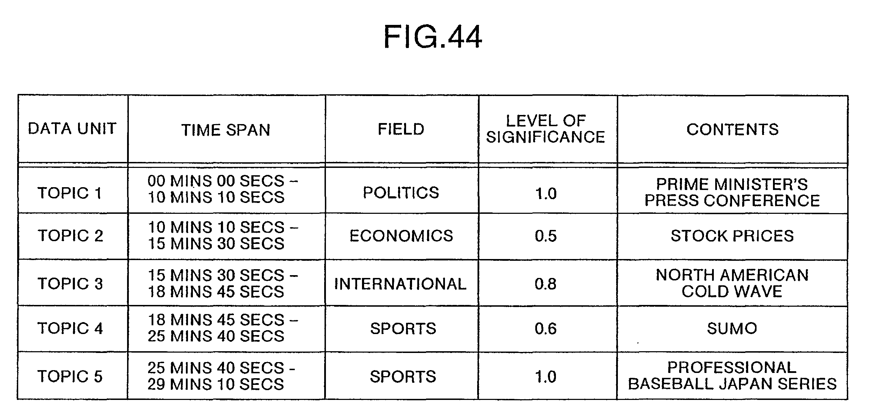

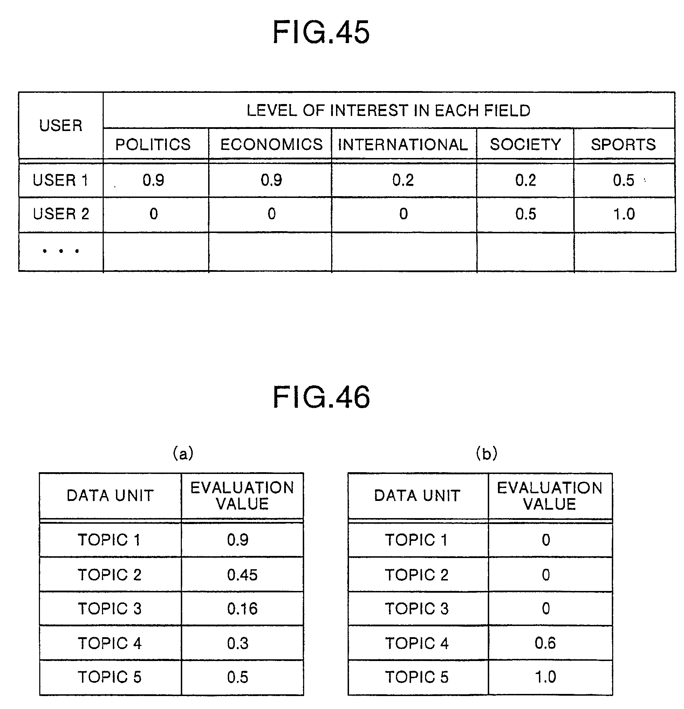

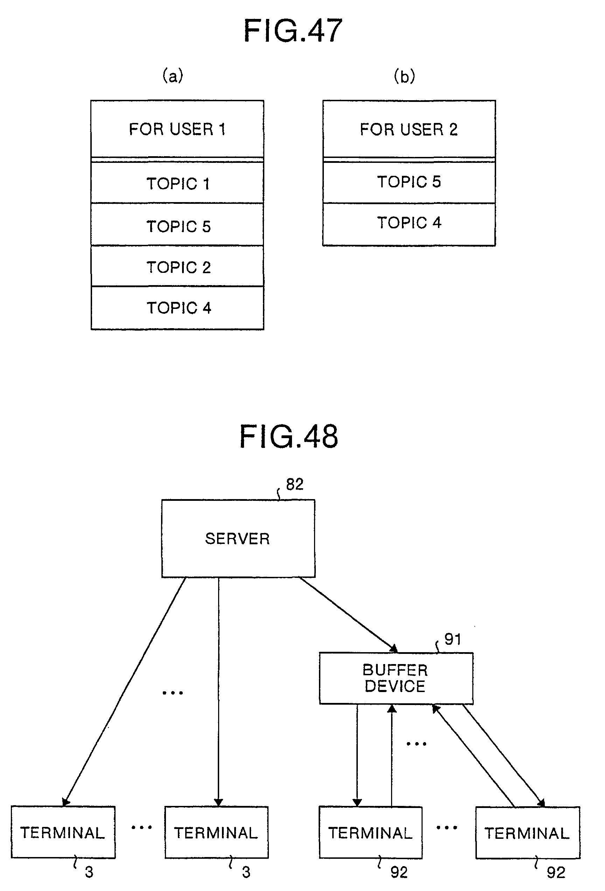

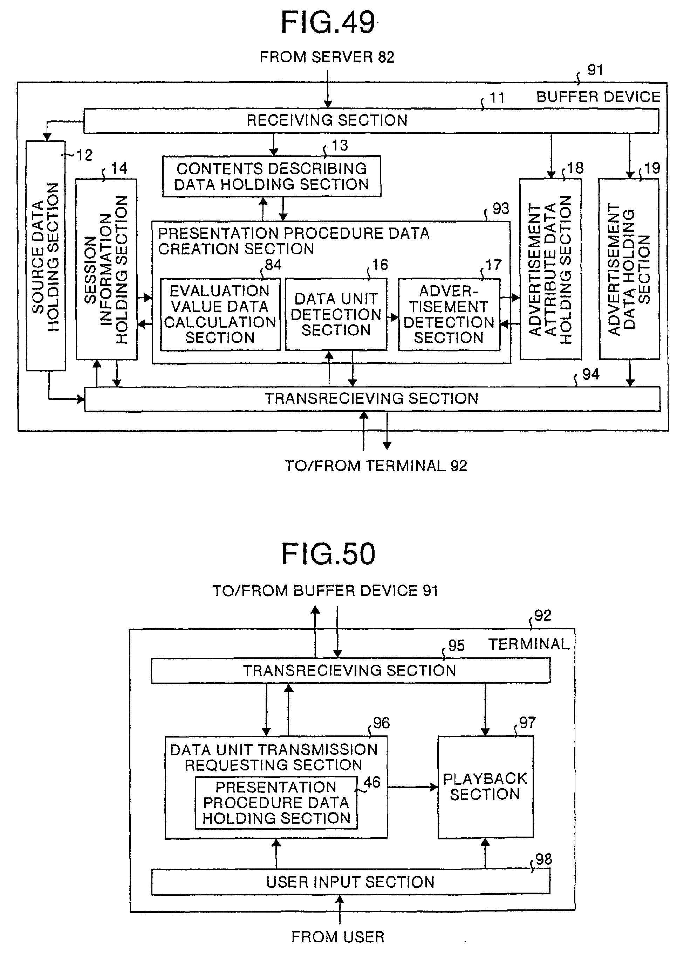

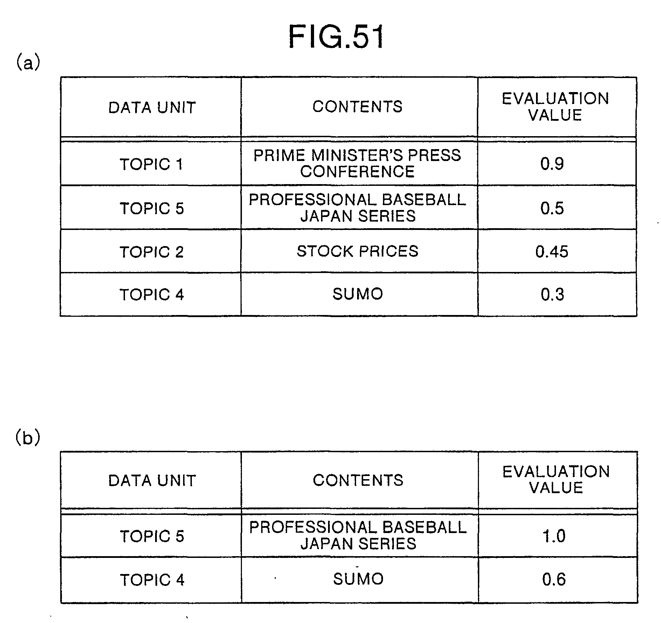

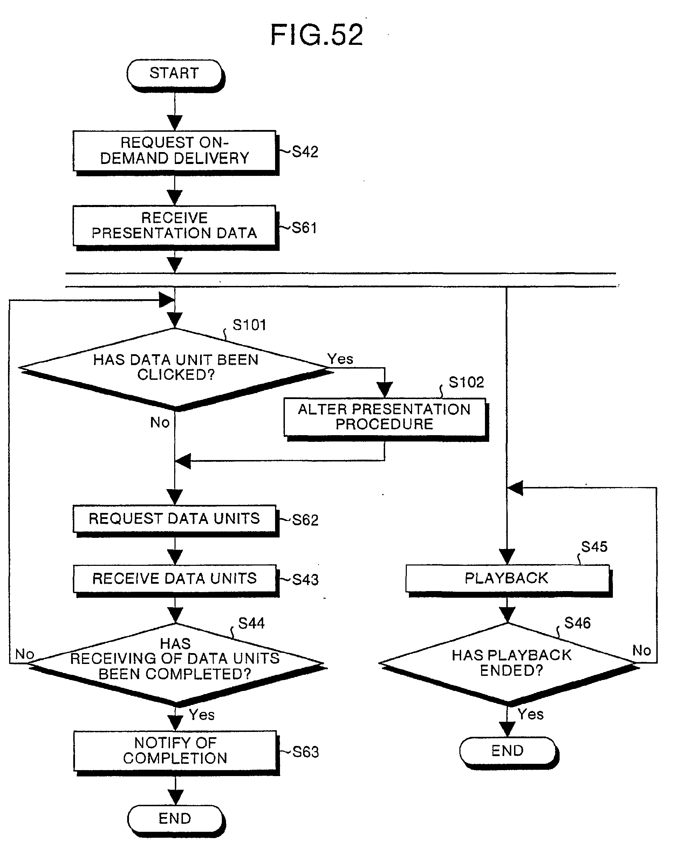

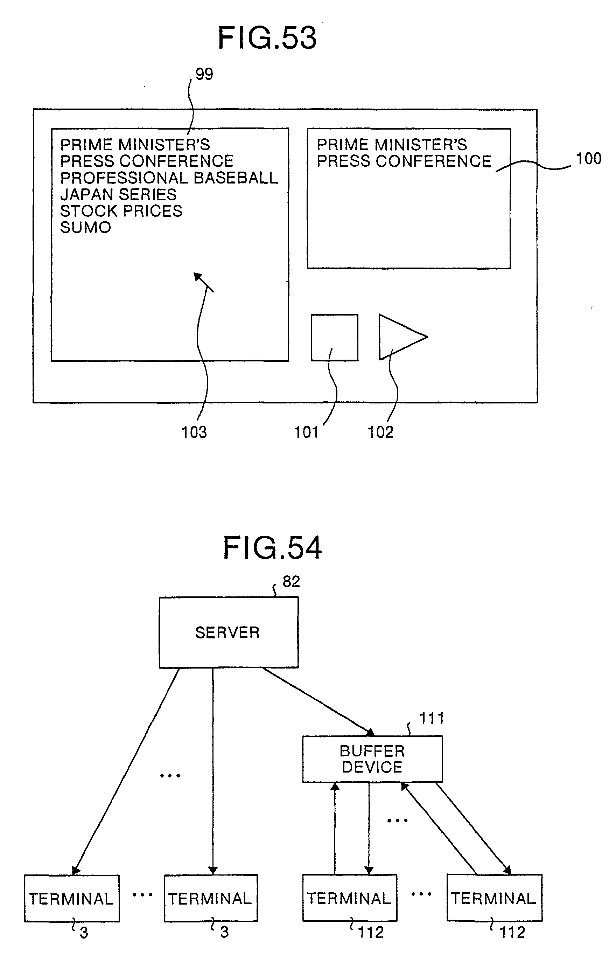

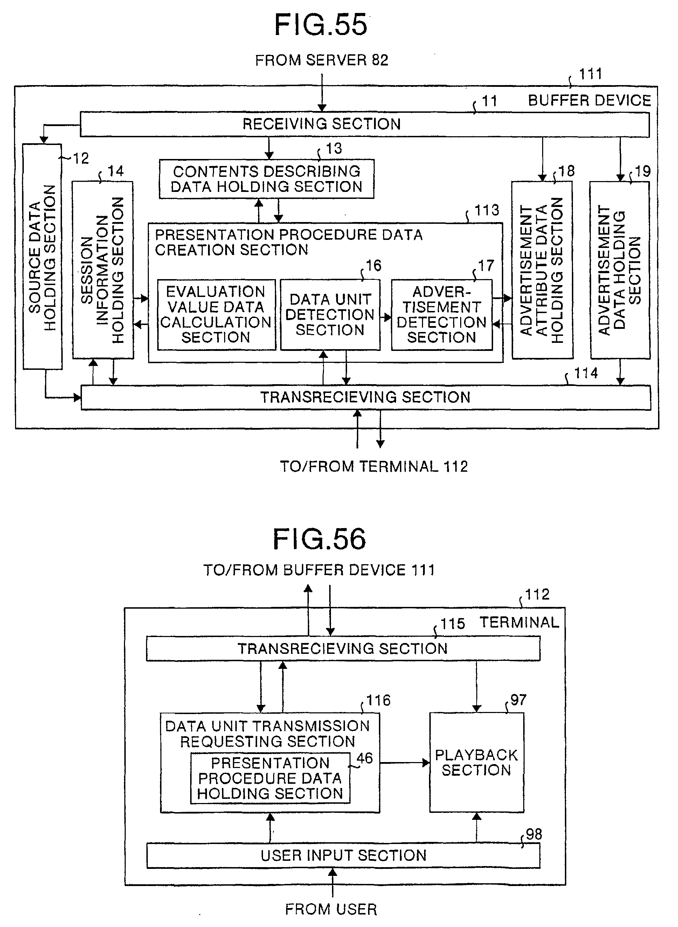

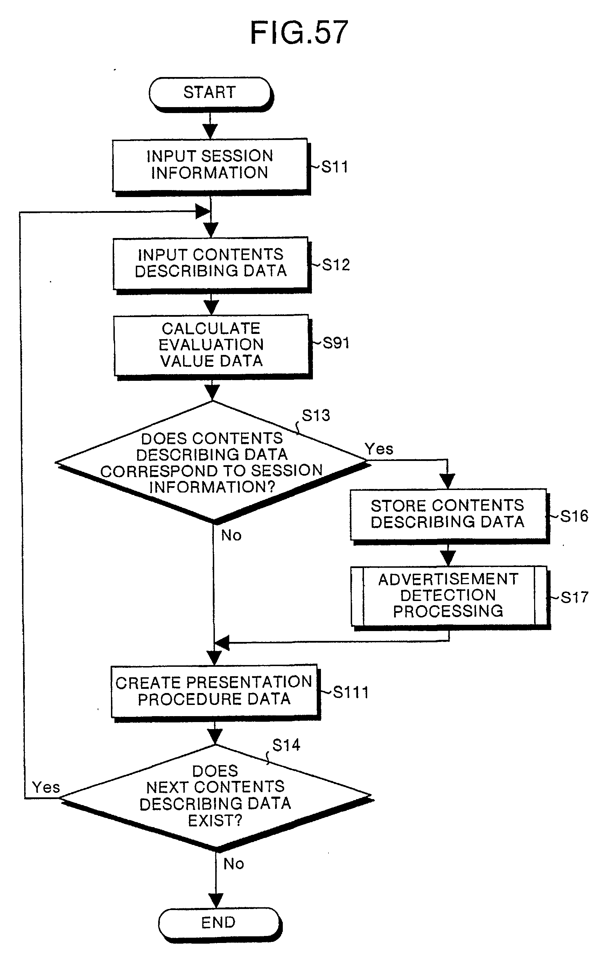

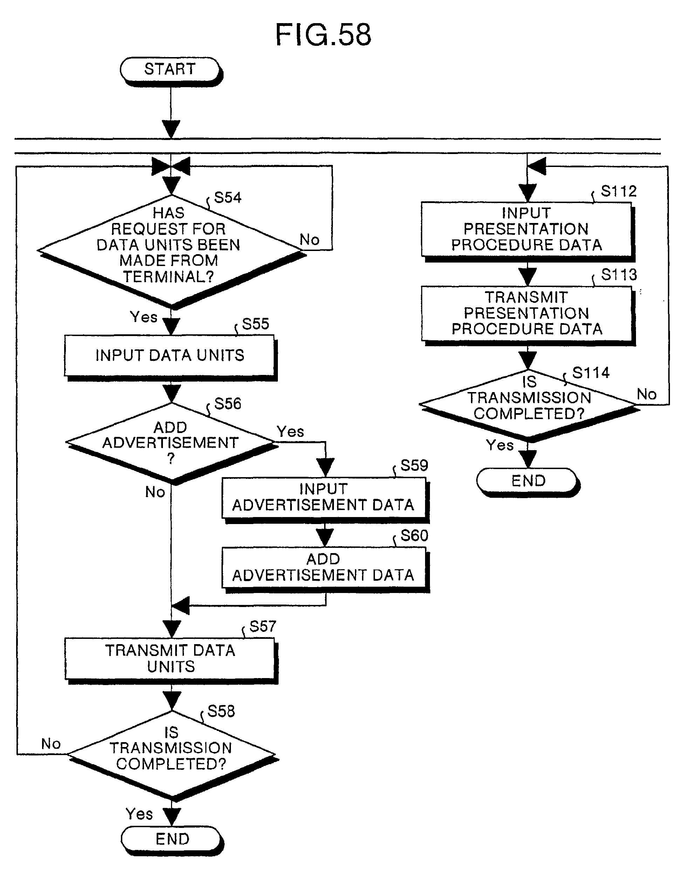

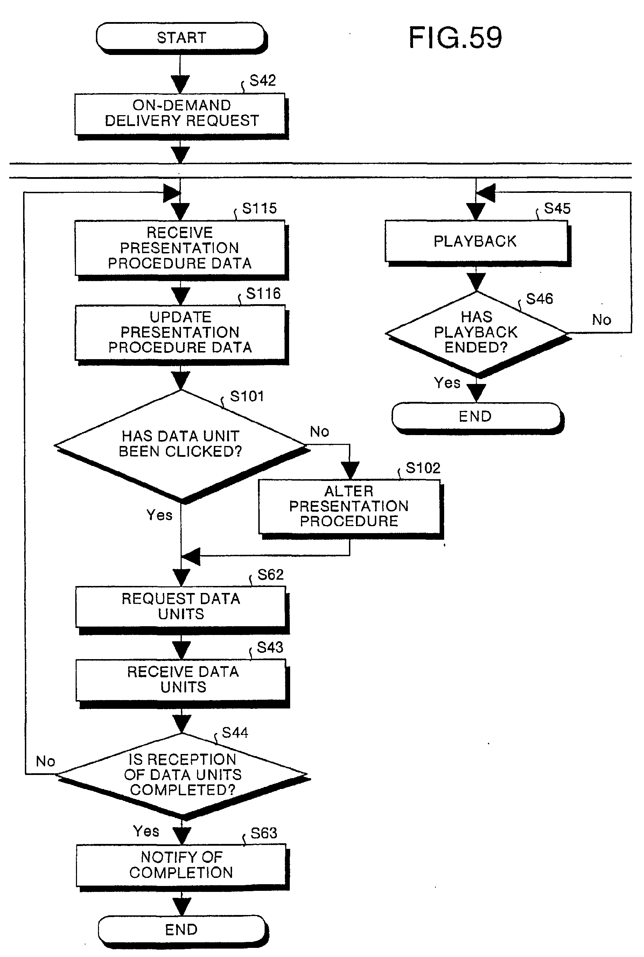

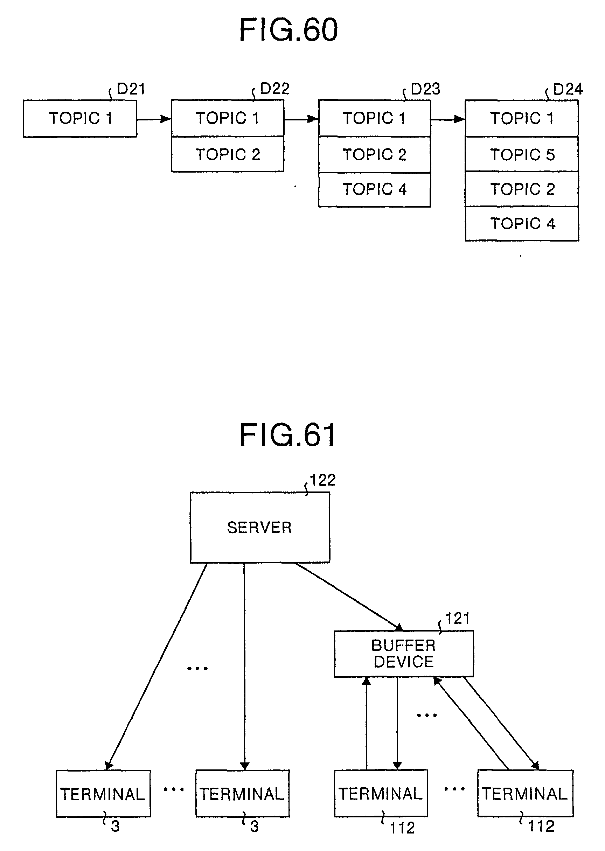

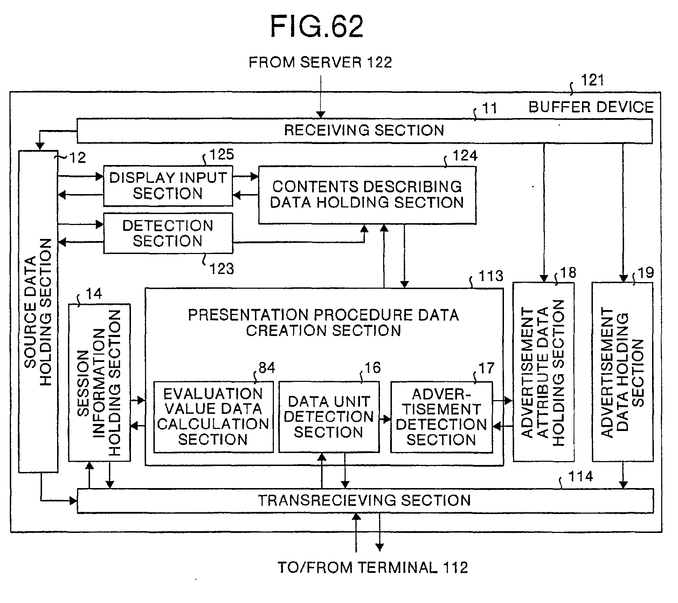

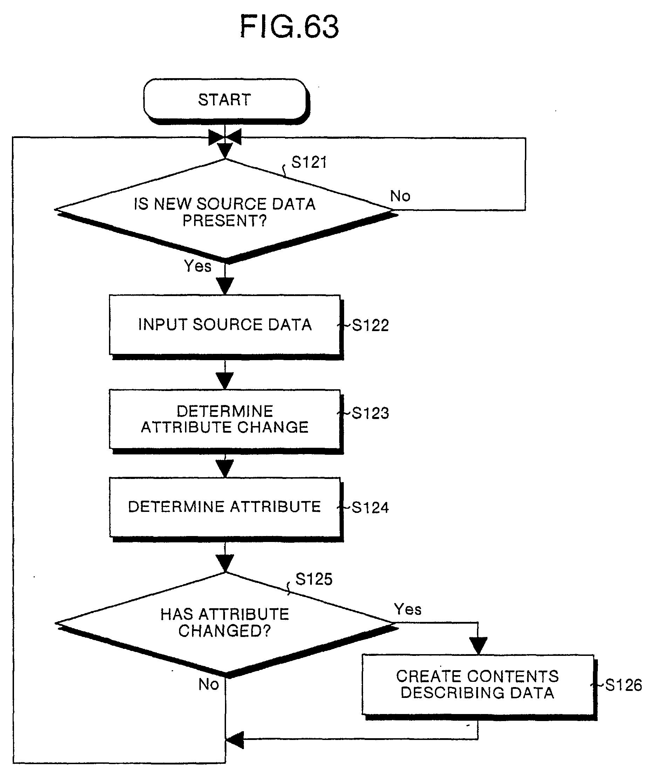

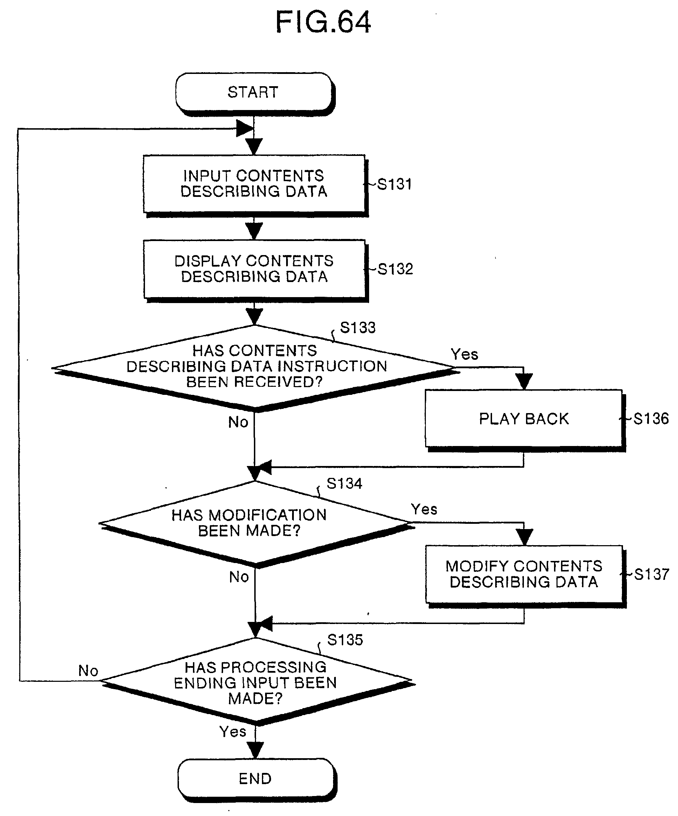

Fig. 1 is a view showing the structure of the information delivery system according to a first embodiment of the present invention; Fig. 2 is a view showing the structure of source data according to the first embodiment; Fig. 3 is a view showing the structure of the buffer device shown in Fig. 1; Fig. 4 is a view showing the structure of a terminal shown in Fig. 1; Fig. 5 is a flow chart showing the flow of the operation of the receiving section of the buffer device according to the first embodiment; Fig. 6 is a view showing an example of contents describing data according to the first embodiment; Fig. 7 is a flow chart showing the flow of the operation of the presentation process data creation section of the buffer device according to the first embodiment; Fig. 8 is a view showing an example of session information according to the first embodiment; Fig. 9 is a flow chart showing the flow of advertisement detection processing according to the first embodiment; Fig. 10 is a view showing an example of advertisement attribute data according to the first embodiment; Figs. 11 (a) and (b) are views showing examples of presentation process data according to the first embodiment; Fig. 12 is a flow chart showing the flow of the operation of the transreceiving section of the buffer device according to the first embodiment; Fig. 13 is a view for describing the processing of source data by the buffer device according to the first embodiment; Fig. 14 is a flow chart showing the flow of the operation of the terminal according to the first embodiment; Fig. 15 is a view showing the structure of the information delivery system according to a second embodiment of the present invention; Fig. 16 is a view showing the structure of the buffer device shown in Fig. 15; Fig. 17 is a view showing the structure of the information delivery system according to a third embodiment of the present invention; Fig. 18 is a view showing the structure of the buffer device shown in Fig. 17; Fig. 19 is a view showing the structure of a terminal shown in Fig. 17; Fig. 20 is a flow chart showing the flow of the operation of the transreceiving section of the buffer device according to the third embodiment; Fig. 21 is a flow chart showing the flow of the operation of the terminal according to the third embodiment; Fig. 22 is a view showing the structure of the buffer device according to a fourth embodiment of the present invention; Fig. 23 is a view showing an example of the presentation process data according to the fourth embodiment; Fig. 24 is a view for describing the processing of source data by the buffer device according to the fourth embodiment; Fig. 25 is a view showing an example of images played back in the terminal according to the fourth embodiment; Fig. 26 is a is a view showing the structure of the information delivery system according to a fifth embodiment of the present invention; Fig. 27 is a view showing the structure of the buffer device shown in Fig. 26; Fig. 28 is a view showing the structure of the terminal shown in Fig. 26; Fig. 29 is a flow chart showing the flow of the operation of the transreceiving section of the buffer device according to the fifth embodiment; Fig. 30 is a view showing an example of advertisement link data according to the fifth embodiment; Fig. 31 is a view showing an example of the presentation process data according to the fifth embodiment; Fig. 32 is a view for describing the processing of source data by the buffer device according to the fifth embodiment; Fig. 33 is a flow chart showing the flow of the operation of the terminal according to the fifth embodiment; Fig. 34 is a view showing an example of images played back in the terminal according to the fifth embodiment; Fig. 35 is a is a view showing the structure of the information delivery system according to a sixth embodiment of the present invention; Fig. 36 is a view showing the structure of the buffer device shown in Fig. 35; Fig. 37 is a flow chart showing the flow of the operation of the presentation process data creation section of the buffer device according to the sixth embodiment; Fig. 38 is a view showing an example of new contents describing data according to the sixth embodiment; Fig. 39 is a flow chart showing the flow of the operation of the transreceiving section of the buffer device according to the sixth embodiment; Fig. 40 is a view for describing the processing of source data by the buffer device according to the sixth embodiment; Fig. 41 is a view showing the structure of the information delivery system of a seventh embodiment of the present invention; Fig. 42 is a view showing the structure of the buffer device shown in Fig. 41; Fig. 43 is a flow chart showing the flow of the operation of the presentation process data creation section of the buffer device according to the seventh embodiment; Fig. 44 is a view showing an example of contents describing data according to the seventh embodiment; Fig. 45 is a view showing an example of session information according to the seventh embodiment; Fig. 46 (a) and (b) are views showing examples of calculated evaluation values according to the seventh embodiment; Fig. 47 (a) and (b) are views showing examples of presentation process data according to the seventh embodiment; Fig. 48 is a view showing the structure of the information delivery system according to an eighth embodiment of the present invention; Fig. 49 is a view showing the structure of the buffer device shown in Fig. 48; Fig. 50 is a view showing the structure of the terminal shown in Fig. 48; Fig. 51 (a) and (b) are views showing an example of presentation process data according to the eighth embodiment; Fig. 52 is a flow chart showing the flow of the operation of the terminal according to the eighth embodiment; Fig. 53 is a view showing an example of images played back in the terminal according to the eighth embodiment; Fig. 54 is a view showing the structure of the information delivery system according to a ninth embodiment of the present invention; Fig. 55 is a view showing the structure of the buffer device shown in Fig. 53; Fig. 56 is aview showing the structure of the terminal shown in Fig. 53; Fig. 57 is a flow chart showing the flow of the operation of the presentation process data creation section of the buffer device according to the ninth embodiment; Fig. 58 is a flow chart showing the flow of the operation of the transreceiving section of the buffer device according to the ninth embodiment; Fig. 59 is a flow chart showing the flow of the operation of the terminal according to the ninth embodiment; Fig. 60 is a view for describing the updating of the presentation process data according to the ninth embodiment; Fig. 61 is a view showing the structure of the information delivery system according to a tenth embodiment of the present invention; Fig. 62 is a view showing the structure of the buffer device shown in Fig. 61; Fig. 63 is a flow chart showing the flow of the operation of the detection section of the buffer device according to the tenth embodiment; Fig. 64 is a flow chart showing the flow of the operation of the display input section of the buffer device according to the tenth embodiment; Fig. 65 is a view showing the structure of an information delivery system having a conventional server for performing simultaneous multiple address delivery; and Fig. 66 is a view showing the structure of an information delivery system for performing conventional on-demand delivery.

### BEST MODE FOR CARRYING OUT THE INVENTION

Embodiments of the present invention will now be described below in detail based on the accompanying drawings. Note that the present invention is in no way limited by these embodiments.

### First Embodiment:

As a first embodiment of the present invention, a description is given of an example of an information delivery system in which appropriate related data (additional information) is inserted at an appropriate position in the source data to correspond to the type of terminal or the interest level of the user that are different for each session, and which information delivery system has a buffer device for performing the service of delivering this data to the terminal. For example, a product that an actor liked by a user uses in a drama program may have a great deal of appeal for that user. Accordingly, it would be effective if a commercial were inserted immediately after the scene in which the actor liked by the user used the product. The buffer device of the first embodiment provides a service for inserting a commercial relating to a product used in a drama program by an actor liked by a user immediately after that scene.

Fig. 1 is a view showing the structure of the information delivery system according to the first embodiment of the present invention. This information delivery system comprises a server 2 for performing simultaneous multiple address delivery, a buffer device 1 for buffering source data (related information) from the server 2, terminals 3 directly connected to the server 2, and terminals 4 connected to the buffer device 1. The server 2 performs the simultaneous multiple address delivery of source data to the terminals 3 and the buffer device 1. Note that the following description is of an example in which on-demand delivery is performed.

The buffer device 1 performs the same sort of buffering as the above described conventional buffer device, stores source data, and performs on-demand delivery to the terminal 4. As a result, the communication amount and load on the server 2 is reduced. Note that it is also possible for simultaneous multiple address delivery from the buffer device 1 to the terminals 4 to be performed. In addition, the buffer device 1 performs processing on the source data in accordance with the destination of the delivery, namely, in accordance with the user and/or the terminal receiving the delivery and delivers the processed source data to the terminals 4. The terminals 4 playback the processed source data from the buffer device 1 as they receive it.

The server 2 and the buffer device 1 may be connected, for example, via the Internet or may be connected via a dedicated line. The buffer 1 and the terminals 4 may be connected, for example, via a dedicated line or via the Internet or may be connected via a public telephone line by a dialup process. Note that, in the drawings, an example is shown in which there is one server 2 and one buffer device 1, however, there may also be a plurality of servers and a plurality of buffer devices. The description below is of an example in which the buffer device 1 is connected hierarchically in a cascade connection.

Fig. 2 is a view showing the structure of the source data according to the first embodiment. This source data is temporally continuous information such as multimedia information and sound and image information such as drama, movies, and news programs and comprises a plurality of data units (unit information) that are formed by the source data being divided according to attribute into a plurality of time periods. Here, the term "attribute" refers to whether or not a particular actor or product is being televised, the contents of the news, or the like and is determined by the contents of the source data. The server 2 transmits contents describing data (unit attribute information) relating to the attributes and time periods for each data unit to the buffer 1 together with the source data.

Fig. 3 is a view showing the structure of the buffer device 1 shown in Fig. 1. The buffer device 1 is provided with: a receiving section 11 for receiving contents describing data and source data from the server 2; a source data holding section 12 for holding source data received by the receiving section 11 in a storage medium such as RAM, a hard disk, or the like; a contents describing data holding section 13 for holding contents describing data received by the receiving section 11 in a storage medium such as RAM, a hard disk, or the like; a session information holding section 14 for holding session information (delivery destination information) which is information on the demands for each session such as the type of terminal and the degree of interest of the user; a presentation process data creation section 15 for creating presentation process data (transmission information) providing instructions on processing for the source data in accordance with the delivery destination and the source data based on the contents describing data held in the contents describing data holding section 13 and the session information held in the session information holding section 14; an advertisement data holding section 19 for holding advertisement information (additional information) to be inserted in (i.e. added to) the source data in a storage medium such as RAM, a hard disk, or the like; an advertisement attribute data holding section 18 for holding advertisement attribute information (additional attribute information) which is information relating to the attributes of the advertisement data in a storage medium such as RAM, a hard disk, or the like; and a transreceiving section 20 into which is input presentation process data created by the presentation process data creation section 15, and into which, on the basis of this input presentation process data, is input source data from the source data holding section 12 and advertisement data from the advertisement data holding section 19, and that then adds the advertisement data to the source data and transmits this to a terminal 4.

The receiving section 11 receives contents describing data and source data from the server 2. The source data holding section 12 holds source data received by the receiving section 11 in a storage medium such as RAM, a hard disk, or the like. The contents describing data holding section 13 holds contents describing data received by the receiving section 11 in a storage medium such as RAM, a hard disk, or the like. The session information holding section 14 holds session information. The session information is registered, for example, for every user ID or terminal ID. The session information holding section 14 acquires session information, for example, by making inquiries to a terminal 4 via the transreceiving section 20. Alternatively, session information may be created based on the history of the deliveries to each delivery destination (i.e. the terminal and/or user).

The presentation process data creation section 15 receives the input of the contents describing data held in the contents describing data holding section 13 and the session information held in the session information holding section 14. The presentation process data creation section 15 is also provided with a data unit detection section 16 and an advertisement detection section 17. The data unit detection section 16 detects data units that meet predetermined conditions for each delivery destination based on the contents describing data and the session information input into the presentation process data creation section 15.

The advertisement detection section 17 receives the input of advertisement attribute data held in the advertisement attribute data holding section 18 and, based on the input advertisement attribute data as well as the contents describing data and/or the session information, detects advertisement data that meets predetermined conditions for each delivery destination. The presentation process data creation section 15 creates, for each delivery destination, presentation process data instructing that advertisement data (i.e. the data for the sounds and images of the advertisement) detected by the advertisement detection section 17 be added to the data units detected by the data unit detection section 16 and transmitted.

The advertisement data holding section 19 holds advertisement data to be inserted into (i.e. added to) the source data in a storage medium such as RAM, a hard disk, or the like. The advertisement data holding section 19 acquires advertisement data, for example, from the server 2 or another server via the receiving section 11. The advertisement attribute data holding section 18 holds advertisement attribute information, which is information relating to the attributes of the advertisement data, in a storage medium such as RAM, a hard disk, or the like. The advertisement attribute data holding section 18 acquires advertisement attribute data, for example, from the server 2 or another server via the receiving section 11. Alternatively, it is also possible to determine attributes from the advertisement data held in the advertisement data holding section 19 and then create the advertisement attribute data.

The transreceiving section 20 receives the input of presentation process data created by the presentation process data creation section 15, and, on the basis of this input presentation process data, receives the input of source data from the source data holding section 12 and also receives the input of advertisement data from the advertisement data holding section 19, and then adds the advertisement data to the source data and transmits this to a terminal 4. The transmission to a terminal 4 is performed on-demand in response to an on-demand delivery request from the terminal 4. Note that it may also be performed in response to a simultaneous multiple address delivery request.

Fig. 4 is a view showing the structure of a terminal 4 shown in Fig. 1. The terminal 4 makes an on-demand delivery request to the buffer device 1 and is provided with a transreceiving section 21 for receiving processed source data from the buffer device 1 and with a playback section 22 for playing back the source data received by the transreceiving section 21 in parallel with the receiving by the transreceiving section 21. The transreceiving section 21 makes the on-demand delivery requests to the buffer device 1 and receives the processed source data from the buffer device 1. The playback section 22 plays back the source data received by the transreceiving section 21 in parallel with the receiving by the transreceiving section 21. For example, if the source data comprises images, these are displayed on a display unit. If the source data is sound, speakers are driven.

Hitherto, a description has been given of the structures of the buffer device 1 and the terminal 4, however, each of the structural elements of the buffer device 1 and the terminal 4 are conceptualized functions and the physical structure of the buffer device 1 and terminal 4 does not necessarily have to be the same as is shown here . For example, either a portion of or all of the processing functions provided in the buffer device 1 and the terminal 4 can be achieved by not shown CPU (Central Processing Unit) and by a program that is interpreted and executed by the CPU. Namely, working in cooperation with an OS (Operating System) or the like, a computer program for giving commands to the CPU so that the CPU performs the various types of processing is stored in not shown ROM. The CPU then performs the various types of processing as commanded by the program. It is also possible for either a portion of or all of the processing functions provided in the buffer device 1 and the terminal 4 to be achieved in the form of hardware based on wired logic. The same applies for the structures of other buffer devices and terminals described below.

Note that the session information holding section 14 corresponds to the delivery destination information storage unit of the present invention; the advertisement data holding section 19 corresponds to the additional information storage unit of the present invention; the presentation process data creation section 15 corresponds to the transmission information creating unit of the present invention; the data unit detection section 16 corresponds to the unit information detecting unit of the present invention; the advertisement attribute data holding section 18 corresponds to the additional attribute information storage unit of the present invention; and the advertisement detection section 17 corresponds to the additional information detecting unit of the present invention.

A description will now be given of the operation of the first embodiment in the structure described above with reference to Figs. 5 to 14. Fig. 5 is a flow chart showing the flow of the operation of the receiving section 11 of the buffer device 1 according to the first embodiment. The receiving section 11 performs receiving processing of data sent from the server 2 when the server 2 performs a simultaneous multiple address delivery. In this receiving processing, the receiving section firstly receives the data sent from the server 2 (step S1). Next, the received data is separated into source data and contents describing data. The source data is sent to the source data holding section 12 where it is held and the contents describing data is sent to the contents describing data holding section 13 where it is held. A determination is then made as to whether or not the receiving of the data from the server 2 is completed (step S3) and steps S1 and S2 are repeated until the receiving of the data from the server 2 is completed.

Fig. 6 is a view showing an example of the contents describing data according to the first embodiment. This contents describing data defines a number of the data units in the source data and describes the time span and attributes of the data units. In the example in the drawing, the data units are defined per scene of a drama. In a scene in which an actor uses a predetermined product, the name of that actor and the name of the product used by that actor are described as attributes. Note that the structure of the contents describing data is not particularly limited and it is possible for the order of the data units to be managed by serial number instead of by time span and to use the geographical location of a scene as an attribute.

Fig. 7 is a flow chart showing the flow of the operation of the presentation process data creation section 15 of the buffer device according to the first embodiment. The presentation process data creation section 15 performs processing to create presentation process data when the receiving section 11 receives new source data or new contents describing data, or when an on-demand delivery request is made from a terminal 4. In this processing, firstly, the presentation process data creation section 15 receives input of session information of the delivery destination from the session information holding section 14 (step S11).

Fig. 8 is a view showing an example of session information according to the first embodiment. The session information regulates the demands for each session such as the type of terminal and the degree of interest of the user. In this example, the actors liked by the respective users and the names of the products the user wishes to purchase are described. Returning to Fig. 7, the presentation process data creation section 15 now receives the input of contents describing data for the data units to be delivered from the contents describing data holding section 13 (step S12) Next, the data unit detection section 16 determines whether or not the input contents describing data correspond to the input session information (step S13). Namely, the detection of a data unit is performed by a comparative determination of the contents describing data and the session information.

The data unit detection section 16 detects data units that meet conditions such as "a data unit that has the actor's name as y and the usedproduct name as z as data unit attributes in a case when the session user is x, the actor liked by x described in the session information is y, and the product that x wishes to buy is z". In this case, scene 2 is detected in a session of User 1 and scene 11 is detected in a session of User 2. Note that the detecting conditions are not particularly limited and it is possible to employ a format in which the relevant data unit is detected if any one of the attributes of the session information matches an attribute of the contents describing data. Namely, it is possible to detect a data unit that has as an attribute at least one of the actor liked by the user at the delivery destination and the product that user wishes to buy.

If in step S13 the contents describing data are determined to correspond to the session information, the data unit detection section 16 stores that contents describing data as detected data (step S16). Next, the advertisement detection section 17 detects, in the advertisement detection processing described below, advertisement data corresponding to the contents describing data and/or the session information (step S17). The routine then moves to step S14. If, on the other hand, in step S13 the contents describing data are not determined to correspond to the session information, the presentation process data creation section 15 determines whether or not the next contents describing data exist (step S14).

The steps S12 to S14 are then repeated until there is no longer any next contents describing data. For example, supposing that there are N number of data units to be transmitted, the initial value of the counter is set to 0 and in each step S14 the value of the counter is increased by one. Steps S12 to S14 are repeated until the value of the counter reaches N. When it is determined in step S14 that no next contents describing data exist, the presentation process data creation section 15 creates presentation process data instructing that the detected advertisement data be inserted either before or after the detected data unit and transmitted (step S15). The processing is then ended. The created presentation process data is stored on a storage medium such as RAM, a hard disk, or the like.

Fig. 9 is a flow chart showing the flow of the advertisement detection processing according to the first embodiment. In this advertisement detection processing, the advertisement detection section 17 sequentially receives the input of advertisement attribute data from the advertisement attribute data holding section 18 (step S21). Fig. 10 is a view showing an example of advertisement attribute data according to the first embodiment. This advertisement attribute data is data that describes the attributes (appearing actors, products and the like) of each advertisement. These advertisement attributes correspond to the attributes described in the session information and contents describing data.

Returning to Fig. 9, next, it is determined whether or not the input advertisement attribute data corresponds to the session information input in step S11 and/or the contents describing data stored in step S16 shown in Fig. 7 (step S22). For example, it is determined whether or not the product shown by the advertisement attribute data matches the product shown by the contents describing data stored in step S16. If the advertisement attribute information does correspond to the session information input in step S11 and/or the contents describing data stored in step S16, then that advertisement attribute data is stored as detected data (step S24) and the routine moves to step S23.

If, however, in step S22 it is determined that the input advertisement attribute data does not correspond to the session information input in step S11 and/or the contents describing data stored in step S16, then a determination is made as to whether or not the next advertisement attribute data exists (step S23). The steps S21 to S23 are then repeated until the next advertisement attribute data no longer exists . For example, if it is supposed that there are M number of advertisement attribute data items held in the advertisement attribute data holding section 18, the initial value of the counter is set to 0 and in each step S23 the value of the counter is increased by one. Steps S21 to S23 are repeated until the value of the counter reaches M. The processing is then ended.

As a result of performing the above described processing, presentation process data is created for each delivery destination. Figs. 11 (a) and (b) are views showing examples of the presentation process data according to the first embodiment. Here, examples are shown of the creation of presentation process data for User 1 and for User 2 based on the contents description shown in Fig. 6, the session information shown in Fig. 8, and the advertisement attribute data shown in Fig. 10. The presentation process of User 1 shows that an advertisement 1 for product X is inserted after scene 2 in which actor A who is liked by User 1 uses product X that User 1 wishes to buy. In addition, the presentation process of User 2 shows that an advertisement 2 for product Y is inserted after scene 11 in which actor B who is liked by User 2 uses product Y that User 2 wishes to buy.

Fig. 12 is a flow chart showing the flow of the operation of the transreceiving section 20 of the buffer device 1 according to the first embodiment. The transreceiving section 20 firstly waits until an on-demand delivery request is made from a terminal 4. When an on-demand delivery request is made from a terminal 4, presentation process data that accords with the delivery destination is input from the presentation process data creation section 15 (step S32). Next, based on the instruction of this presentation process data, the relevant data unit is input from the source data holding section 12 (step S33). Next, it is determined whether or not the input data unit is instructed to have an advertisement added thereto (step S34).

If this input data unit is instructed to have an advertisement added thereto, the advertisement data instructed by the presentation process data is input from the advertisement data holding section 19 (step S37). Next, the input advertisement data is added either before or after the data unit and the data unit with the advertisement data added thereto is transmitted to the terminal 4 (step S35). If, on the other hand, the input data unit is not instructed to have an advertisement added thereto, in step S35 the data unit is transmitted to the terminal 4 as it is without the advertisement data having been added thereto.

Thereafter, it is determined whether or not the next data unit exists (step S36) and steps S33 to S36 are repeated until no next data unit exists . For example, if it is supposed that there are N number of data units to be transmitted, the initial value of the counter is set to 0 and in each step S36 the value of the counter is increased by one. Steps S33 to S36 are then repeated until the value of the counter reaches N. When it is determined in step S36 that no next data unit exists, the processing is ended and the transreceiving section once again enters a waiting state.

Fig. 13 is a view for describing the processing of the source data by the buffer device 1 according to the first embodiment. Here, a delivery to the User 1 is shown. As a result of the processing of the source data by the buffer device 1, the source data D1 from the server 2 that is arranged in order from the data unit of scene 1 becomes source data into which the advertisement data of advertisement 1 is inserted after the data unit of scene 2. Namely, source data that has been processed in accordance with each delivery destination is delivered to the respective delivery destination of the buffer device 31.

Fig. 14 is a flow chart showing the flow of the operation of a terminal 4 according to the first embodiment. In the operation of a terminal 4, firstly, the transreceiving section 21 waits for the input from a user requesting an on-demand delivery. This input from the user can be made via not shown keyboard or mouse. When a request for an on-demand delivery is made from a user, the processing is started. After the signal requesting on-demand delivery is transmitted to the buffer device 1, the transreceiving section 21 waits (step S42). When the transmission of data units from the buffer device 1 begins, the receiving of the transmitted data units also begins (step S43).

It is then determined whether or not the reception of the data units is completed, specifically, whether or not a signal indicating the end of the data units has been received (step S44), and the receiving is continued until the end of the data units. Meanwhile, the playback section 22 begins the playback without waiting for all of the source data to first be received, and performs the playback until the end of the source data (step S45 and S46). In this way, effective source data processed by the buffer device 1 is played back in the terminal 4.

As described above, according to the first embodiment, because a structure is employed in which the source data is processed in the buffer device 1, it is possible for an Internet connection provider who is able to easily obtain information on a user to perform the provider's original processing on source data supplied on the Internet without the provider having to procure the source data independently and then supply this processed data to the user. Namely, the Internet connection provider is able to operate their business independently of a service that is equipped with a server and supplies the source data.

In addition, because the presentation process data creation section 15 detects appropriate data units based on session information regulating the requests for each session and inserts related data either before or after those data units, it is possible to insert related data at an appropriate location in the source data that is in accordance with the requests that are different for each session and deliver this to the terminal 4. Moreover, because the presentation process data creation section 15 detects related data that is defined in accordance with the attributes of the data units and insert it into the source data, it is possible to insert appropriate source data that is in accordance with the request, which is different for each session. Namely, it is possible to insert appropriate related data in an appropriate location in the source data and deliver it to the terminal 4.

### Second Embodiment:

A second embodiment of the present invention is structured such that, in the first embodiment, the server performs on-demand delivery. Note that the fundamental structure and operation are the same as those of the first embodiment and portions that are the same as those in the first embodiment are given the same descriptive symbols and a description thereof is omitted. Here, only those portions that are different are described. Fig. 15 is a view showing the structure of the information delivery system according to the second embodiment of the present invention. In this information delivery system, instead of the server 2 for performing simultaneous multiple address delivery, there is provided the server 32 for performing on-demand delivery.

In addition, instead of the buffer 1 for receiving contents describing data and source data by simultaneous multiple address delivery from the server 1, there is provided a buffer 31 for making an on-demand delivery request to the server 32 and receiving contents describing data and source data by on-demand delivery from the server 32. The buffer device 31 makes on-demand delivery requests to the server 32 and when the server 32 receives an on-demand delivery request from the buffer device 31, it delivers contents describing data and source data. The buffer device 31 receives the delivered source data and contents describing data.

Fig. 16 is a view showing the structure of the buffer device 31 shown in Fig. 15. Instead of the receiving section 11 for receiving contents describing data and source data by simultaneous multiple address delivery from the server 1, there is provided in the buffer device 31 a receiving section 33 for making an on-demand delivery request to the server 32 and receiving contents describing data and source data by on-demand delivery from the server 32. The rest of the operation of the receiving section 33 is the same as that of the receiving section 11 of the first embodiment.

As described above, according to the second embodiment, even when the server delivering the source data and contents describing data is one that performs on-demand delivery, it is possible for the buffer device to receive the source data and contents describing data and achieve the same effects as those of the first embodiment.

### Third Embodiment:

A third embodiment of the present invention is structured such that, in the first or second embodiments, presentation process data is transmitted from the buffer device to a terminal and the terminal requests the buffer device for sequential data units based on the presentation process data. Here, in the same way as in the first embodiment, the example described is one in which the server 1 for performing simultaneous multiple address delivery is provided. Note that the fundamental structure and operation are the same as those of the first embodiment and portions that are the same as those in the first embodiment are given the same descriptive symbols and a description thereof is omitted. Here, only those portions that are different are described.

Fig. 17 is a view showing the structure of the information delivery system according to the third embodiment of the present invention. In this information delivery system, instead of the buffer device 1 of the first embodiment, there is provided a buffer device 41 for transmitting presentation process data to a terminal, and instead of the terminals 4 of the first embodiment, there are provided terminals 42 for receiving presentation process data from the buffer device 41 and requesting and then playing back sequential data units based on the received presentation process data.

When the buffer device 41 receives an on-demand delivery request from a terminal 42, firstly, it delivers presentation process data to the terminal 42. The data playback program on the side of the terminal 42 that receives this presentation process data requests the buffer device 41 for each data unit in sequence based on the received presentation process data. In accordance with the request from the terminal 41, the buffer device 41 performs the streaming delivery of the respective data units. The terminal 42 plays back the data of each data unit as it is received. The advertisement information to be inserted between data units is stored in the advertisement data holding section 19 as a separate file from the source data and is delivered to the terminal 43 in accordance with the presentation process data.

Fig. 18 is a view showing the structure of the buffer device 41 shown in Fig. 17. Instead of the transreceiving section 20 of the first embodiment, the buffer device 41 is provided with a transreceiving section 43 that transmits presentation process data to the terminal 42 and also transmits data units in accordance with the request from the terminal 42 when an on-demand delivery request is made from a terminal 42. When an on-demand delivery request is made from a terminal 42, the transreceiving section 43 transmits presentation process data to the terminal 42 and also transmits data units in accordance with the request from the terminal 42.

Fig. 19 is a view showing the structure of the terminal 42 shown in Fig. 17. The terminal 42 is provided with a playback section 22, a transreceiving section 44 for making an on-demand delivery request to the buffer device 41 and receiving presentation process data from the buffer device 41, and a data unit transmission requesting section 45 that holds the presentation process data received by the transreceiving section 44 in a presentation process data holding section (i.e. a storage medium such as RAM, a hard disk, or the like) 46 and, based on the held presentation process data, sequentially requests the buffer device 41 for the respective data units.

The transreceiving section 44 makes on-demand delivery requests to the buffer device 41 and receives presentation process data from the buffer device 41. The data unit transmission requesting section 45 holds the presentation process data received by the transreceiving section 44 in the presentation process data holding section 46 and, based on the held presentation process data, sequentially requests the buffer device 41 for the respective data units.

A description will now be given of the operation of the third embodiment in the above described structure with reference to Figs 20 and 21. Fig. 20 is a flow chart showing the flow of the operation of the transreceiving section 43 of the buffer device 41 according to the third embodiment. The transreceiving section 43 firstly waits until an on-demand delivery request is made from a terminal 42. When an on-demand delivery request is made from a terminal 42, the transreceiving section 43 receives the input of presentation process data that corresponds to the delivery destination from the presentation process data creation section 15 (step S52). The input presentation process data is then transmitted to the terminal 42 (step S53). Next, the transreceiving section 43 waits until it receives a data unit request signal transmitted from the terminal 42 based on the instructions of this presentation process data (step S54).

When a data unit request signal from the terminal 42 is received, the relevant data unit is input from the source data holding section 12 (step S55). Next, it is determined whether or not the input data unit is instructed to have an advertisement added thereto (step S56). If this data unit is instructed to have an advertisement added thereto, the advertisement data indicated in the request signal from the terminal 42 is input from the advertisement data holding section 19 (step S60). Next, the input advertisement data is added either before or after the data unit and the data unit with the advertisement data added thereto is transmitted to the terminal 42 (step S57).

If, on the other hand, the input data unit is not instructed to have an advertisement added thereto, in step S57 the data unit is transmitted to the terminal 42 as it is without the advertisement data having been added thereto. Thereafter, it is determined whether or not a notification of the completion of the transmission has arrived from the terminal 42 (step S58) and steps S54 to S58 are repeated until notification of the completion of the transmission does arrive. When this notification of the completion of the transmission does arrive from the terminal 42, the processing is ended and the transreceiving section once again enters a waiting state.

Fig. 21 is a flow chart showing the flow of the operation of the terminal 42 according to the third embodiment. In the operation of the terminal 42, after the transreceiving section 44 has made the on-demand delivery request in step S42, the transreceiving section 44 waits until the presentation process data is received. When the transreceiving section 44 receives the presentation process data from the buffer device 41 (step S61), the data unit transmission requesting section 45 holds the presentation process data received by the transceiver 44 in the presentation process data holding section 46. Based on this held presentation process data, request signals requesting the respective data units are then sequentially transmitted to the buffer device 41 via the transreceiving section 44 (step S62).

Next, the transreceiving section 44 receives the data units transmitted from the buffer device 41 in response to the above request (step S63). Meanwhile, the playback section 22 performs the playback of the data units in parallel with the reception of the data units by the transreceiving section 44 (step S45 and S46). Next, the data unit transmission requesting section 45 determines whether or not all of the data units indicated in the presentation process data have been received (step S64) and repeats steps S62 to S64 until all of the data units indicated in the presentation process data have been received. When all of the data units indicated in the presentation process data have been received, a signal notifying the completion of the receiving is transmitted to the buffer device 41 (step S65).

As described above, according to the third embodiment, delivery of the appropriate data units is possible and the same effects as in the first embodiment can be achieved even in cases when presentation process data is transmitted from a buffer device to a terminal and the terminal requests the data units based on the presentation process data.

### Fourth Embodiment:

A fourth embodiment of the present invention employs a structure in which, in the first to third embodiments, advertisement data is added (i.e. inserted) parallel to (i.e. superposed on) the data units. Here, in the same way as in the third embodiment, the example described is of a case in which the presentation process data is transmitted to the terminal 42. Note that the fundamental structure and operation are the same as those of the third embodiment and portions that are the same as those in the third embodiment are given the same descriptive symbols and a description thereof is omitted. Here, only those portions that are different are described.

Fig. 22 is a view showing the structure of the buffer device according to the fourth embodiment of the present invention. The buffer device 51 is provided with a presentation process data creation section 52 for creating presentation process data instructing that advertisement data be added to the data unit by being superposed thereon, and with a transreceiving section 53 for transmitting the presentation process data from the presentation process data creation section 52 to a terminal 42, adding advertisement data to the data units by superposing it thereon in accordance with a request from the terminal 42, and then transmitting the data units to the terminal 42.

Instead of creating presentation process data instructing that the advertisement data be inserted either before or after a data unit, the presentation process data creation section 52 creates presentation process data instructing that advertisement data be added in superposition to the data units. The remainder of the operation thereof is the same as that of the presentation process data creation section 15 of the third embodiment. Here, the description "superposing the advertisement data on the data units" refers, for example, to the act of forming a composite image using superimposing or multiple screens in which the data unit playback screen appears simultaneously with the advertisement data playback screen.

Fig. 23 is a view showing an example of presentation process data according to the fourth embodiment. In this example, it is instructed that advertisement 1 be added in superposition on scene 2. The transreceiving section 53 transmits the presentation process data from the presentation process data creation section 52 to a terminal 42, adds advertisement data to the data units by superposing it thereon in accordance with a request from the terminal 42, and then transmits the data units to the terminal 42. The remainder of the operation thereof is the same as that of the transreceiving section 43 of the third embodiment.

Fig. 24 is a view describing the processing of the source data by the buffer device according to the fourth embodiment. Thus, according to the buffer device 51, source data D1 from the server 2 is processed into the source data D3 in which the advertisement data of advertisement 1 has been added in superposition onto the data unit of scene 2. Moreover, as is shown in Fig. 25, on the terminal 42, the advertisement 1 appears superposed on scene 2. As described above, according to the fourth embodiment, it is possible to add (i.e. insert) advertisement data parallel with (i.e. superposed on) a data unit.

### Fifth Embodiment:

A fifth embodiment of the present invention is structured such that, in the first to fourth embodiments, advertisement link data that provides a link to advertisement data is added to the data units. As is the case with the first to third embodiments, this advertisement link data may be inserted either before or after a data unit, however,. here, a description is given of an example in which, as is the case in the fourth embodiment, the advertisement link data is added (i.e. inserted) parallel with (i.e. superposed on) a data unit. Note that the fundamental structure and operation are the same as those of the fourth embodiment and portions that are the same as those in the fourth embodiment are given the same descriptive symbols and a description thereof is omitted. Here, only those portions that are different are described.

Fig. 26 is a view showing the structure of the information delivery system according to the fifth embodiment of the present invention. In this information delivery system, instead of the buffer device 61 adding advertisement information to the data units, it adds advertisement link data to the data units and then delivers these to a terminal 62. The terminal 62 displays an anchor for the received advertisement link data and when this anchor is clicked on the screen, advertisement data is acquired from the site (advertisement server 63) shown in the advertisement link data and then displayed.

Fig. 27 is a view showing the structure of the buffer device 61 shown in Fig. 26. This buffer device 61 is provided with a presentation process data creation section 64 for creating presentation process data that gives an instruction for the advertisement link data to be added; an advertisement link data holding section 65 for holding advertisement link data; and a transreceiving section 66 for transmitting presentation process data from the presentation process data creation section 64 to a terminal 62 and for adding advertisement link data to the data units in accordance with the request from the terminal 62 and then transmitting the data units to the terminal 62.

Instead of creating presentation process data that gives an instruction for advertisement data to be added to the data units, the presentation process data creation section 64 creates presentation process data that gives an instruction for advertisement link data to be added. The advertisement link data holding section 65 holds advertisement link data. The transreceiving section 66 transmits presentation process data from the presentation process data creation section 64 to a terminal 62, and adds advertisement link data to the data units in accordance with the request from the terminal 62 and then transmits the data units to the terminal 62. This advertisement link data is used to form a link to the advertisement data and includes information on the position where the advertisement data is located (i.e. a URL or the like).

Fig. 28 is a view showing the structure of the terminal 62 shown in Fig. 26. The terminal 62 is provided with a user input section 70 for the input of instructions from a user instructing that an advertisement be displayed. The user input section 70 might, for example, cause a mouse pointer to be moved in accordance with the operation of a mouse or the like (not shown) by the user. When the anchor for the advertisement data displayed by the playback section 69 is clicked, a request is made to the transreceiving section 67 for the advertisement data to be acquired from the site designated in the advertisement link data, and a request is made to the data unit transmission requesting section 68 and the playback section 69 for the requesting of the data units and the playback to be temporarily halted.

When these requests are made from the user input section 70, the transreceiving section 67 acquires advertisement data from the site designated in the advertisement link data. In addition, the data unit transmission requesting section 68 temporarily stops requesting data units and the playback section 69 temporarily stops playing back the data units and plays back the advertisement data. The rest of the structures and operations of the transreceiving section 67, the data unit transmission requesting section 68, and the playback section 69 are the same as those of the transreceiving section 44, the data unit transmission requesting section 45, and the playback section 22 of the fourth embodiment.

A description will now be given of the operation of the fifth embodiment in the above described structure with reference to Figs. 29 to 34. Fig. 29 is a flow chart showing the flow of the operation of the transreceiving section 66 of the buffer device 61 according to the fifth embodiment. In the operation of the transreceiving section 66, when it is determined in step 56 that an advertisement is to be added, the transreceiving section 66 receives the input of the advertisement link data from the advertisement link data holding section 65 (step S71). Next, the input advertisement link data is inserted parallel with the data units input in step S55, and the routine moves to step S57. Fig. 30 is a view showing an example of advertisement link data according to the fifth embodiment. The advertisement link data may, for example, contain information such as a pointer (such as a URL) to the advertisement 1 and the letters or outline or the like of an anchor. The terminal 62 is able to display the anchor based on the advertisement link data and acquire the advertisement link data.

Fig. 31 is a view showing an example of presentation process data according to the fifth embodiment. In this example, it is stipulated that the scene 2 and the link to the advertisement 1 be provided in parallel. The terminal 62 makes a request in accordance with this presentation process data, and the transreceiving section 66 of the buffer device 61 delivers the advertisement link data in parallel with the data unit of scene 2.

Fig. 32 is a view for describing the processing of the source data by the buffer device 61 according to the fifth embodiment. In this way, according to the buffer device 61, source data D1 from the server 2 is processed into the source data D4 in which advertisement link data linking to advertisement 1 has been added in superposition onto the data unit of scene 2. Moreover, on the terminal 62, the link to advertisement 1 appears superposed on scene 2.

Fig. 33 is a flow chart showing the flow of the operation of the terminal 62 according to the fifth embodiment. In the operation of the terminal 62, when the anchor of the advertisement link data is displayed in step S45, the user input section 70 determines whether or not the anchor of the advertisement link data has been clicked (step S73). If the anchor of the advertisement link data has not been clicked, the playback section 69 continues the playback of the data units without any change (step S47 and S45). If, however, the anchor of the advertisement data has been clicked, the playback section 69 halts the playback of the data units, the transreceiving section 67 acquires the advertisement data from the advertisement server 63, and the playback section 69 plays back that advertisement data (step S73). Thereafter, the playback section 69 resumes the playback of the data units (step S47).

Fig. 34 is a view showing an example of images played back in the terminal 62 according to the fifth embodiment. The terminal 62, for example, displays the anchor 69 that is the starting point of the link superposed on scene 2 as it is playing back scene 2. If the user moves the mouse pointer 68 on the screen and clicks on the anchor 69, the terminal 62 halts the playback of scene 2 and starts the playback of an advertisement for product X that is specified by the advertisement link data. When the advertisement for product X has ended, the terminal 62 returns to the point at which scene 2 was halted and resumes playback.

As described above, according to the fifth embodiment, because the presentation process creation section 64 inserts a link to related data, a link to related data is inserted correspondingly with the request, which is different for each session, and transmitted to the terminal 62 so that the user can extract the related data as the user finds it necessary to do so.

### Sixth Embodiment:

A sixth embodiment of the present invention is structured such that, in the first to fifth embodiments, a plurality of buffer devices are installed in a cascade formation between a server and a terminal so that source data can be transferred successively as it is processed. Here, in the same way as in the first embodiment, a description is given of an example in which advertisement data is inserted in source data from a server 2 that performs simultaneous multiple address delivery. Note that the fundamental structure and operation are the same as those of the first embodiment and portions that are the same as those in the first embodiment are given the same descriptive symbols and a description thereof is omitted. Here, only those portions that are different are described.

Fig. 35 is a view showing the structure of the information delivery system according to the sixth embodiment of the present invention. Here, an example is given in which buffer devices are installed in each of the regions of Tokyo Metropolitan, Kanagawa Prefecture, Kamakura City, Fujisawa City, and the like and related data such as advertisements (advertisement data) and the like is inserted into the source data in each buffer device. Each buffer device inserts advertisement data that corresponds to the region in which it is installed into the source data. For example, the buffer device 71 installed in Kanagawa Prefecture inserts advertisements aimed at the whole of Kanagawa Prefecture, while the buffer device 1 installed in Kamakura City inserts advertisements aimed at Kamakura City.

Among the advertisements are many aimed at a limited region. It would be convenient if advertisements such as these could be inserted in the buffer device installed in each region. The reason for this is that if it is assumed to be necessary to temporarily transfer the data for inserting the advertisement to the server, the necessity arises of transferring a large volume of data to regions at a considerable distance.

The buffer device 71 for delivering processed source data to other buffer devices creates contents describing data that corresponds to the processed source data and delivers the source data together with the contents describing data to the other buffer devices. The buffer devices that receive this source data and contents describing data perform further processing as new source data on the data from the buffer device 71 and deliver it to a user. Note that the description here is for when the buffer devices are divided into two stages; however, it is also possible to connect the buffer device 71 in a cascade connection of three or more stages.

Fig. 36 is a view showing the structure of the buffer device 71 shown in Fig. 35. The buffer device 71 is provided with a presentation process data creation section 72 having a new contents describing data creation section 74 for creating new contents describing data based on the presentation process data, and with a transreceiving section 73 for delivering new contents describing data together with data units.

The new contents describing data creation section 74 creates new contents describing data based on the presentation process data. It is also possible for the presentation process data to be integrated with the new contents describing data. The transreceiving section 73 delivers the new contents describing data created by the new contents describing data creation section 74 together with the data units. Alternatively, it is also possible to not provide the new contents describing data creation section 74 and have the transceiving suction 73 create and deliver contents describing data that corresponds to the data being delivered when it delivers data to the buffer device 1.

A description will now be given of the operation of the sixth embodiment in the above described structure while referring to Figs. 37 to 40. Fig. 37 is a flow chart showing the flow of the operation of the presentation process data creation section 72 of the buffer device 71 according to the sixth embodiment. In the operation of the presentation process data creation section 72, based on the presentation process data created in step S15, the new contents describing data creation section 74 calculates the time spans for the data units and also adds the attribute information of the advertisement data and creates new contents describing data (step S81). The processing is then ended.

Fig. 38 is a view showing an example of new contents describing data according to the sixth embodiment. Here, an example is shown in which the advertisement 2 is inserted after scene 11. If it assumed that the advertisement 2 lasts for 10 seconds, then the scenes after scene 11 are each made later by ten seconds . In addition, the attribute information (i.e. actor names, product names, and the like) of advertisement 2 is added and new contents describing data is created. Fig. 39 is a flow chart showing the flow of the operation of the transreceiving section 73 of the buffer device 71 according to the sixth embodiment. In the operation of the transreceiving section 73, after step S32, new contents describing data is input from the presentation process data creation section 72 (step S82) . The new contents describing data that was input is then transmitted to other buffer devices (step S83). The routine then moves to step S33.

Fig. 40 is a view for describing the processing of the source data by the buffer device 71 according to the sixth embodiment. The buffer device 71, for example, receives source data 1 from the server 2 and creates source data D12 by inserting advertisement data for Kanagawa Prefecture after the data unit for scene 11. This data is then delivered to other buffer units. The buffer device 1 that receives the source data D12 creates source data D13 by inserting advertisement data for Fujisawa City after the data unit for scene 13. This data is then delivered to a terminal 4.

As described above, according to the sixth embodiment, because the presentation process data creation section 72 creates new contents describing data that corresponds to the processed source data, it is possible to insert a plurality of buffer devices in series between the server 2 and a terminal 4, and to provide an information delivery service to a large number of terminals using only one server.

### Seventh Embodiment:

A seventh embodiment of the present invention is structured such that, in the first to sixth embodiments, the buffer devices can freely select the data units to be delivered and also change the order thereof. For example, the seventh embodiment can be used in services that select the respective topics of a news program in accordance with the level of interest of the user and provide these to the user. Here, in the same way as in the third embodiment, an example is described in which source data is received by simultaneous multiple address delivery from the server 2 and presentation process data is transmitted to a terminal 42. Note that the fundamental structure and operation are the same as those of the third embodiment and portions that are the same as those in the third embodiment are given the same descriptive symbols and a description thereof is omitted. Here, only those portions that are different are described.

Fig. 41 is a view showing the structure of the information delivery system according to the seventh embodiment of the present invention. This information delivery system is provided with a server 82 for delivering contents describing data that includes significance level data and with a buffer device 81 for freely selecting data unit and changing the order thereof before delivering them. The server 82 delivers contents describing data that includes significance level data together with the source data. The buffer device 81 holds session information that includes information on the interest level of a user.

Source data and contents describing data are received from the server 82 and, based on information on the level of significance of the contents describing data and information on the level of interest of the session information, the data units are freely selected and the order thereof is changed before they are delivered to a terminal 42. Note that it is also possible to insert advertisement data as well as freely selecting the data units and changing the order thereof. Alternatively, it is possible to perform only the selection of the data units and the changing of the order thereof.

Fig. 42 is a view showing the structure of the buffer device 81 shown in Fig. 41. Instead of the presentation process data creation section 15 and the session information holding section 14 of the third embodiment, the buffer device 81 is provided with a session information holding section 85 for holding session information that includes information on the level of interest of the destination of the delivery, and with a presentation process data creation section for creating presentation process data for giving instructions about the free selection of the data units and the changing of the order thereof. The session information holding section 85 holds session information that includes information on the level of interest of the destination of the delivery. The presentation process data creation section 83 evaluates each data unit on the basis of the session information held in the session information holding section 85. Subsequently, based on the result of the evaluation, the presentation process data creation section 83 creates presentation process data giving instructions about the free selection of the data units and the changing of the order thereof.

A description will now be given of the operation of the seventh embodiment in the above structure with reference to Figs 43 to 47. Fig. 43 is a flow chart showing the flow of the operation of the presentation process data creation section 83 of the buffer device 81 according to the seventh embodiment. In the operation of the presentation process data creation section 83, after contents describing data has been input in step S12, evaluation values for the data units are calculated based on information on the level of interest of the session information input in step S11 and on information on the significance level of the contents describing data input in step S12. The routine then moves to step S13.

As the evaluation value, for example, the product of the information on the level of interest of the session information input in step S11 and on information on the significance level of the contents describing data input in step S12/ namely, the product of the level of significance set for a data unit and the level of interest of a user for each session in that particular field can be used. Next, in step S14, after it is determined that there is no subsequent contents describing data, data units whose evaluation value calculated in step S91 is greater than a predetermined value, for example, 0.2 are extracted, and presentation process data is created by sorting the extracted data units in the order of their evaluation value (step S92).

Fig. 44 is a view showing an example of contents describing data according to the seventh embodiment. In this example, each topic of the news is defined respectively as a data unit. A time span and field, level of significance, and contents, or the like, serving as attribute information are described for each data unit. Fig. 45 is a view showing an example of session information according to the seventh embodiment. In this example, the level of interest in each field is expressed for each user by a numerical value. Here, a level of interest of "1" indicates the highest level of interest, while a level of interest of "0" indicates no interest whatsoever.

Figs. 46 (a) and (b) are views showing examples of evaluation values calculated according to the seventh embodiment. (a) shows evaluation values calculated for User 1, while (b) shows evaluation values calculated for User 2. These evaluation values may be calculated, for example, by multiplying for each user the value of the significance level of data units relating to the same field by the value of the interest level of the user. Specifically, for example, in the case of User 1, because the field of topic 1 is "Politics", by multiplying the significance level of topic 1, which is "1", by the interest level of User 1 in the "Politics" field, which is "0.9", the evaluation value of 0.9 is obtained. Because the field of topic 2 is "Economics", by multiplying the significance level of topic 1, which is "0.5", by the interest level of User 1 in the "Economics" field, which is "0.9", the evaluation value of 0.45 is obtained. The evaluation values below are calculated in the same way as this.

Figs. 47 (a) and (b) are views showing examples of presentation process data according to the seventh embodiment. The presentation process data is freely selected and sorted based on evaluation values. In this example, the order is from high evaluation value and items with evaluation values of 0.2 or less have been omitted. News on politics is given priority of delivery to User 1 who has a high level of interest in politics, while News on sports is given priority of delivery to User 2 who has a high level of interest in sports.

As described above, according to the seventh embodiment, because the presentation process data creation section 83 freely selects data units and creates presentation process data on the basis of evaluation values determined by the attributes of the data units and the session information, it is possible to selectively deliver to a terminal only those data units that have a high evaluation value in response to a request, which is different for each session. In addition, because the presentation process data creation section 83 arranges the data units in the order of evaluation values determined by the attributes of the data units and the session information when creating presentation process data, it is possible to deliver to a terminal data units in order from those having a high evaluation value in response to a request, which is different for each session.

Moreover, because the session information holding section 85 holds session information in which the interest levels for each field are expressed, by numerical values, by determining the evaluation value of each data unit in accordance with the interest level for each field that is different for each session, and then by freely selecting or sorting the data units on the basis of these evaluation values and then delivering them to the terminals, it is possible to give priority to delivering data of a field having a high interest level in response to a request, which is different for each session.

### Eighth Embodiment:

An eighth embodiment of the present invention is structured such that, in the seventh embodiment, the user is able to select the data units and alter the delivery and playback order of the data units. Note that the fundamental structure and operation are the same as those of the seventh embodiment and portions that are the same as those in the third embodiment are given the same descriptive symbols and a description thereof is omitted. Here, only those portions that are different are described.

Fig. 48 is a view showing the structure of the information delivery system according to the eighth embodiment of the present invention. This information delivery system is provided with a buffer device 91 for adding the attribute information (i.e. information such as the contents, title, and the like) of each data unit to the presentation process data and then transmitting the data, and with a terminal 92 for displaying a selection screen for each data unit together with the attribute information thereof, and for inputting instructions from a user and altering delivery requests and the playbackorder. The buffer device 91 adds the attribute information of each data unit to the presentation process data and then transmits the data . The terminal 92 displays a selection screen for each data unit together with the attribute information thereof, and inputs instructions from a user and alters delivery requests and the playback order. The remainder of the structure and operation of the buffer device 91 and the terminal 92 are the same as those of the buffer device 81 and terminal 42 of the seventh embodiment.

Fig. 49 is a view showing the structure of the buffer device 91 shown in Fig. 48. The buffer device 91 is provided with a presentation process data creation section 93 for creating presentation process data to which the attribute information of each data unit has been added, and with a transreceiving section 94 for receiving the input from the presentation process data creation section 93 of the presentation process data to which the attribute information has been added and then transmitting it to a terminal 92. The presentation process data creation section 93 creates presentation process data to which the attribute information of each data unit has been added. The transreceiving section 94 receives the input from the presentation process data creation section 93 of the presentation process data to which the attribute information has been added and then transmits it to a terminal 92.

Fig. 50 is a view showing the structure of the terminal 92 shown in Fig. 48. The terminal 92 is provided with a transreceiving section 95 for receiving the input of presentation process data from the buffer device 91; a user input section 98 for receiving input from the user that provides instructions as to the altering of the playback order of the data units or the stopping and restarting of the playback of the data units; a data unit transmission requesting section 96 for altering presentation process data held in the presentation process data section 46 in response to a request from the user input section 98; and a playback section 97 for playing back data units and for displaying data unit selection screens that use the titles of the data units and the like contained in the presentation process data.

Figs. 51 (a) and (b) are views showing examples of presentation process data according to the eighth embodiment. The presentation process data, for example, not only shows the order of the data units, but also includes information on the contents (titles) and evaluation values. The transreceiving section 95 receives presentation process data that includes these sorts of titles. The data unit transmission requesting section 96 holds the presentation process data received by the transreceiving section 95 in the presentation process data holding section 46. In addition, when a request is made from the user input section 98, the presentation process data held in the presentation process data holding section 46 is altered.

The playback section 97 plays back the data units received by the transreceiving section 95 and also displays data unit selection screens by arranging the titles of the data units and the like included in the presentation process data held in the presentation process data holding section 46. It also performs the stopping and restarting of the playback of the data units when a request is made from the user input section 98. The user input section 98 receives input from a user on a selection screen and alters the presentation process data, namely, requests that the data unit transmission requesting section 96 change the order of the requested data units. In addition, it requests that the playback section 97 stop and restart playback in accordance with input from a user.

A description will now be given of the operation of the eighth embodiment in the above described structure with reference to Figs. 52 and 53. Fig. 52 is a flow chart showing the flow of the operation of the terminal 92 in the eighth embodiment. In the operation of the terminal 92, when presentation data is received in step S61, it is determined whether or not a data unit has been clicked on the selection screen, namely, whether or not it has been selected (step S101). If no data unit has been clicked on the selection screen, the routine moves to step S62. If, however, a data unit has been clicked on the selection screen, the presentation process data is altered in accordance with the operation by the user and the order of the transmission request is altered. If, in step S44, the reception of the data units has not been completed, the routine returns to step S101. Here, even if it occurs partway through the playback of the data units, it is still possible to stop the playback of those data units at that point and start playing back the data units in the altered order.

Fig. 53 is a view showing an example of images played back on the terminal 92 in the eighth embodiment. In this example, the screen of the terminal 92 is divided into a list display area 99 for displaying a list of the data units and a playback area 100 where the played back images are displayed. In the list display area 99 the titles (i.e. a schematic outline) of the data units are displayed in order of priority. The title of the data unit currently being played back is emphasized in the display. If there is no particular instruction from the user, the data units are played back in an order that corresponds with this list.

When a user looks at this list and wishes to see a data unit at the bottom straight away, then if the user moves the mouse pointer 103 and clicks on the title of the desired data unit, then the playback of that data unit begins immediately. Moreover, a stop button 101 and a playback button 102 are displayed. By clicking on the stop button 101, the user is able to stop the playback of a data unit. By clicking on the playback button 102, the user is able to restart the playback of the data unit.

As described above, according to the eighth embodiment, the user input section 98 requests an alteration of the presentation process data based on an instruction from a user; the data unit transmission requesting section 96 alters the presentation process data and makes a data unit transmission request based on the altered presentation process data; and the playback section 97 plays back data units from the buffer device 91. As a result, it is possible to play back the data in an even more suitable order.

### Ninth Embodiment:

A ninth embodiment of the present invention is structured such that, in the eighth embodiment, the source data is prepared in the server and can be used at a terminal in an extremely short time, and it is possible for data to be processed in response to the requests for each session and delivered to a terminal. Note that the fundamental structure and operation are the same as those of the eighth embodiment and portions that are the same as those in the third embodiment are given the same descriptive symbols and a description thereof is omitted. Here, only those portions that are different are described.

Fig. 54 is a view showing the structure of the information delivery system according to the ninth embodiment of the present invention. This information delivery system is provided with a buffer device 111 for receiving source data and contents describing data from the server 82, and performing processing to create presentation process data as soon as a data unit and the contents describing data thereof have been collected, and also for updating the presentation process data as appropriate before delivering it. This information delivery system is also provided with a terminal 112 for receiving the appropriately updated presentation process data and making transmission requests. The remainder of the structure and operation of the buffer device 111 and the terminal 112 are the same as those of the buffer device 91 and the terminal 92 of the eighth embodiment.

Fig. 55 is a view showing the structure of the buffer device 111 shown in Fig. 53 . The buffer device 111 is provided with a presentation process data creation section 113 for performing processing to create presentation process data as soon as a data unit and the contents describing data there of have been collected, and also for updating the presentation process data as appropriate, and with a transreceiving section 114 for transmitting the updated presentation process data to a terminal 112 each time the presentation process data creation section 113 updates the presentation process data.

Fig. 56 is a view showing the structure of the terminal 112 shown in Fig. 53. The terminal 112 is provided with a transreceiving section 115 for receiving presentation process data that has been updated as appropriate and a data unit transmission requesting section 116 for altering the order of the requested data units as appropriate on the basis of the updated presentation process data received by the transreceiving section 115.

Each time the receiving section 11 receives a data unit and new contents describing data is input into the contents describing data holding section 13, the presentation process data creation section 113 performs processing to create presentation process data and update the presentation process data. Each time the presentation process data is updated, the transreceiving section 114 transmits the updated presentation process data to the appropriate terminal device 112. Alternatively, it is also possible for only the altered portion of the presentation' process data to be transmitted.

Moreover, it is also possible for the order of the data units not to be changed on the buffer device side, but for information on the evaluation values to be included in the presentation process and for the data units to be played back in an order that is based on the evaluation values on the terminal 112 side. On the terminal 112 side the presentation process data is updated when necessary based on the degree of priority described in the presentation process data from the buffer device 111, and a request for data units is made to the buffer device 111 in sequence from the data unit having the highest degree of priority based on the updated presentation process data. The transreceiving section 114 then delivers the data units in accordance with the request from the terminal 112.

The operation of the ninth embodiment in the above described structure will now be described with reference to Figs. 57 to 60. Fig. 57 is a flow chart showing the flow of the operation of the presentation process data creation section 113 of the buffer device 111 according to the ninth embodiment. In the operation of the presentation process data creation section 113, presentation process data is created after step S13 (step Sill) . As a result, presentation process data is created each time contents describing data is read.

Fig. 58 is a flow chart showing the flow of the operation of the transreceiving section 114 of the buffer device 111 according to the ninth embodiment. In the operation of the transreceiving section 114, the processing to transmit the presentation process data is performed in parallel with steps S54 to S58. In this processing to transmit the presentation process data, appropriate presentationprocess data is input from the presentation process data creation section 113 (step S112), and then transmitted to a terminal 112 (step S113). Steps S112 and S113 are then repeated until the transmission is completed.

Fig. 59 is a flowchart showing the flow of the operation of the terminal 112 in the ninth embodiment. In the operation of the terminal 112, after a request for on-demand delivery has been made in step S42, the presentation process data transmitted as is appropriate from the buffer device 111 is received (step S115), and the presentation process data held in the presentation process data holding section 46 is updated. In step S44, if the receiving of the data unit is not completed, the routine returns to step S101.

Fig. 60 is a view for describing the updating of the presentation process data according to the ninth embodiment. Here, a case is shown of a data delivery to the User 1 corresponding to the session information shown in Fig. 45. Firstly, the presentation process data D21 for topic 1 only is transmitted to the terminal 112. Next, this is updated to the presentation process data D22 in the order of topic 1 and topic 2.

Next, topic 3 is omitted because the evaluation value of topic 3 does not meet a predetermined value, and the data is updated to presentation process data D22 in the order of topic 1, topic 2, and topic 4. Next, if it is possible to use the data unit for topic 5, which has a high evaluation value, before the data unit for topic 2 is played back, the data is updated to presentation process data D24 that gives an instruction for the topic 5 to be transmitted before topic 2.

As described above, according to the ninth embodiment, because the presentation process data creation section 113 creates presentation process data in which the level of priority is set in each data unit and also updates the presentation process data each time a new data unit is defined, and because the transreceiving section 114 updates the order of the data delivery in accordance with the level of priority of the data units each time the presentation process is updated and then performs the delivery, the source data can be used by the terminal 112 within an extremely short time after having been prepared in the server 82, and it also becomes possible to process data to match the request for each session and deliver it to the terminal 112. The source data is particularly effective in the case of news programs and the like in which the demands for the latest information are particularly strong.

### Tenth Embodiment:

A tenth embodiment of the present invention is structured such that, in the first to ninth embodiments, the buffer device creates contents describing data based on the source data. By creating the contents describing data in the buffer device based on the source data, there is no need for the operation of preparing the contents describing data in the server. Note that the fundamental structure and operation are the same as those of the first to ninth embodiments and portions that are the same as those in the first to ninth embodiments are given the same descriptive symbols and a description thereof is omitted. Here, only those portions that are different are described.

Fig. 61 is a view showing the structure of the information delivery system according to the tenth embodiment of the present invention. This information delivery system is provided with a buffer device 121 for creating contents describing data based on the source data. The buffer device 121 analyzes the source data to create the contents describing data. Fig. 62 is a view showing the structure of the buffer device 121 shown in Fig. 61. The buffer device 121 is provided with a detection section 123 for analyzing the source data and creating the contents describing data; a contents describing data holding section 124 for holding the contents describing data created by the detection section 123; and a display input section 125 for performing the setting and altering of the contents describing data held in the contents describing data holding section 124.

The operation of the tenth embodiment in the above described structure will now be described with reference to Figs. 63 and 64. Fig. 63 is a flow chart showing the flow of operation of the detection section 123 of the buffer device 121 of the tenth embodiment. Firstly, the detection section 123 waits until new source data is received and held in the source data holding section 12 (step S121). Next, once new source data is held in the source data holding section 12, the detection section receives the input of that source data (step S122). Next, the data units are extracted from the input source data.

Using changes in scene or in topic as cues, the data units are defined by taking one change point as the starting time of a data unit and the next change point as the ending time of a data unit (step S123). Next, attribute information is set for each of the defined data units (step S124). For example, for a news program, marks showing the field thereof, such as "Politics", "Sports", and the like may be inserted on the first screen of each topic. By registering specific marks such as these in advance and then matching the patterns of the registered marks with marks in the source data, it is possible to detect the appearance of the specific marks.

In this way, when a change in the attributes is detected (i.e. when the determination in step S125 is affirmative), in the case of a data unit for which a specific mark has appeared, the name of the field that corresponds to the type of mark is set as an attribute thereof (step S126). Moreover, it is also possible for the field to be determined by recognizing the voice of the announcer or by recognizing the characters of the headlines displayed on the screen. If, however, no change in the attributes is detected (i.e. if the determination in step S126 is negative), the routine returns to step S121 and the source data is sequentially input and analyzed until a change on the attributes is detected.

Furthermore, by displaying on a screen the contents describing data created by analyzing the source data in this way, it is possible to modify the time spans of each data unit and supplement the attributes manually. Fig. 64 is a flow chart showing the flow of the operation of the display input section 125 of the buffer device 121 according to the tenth embodiment. In the operation of the display input section 125, when a request to set or alter the contents describing data is made by an operator, the processing to set or alter the contents describing data is started.

In this processing, the display input section 125 firstly receives the input of contents describing data from the contents describing data holding section 124 (step S131) and then displays this data on a display unit (not shown) (step S132). Next, a determination is made as to whether or not there has been an input from the operator via a keyboard or the like (not shown) specifying the contents describing data (step S133). If there has been an input from the operator specifying the contents describing data, the data unit corresponding to that contents describing data is played back on the not shown display unit (step S134).

Next, it is determined whether or not an input to set or alter (i.e. modify) the contents describing data has been made by the operator. If an input to set or alter the contents describing data has been made by the operator, the contents describing data are set or altered in accordance with the input (step S137). Next, it is determined whether or not an input instructing that the processing to set or alter the contents describing data be ended has been made by the operator (step S135). Steps S132 to S135 are then repeated until an input instructing that the processing to set or alter the contents describing data be ended is made.

As described above, according to the tenth embodiment, because the detection section 123 detects points of change in a scene or topic from the source data and defines the time span of the data units based on this, it is possible for the time spans of the data units to be defined automatically. In addition, because the detection section 123 defines the attributes of the data units by detecting predetermined patterns from the source data, it is possible for the attributes of the data units to be defined automatically.

Moreover, because the display input section 125 displays the contents describing data to the user, receives the input of the user's instructions, and holds in the contents describing data holding section 124 contents describing data that it has modified on the basis of the user's instructions, it is possible to create or modify contents describing data manually in the buffer device. In addition, if a function of relating data related to the data unit is set as one of the attributes, then this structure is effective in cases when related information such as the advertisements or the like of each buffer device is inserted in each of the buffer devices.

Note that it is also possible for a program for actualizing the playback and delivery methods according to the above described first to tenth embodiment to be stored on a transportable recording medium such as a magnetic disk such as a floppy disk, semiconductor memory (including inbuilt semiconductor memory such as cartridges and PC cards) such as ROM, EPROM, EEPROM, and flash ROM, optical disks such as a CD-ROM or DVD, magneto-optical disks such as an MO and then for this program recorded on the recording medium to be installed on a fixed recording medium such as ROM, RAM, or a hard disk or the like built into a server, buffer device, or terminal thereby furnishing the buffer device or terminal with the above described delivery and playback functions.

Moreover, it is also possible to transfer the program via a network such as a LAN, WAN, or the Internet and install the transferred program on a fixed recording medium such as a server, buffer device, or terminal. In addition, this program is not necessarily limited to one that is structured as a single unit, but may also have a separated structure formed by a plurality of modules and libraries. It may also be able to achieve these functions by working in cooperation with a separate program such as an OS or the like.

As described above, according to the present invention, the receiving unit receives the unit information from a server device; the delivery destination information storage unit stores the delivery destination information that relates to the destination of a delivery for each delivery destination; the additional information storage unit stores additional information to be added to the unit information; the transmission information creation unit creates the transmission information that instructs that the additional information stored in the additional information storage unit is to be added to the unit information received by the receiving unit and then transmitted, based on the delivery destination information stored in the delivery destination information storage unit as well as unit attribute information of the unit information received by the receiving unit; and the transmitting unit adds additional information stored in the additional information storage unit to the unit information received by the receiving unit based on the transmission information created by the transmission information creation unit, and transmits the unit information to which the additional information has been added to the terminal device. As a result, it is possible to perform processing of source data in the buffer device. Therefore, the effects are achieved of being able to perform processing on source data that is appropriate to each destination of a delivery by the buffer device as well as toprovide a stable information delivery service, whilebeing able to perform the source data processing service independently of the source data providing service.

Moreover, the receiving unit receives the unit information from a server device; the delivery destination information storage unit stores the delivery destination information that relates to the destination of a delivery for each delivery destination; the additional information storage unit stores additional information to be added to the unit information; the transmission information creation unit creates the transmission information that instructs that the additional information stored in the additional information storage unit is to be added to the unit information received by the receiving unit and then transmitted, based on the delivery destination information stored in the delivery destination information storage unit as well as unit attribute information that relates to time spans and attributes of the unit information received by the receiving unit; and the transmitting unit transmits the transmission information created by the transmission information creation unit to the terminal device and, in accordance with a transmission request from the terminal device that is based on the transmission information, adds additional information stored in the additional information storage unit to units of information received by the receiving unit and transmits units of information to which the additional information has been added to the terminal device. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Furthermore, the receiving unit receives the unit information from a server device; the delivery destination information storage unit stores the delivery destination information that relates to the destination of a delivery for each delivery destination; the additional information storage unit stores additional information to be added to the unit information; the transmission information creation unit creates the transmission information that instructs that the additional information stored in the additional information storage unit is to be added to the unit information received by the receiving unit and then transmitted based on the delivery destination information stored in the delivery destination information storage unit as well as unit attribute information that relates to time spans and attributes of the unit information received by the receiving unit; the information-unit transmitting unit adds additional information stored in the additional information storage unit to the unit information received by the receiving unit based on the transmission information created by the transmission information creation unit and transmits the unit information to which the additional information has been added to the another buffer device; the new-unit attribute information creation unit creates new unit attribute information that corresponds to unit information transmitted by the transmitting unit; and the new-unit attribute information transmitting unit transmits the new unit attribute information created by the new-unit attribute information creation unit to the another buffer device. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Moreover, the unit information detection unit detects unit information whose unit attribute information meets predetermined conditions based on the delivery destination information stored in the delivery destination information storage unit and the unit attribute information in the unit information received by the receiving unit; and the transmission information creation unit creates the transmission information that instructs that the additional information stored in the additional information storage unit is to be added to the unit information detected by the information unit detecting unit and then transmitted. As a result, it is possible to add the additional information to the appropriate position in accordance with the delivery destination. Therefore, the effect is achieved of being able to process continuous information even more appropriately.

Furthermore, the additional attribute information storage unit stores additional attribute information that relates to attributes of the additional information; the additional information detecting unit detects additional information whose additional attribute information meets predetermined conditions based on the additional attribute information stored in the additional attribute information storage unit and at least one of the unit attribute information in the unit information received by the receiving unit and the delivery destination information stored in the delivery destination information storage unit; and the transmission information creation unit creates the transmission information that instructs that the additional information detected by the additional information detecting unit is to be added to the unit information received by the receiving unit and then transmitted. As a result, it is possible to add the appropriate additional information in accordance with the delivery destination. Therefore, the effect is achieved of being able to process continuous information even more appropriately.

Moreover, the receiving unit receives the unit information from the server device; the delivery destination information storage unit stores the delivery destination information that relates to a destination of a delivery of each delivery destination; the link information storage unit stores the link information used for forming a link to the additional information that is to be added to the unit information; the transmission information creation unit creates the transmission information that instructs that the link information stored in the link information storage unit is to be added to the unit information received by the receiving unit and then transmitted based on the delivery destination information stored in the delivery destination information storage unit as well as unit attribute information that relates to time spans and attributes of the unit information received by the receiving unit; and the transmitting unit adds the link information stored in the link information storage unit to the unit information received by the receiving unit based on the transmission information created by the transmission information creation unit, and transmits the unit information to which the link information has been added to the terminal device. As a result, it is possible for source data to be processed in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Furthermore, the receiving unit receives the unit information from the server device; the delivery destination information storage unit stores the delivery destination information that relates to a destination of a delivery of each delivery destination; the link information storage unit stores the link information used for forming a link to the additional information that is to be added to unit information; the transmission information creation unit creates the transmission information that instructs that the link information stored in the link information storage unit is to be added to the unit information received by the receiving unit and then transmitted based on the delivery destination information stored in the delivery destination information storage unit as well as unit attribute information that relates to time spans and attributes of the unit information received by the receiving unit; and the transmitting unit transmits the transmission information created by the transmission information creation unit to the terminal device and, in accordance with a transmission request from the terminal device that is based on the transmission information, adds the link information stored in the link information storage unit to the unit information received by the receiving unit and transmits the unit information to which the link information has been added to the terminal device. As a result, it is possible for source data to be processed in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Moreover, the receiving unit receives the unit information from the buffer device; the delivery destination information storage unit stores the delivery destination information that relates to a destination of a delivery of each delivery destination; the link information storage unit stores the link information to additional information that is to be added to the unit information; the transmission information creation unit creates the transmission information that instructs that the link information stored in the link information storage unit is to be added to the unit information received by the receiving unit and then transmitted based on the delivery destination information stored in the delivery destination information storage unit as well as unit attribute information that relates to time spans and attributes of the unit information received by the receiving unit; the information-unit transmitting unit adds the link information stored in the link information storage unit to the unit information received by the receiving unit based on the transmission information created by the transmission information creation unit, and transmits the unit information to which the link information has been added to the another buffer device; the new-unit attribute information creation unit creates new unit attribute information that corresponds to unit information transmitted by the transmitting unit; and the new-unit attribute information transmitting unit transmits the new unit attribute information created by the new-unit attribute information creation unit to the another buffer device. As a result, it is possible for source data to be processed in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Furthermore, the information unit detecting unit detects unit information whose unit attribute information fulfills predetermined conditions based on the delivery destination information stored in the delivery destination information storage unit and the unit attribute information in the unit information received by the receiving unit; and the transmission information creation unit creates the transmission information that instructs that the link information stored in the link information storage unit be added to unit information detected by the information unit detecting unit and then transmitted. As a result, it is possible for additional information to be added to the appropriate position in accordance with the delivery destination. Therefore, the effect is achieved of being able to process continuous information even more appropriately.

Moreover, the additional attribute information storage unit stores additional attribute information that relates to attributes of the additional information; the additional information detecting unit detects link information used for forming a link to the additional information whose additional attribute information meets predetermined conditions based on the additional attribute information stored in the additional attribute information storage unit and at least one of the unit attribute information in the unit information received by the receiving unit and the delivery destination information stored in the delivery destination information storage unit; and the transmission information creation unit creates the transmission information that instructs that link information detected by the additional information detecting unit is to be added to the unit information received by the receiving unit and then transmitted. As a result, it is possible for the appropriate additional information in accordance with the delivery destination. Therefore, the effect is achieved of being able to process continuous information even more appropriately.

Furthermore, the receiving unit receives the unit information from the server device; the delivery destination information storage unit stores the delivery destination information that relates to a destination of a delivery of each delivery destination; the priority degree information creation unit creates information about a degree of priority of the information unit received by the receiving unit based on the delivery destination information stored in the delivery destination information storage unit as well as unit attribute information that relates to time spans and attributes of the unit information received by the receiving unit; the transmission information creation unit creates the transmission information that instructs that only the unit information whose degree of priority meets predetermined conditions is to be transmitted based on the priority degree information created by the priority degree creation unit; and the transmitting unit transmits only the unit information whose degree of priority meets the predetermined conditions based on the transmission information created by the transmission information creation unit. As a result, it is possible for source data to be processed in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Moreover, the receiving unit receives the unit information from the server device; the delivery destination information storage unit stores the delivery destination information that relates to a destination of a delivery of each delivery destination; the priority degree information creation unit creates information about a degree of priority of the information unit received by the receiving unit based on the delivery destination information stored in the delivery destination information storage unit as well as unit attribute information that relates to time spans and attributes of the unit information received by the receiving unit; the transmission information creation unit creates the transmission information showing a sequence for transmitting unit information received by the receiving unit based on the priority degree information created by the priority degree creation unit; and the transmitting unit arranges and transmits unit information in a sequence that is based on the transmission information created by the transmission information creation unit. As a result, it is possible for source data to be processed in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Furthermore, the receiving unit receives the unit information from the server device; the delivery destination information storage unit stores the delivery destination information that relates to a destination of a delivery of each delivery destination; the priority degree information creation unit creates information about a degree of priority of the information unit received by the receiving unit based on the delivery destination information stored in the delivery destination information storage unit as well as unit attribute information that relates to time spans and attributes of the unit information received by the receiving unit; the transmission information creation unit creates the transmission information that instructs that only the unit information whose degree of priority meets predetermined conditions is to be transmitted based on the priority degree information created by the priority degree creation unit; and the transmitting unit transmits the transmission information created by the transmission information creation unit to the terminal device and, in accordance with a transmission request from the terminal device that is based on the transmission information, transmits only the unit information whose degree of priority meets the predetermined conditions. As a result, it is possible for source data to be processed in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Moreover, the receiving unit receives the unit information from the server device; the delivery destination information storage unit stores the delivery destination information that relates to a destination of a delivery of each delivery destination; the priority degree information creation unit creates information about a degree of priority of the information unit received by the receiving unit based on the delivery destination information stored in the delivery destination information storage unit as well as unit attribute information that relates to time spans and attributes of the unit information received by the receiving unit; the transmission information creation unit creates the transmission information showing a sequence for transmitting unit information received by the receiving unit based on the priority degree information created by the priority degree creation unit; and the transmitting unit transmits the transmission information created by the transmission information creation unit to the terminal device and arranges and transmits unit information in a sequence that is in accordance with a transmission request from the terminal device that is based on the transmission information. As a result, it is possible for source data to be processed in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Furthermore, when the receiving unit receives the unit information and the priority degree information creation unit creates information on the degree of priority of those unit information, based on this information on the degree of priority, the transmission information creation unit creates new transmission information that updates the sequence of transmission shown by the previously created transmission information. As a result, it is possible for the data units to be transmitted as the transmission information is being sequentially updated even while the buffer device is still receiving continuous information from the server device. Therefore, the effect is achieved of being able to begin playback in a terminal at an early stage.

Moreover, the transmission information receiving unit receives transmission information from the transmission unit; the terminal input unit inputs an instruction from a user to alter the sequence of transmission shown by the transmission information received by the transmission information receiving unit; the transmission requesting unit makes a transmission request to the transmission unit for unit information to be transmitted in the altered sequence based on the instruction from the user input by the terminal input unit; and the receiving playback unit receives and also plays back unit information transmitted from the transmission unit in accordance with a transmission request made by the transmission requesting unit. As a result, it is possible to alter the sequence of the unit information to a sequence desired by the user. Therefore, the effect is achieved of being able to transmit unit information in an even more appropriate sequence.

Furthermore, the priority degree information creation unit creates priority degree information based on the information on the degree of importance that is contained in the unit attribute information of the unit information received by the receiving unit and on the information on the degree of interest of the delivery destination in each attribute that is contained in the delivery destination information stored in the delivery destination information storage unit. As a result, it is possible to create priority degree information in accordance with the degree of importance of the unit information and the degree of interest of the delivery destination. Therefore, the effect is achieved of being able to create information having an even more appropriate degree of priority.

Moreover, the detecting unit detects attributes and changes in the attributes from continuous information received by the receiving unit; and, based on the results of a detection by the detecting unit, the unit attribute information creation unit defines the unit information contained in the continuous information received by the receiving unit and creates unit attribute information for these unit information. As a result, it is possible to create unit attribute information in the buffer device. Therefore, the effect is achieved of being able to do away with the need for the server device or the like to create unit attribute information.

Furthermore, the detecting unit detects changes in attributes by detecting change points in topics or scenes from the continuous information. As a result, the effect is achieved of it becoming possible to detect changes in the attributes even more reliably and easily.

Moreover, the detecting unit detects attributes by detecting predetermined patterns linked to the attributes from the continuous information. As a result, the effect is achieved of it becoming possible to detect the attributes of continuous information even more reliably and easily.

Furthermore, the input unit inputs an instruction from a user to modify the unit attribute information; and the unit attribute information modifying unit modifies the unit attribute information based on the instruction from the user input by the input unit. As a result, it becomes possible to modify the unit attribute information. Therefore, the effect is achieved of being able to transmit even more appropriate continuous information.

Moreover, unit information is received in the receiving step; delivery destination information that relates to a destination of a delivery is stored in the delivery destination information storage step of each delivery destination; additional information that is to be added to the unit information is stored in the additional information storage step; transmission information that instructs that the additional information stored in the additional information storage step be added to the unit information received in the receiving step and then transmitted is created in the transmission information creation step based on the delivery destination information stored in the delivery destination information storage step as well as unit attribute information that relates to time spans and attributes of unit information received in the receiving step; and, based on the transmission information created in the transmission information creation step, additional information stored in the additional information storage step is added in the transmitting step to the unit information received in the receiving step and unit information to which the additional information has been added are transmitted. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Furthermore, unit information is received in the receiving step; delivery destination information that relates to a destination of a delivery is stored in the delivery destination information storage step of each delivery destination; additional information that is to be added to the unit information is stored in the additional information storage step; based on the delivery destination information stored in the delivery destination information storage step as well as unit attribute information that relates to time spans and attributes of unit information received in the receiving step, transmission information that instructs that the additional information stored in the additional information storage step be added to the unit information received in the receiving step and then transmitted is created in the transmission information creation step; and transmission information created in the transmission information creation step is transmitted in the transmitting step to the delivery destination and, in accordance with a transmission request from the delivery destination that is based on the transmission information, additional information stored in the additional information storage step is added to the unit information received in the receiving step and unit information to which the additional informatic has been added are transmitted. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service. Therefore, the effects are achieved of being able to perform processing on source data that is appropriate to each destination of a delivery by the buffer device as well as to provide a stable information delivery service, while being able to perform the source data processing service independently of the source data providing service.

Moreover, unit information is received in the receiving step; delivery destination information that relates to a destination of a delivery is stored in the delivery destination information storage step of each delivery destination; additional information that is to be added to the unit information is stored in the additional information storage step; based on the delivery destination information stored in the delivery destination information storage step as well as unit attribute information that relates to time spans and attributes of unit information received in the receiving step, transmission information that instructs that the additional information stored in the additional information storage step be added to the unit information received in the receiving step and then transmitted is created in the transmission information creation step; based on the transmission information created in the transmission information creation step, additional information stored in the additional information storage step is added to the unit information received in the receiving step and unit information to which the additional information has been added are transmitted in the information unit transmitting step; new unit attribute information that corresponds to the unit information transmitted in the transmitting step is created in the new-unit attribute information creation step; and new unit attribute information created in the new-unit attribute information creation step is transmitted in the new-unit attribute information transmitting step. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Furthermore, unit information is received in the receiving step; delivery destination information that relates to a destination of a delivery is stored in the delivery destination information storage step of each delivery destination; link information for forming a link to the additional information to be added to the unit information is stored in the link information storage step; based on the delivery destination information stored in the delivery destination information storage step as well as unit attribute information that relates to time spans and attributes of unit information received in the receiving step, transmission information that instructs that the link information stored in the link information storage step be added to the unit information received in the receiving step and then transmitted is created in the transmission information creation step; and, based on the transmission information created in the transmission information creation step, link information stored in the link information storage step is added in the transmitting step to the unit information received in the receiving step and unit information to which the additional information has been added are transmitted. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Moreover, unit information is received in the receiving step; delivery destination information that relates to a destination of a delivery is stored in the delivery destination information storage step of each delivery destination; link information for forming a link to the additional information to be added to the unit information is stored in the link information storage step; based on the delivery destination information stored in the delivery destination information storage step as well as unit attribute information that relates to time spans and attributes of unit information received in the receiving step, transmission information that instructs that the link information stored in the link information storage step be added to the unit information received in the receiving step and then transmitted is created in the transmission information creation step; and transmission information created in the transmission information creation step is transmitted in the transmitting step to the delivery destination and, in accordance with a transmission request from the delivery destination that is based on the transmission information, link information stored in the link information storage step is added to the unit information received in the receiving step and unit information to which the link information has been added are transmitted. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Moreover, unit information is received in the receiving step; delivery destination information that relates to a destination of a delivery is stored in the delivery destination information storage step of each delivery destination; link information to the additional information to be added to the unit information is stored in the link information storage step; based on the delivery destination information stored in the delivery destination information storage step as well as unit attribute information that relates to time spans and attributes of unit information received in the receiving step, transmission information that instructs that the link information stored in the link information storage step be added to the unit information received in the receiving step and then transmitted is created in the transmission information creation step; based on the transmission information created in the transmission information creation step, link information stored in the link information storage step is added to the unit information received in the receiving step and unit information to which the link information has been added are transmitted in the information unit transmitting step; new unit attribute information that corresponds to the unit information transmitted in the transmitting step is created in the new-unit attribute information creation step; and new unit attribute information created in the new-unit attribute information creation step is transmitted in the new-unit attribute information transmitting step. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Furthermore, unit information is received in the receiving step; delivery destination information that relates to a destination of a delivery is stored in the delivery destination information storage step of each delivery destination; based on the delivery destination information stored in the delivery destination information storage step as well as unit attribute information that relates to time spans and attributes of unit information received in the receiving step, information about a degree of priority of the information unit received in the receiving step is created in the priority degree information creation step; based on priority degree information created in the priority degree creation step, transmission information that instructs that only the unit information whose degree of priority meets predetermined conditions is to be transmitted is created in the transmission information creation step; and, based on the transmission information created in the transmission information creation step, only unit information whose degree of priority meets the predetermined conditions are transmitted in the transmitting step. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Moreover, unit information is received in the receiving step; delivery destination information that relates to a destination of a delivery is stored in the delivery destination information storage step of each delivery destination; based on the delivery destination information stored in the delivery destination information storage step as well as unit attribute information that relates to time spans and attributes of unit information received in the receiving step, information about a degree of priority of the information unit received in the receiving step is created in the priority degree information creation step; based on priority degree information created in the priority degree creation step, transmission information showing a sequence for transmitting the unit information received in the receiving step is created in the transmission information creation step; and unit information are arranged and transmitted in the transmitting step in a sequence that is based on the transmission information created in the transmission information creation step. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Furthermore, unit information is received in the receiving step; delivery destination information that relates to a destination of a delivery is stored in the delivery destination information storage step of each delivery destination; based on the delivery destination information stored in the delivery destination information storage step as well as unit attribute information that relates to time spans and attributes of unit information received in the receiving step, information about a degree of priority of the information unit received in the receiving step is created in the priority degree information creation step; based on priority degree information created in the priority degree creation step, transmission information that instructs that only the unit information whose degree of priority meets predetermined conditions is to be transmitted is created in the transmission information creation step; and transmission information created in the transmission information creation step is transmitted in the transmitting step to a delivery destination and, in accordance with a transmission request from the delivery destination that is based on the transmission information, only unit information whose degree of priority meets the predetermined conditions are transmitted. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Moreover, unit information is received in the receiving step; delivery destination information that relates to a destination of a delivery is stored in the delivery destination information storage step of each delivery destination; based on the delivery destination information stored in the delivery destination information storage step as well as unit attribute information that relates to time spans and attributes of unit information received in the receiving step, information about a degree of priority of the information unit received in the receiving step is created in the priority degree information creation step; based on priority degree information created in the priority degree creation step, transmission information showing a sequence for transmitting the unit information received in the receiving step is created in the transmission information creation step; and transmission information created in the transmission information creation step is transmitted in the transmitting step to the delivery destination and unit information are arranged and transmitted in a sequence that is in accordance with a transmission request from the delivery destination that is based on the transmission information. As a result, it is possible to perform processing of source data in the buffer device. Therefore, the effects are achieved of being able to perform processing on source data that is appropriate to each destination of a delivery by the buffer device as well as to provide a stable information delivery service, while being able to perform the source data processing service independently of the source data providing service.

Moreover, by forming the methods according to the above described aspects of the invention as programs that can be executed on a computer, the effect is achieved of it becoming possible to perform the operation of the methods according to the above described aspects of the invention on a computer.

## Claims

1. An information delivery system comprising:
a server device connected to at least one terminal device via a buffer device, wherein the server device delivers to the terminal device via the buffer device an information that is temporally continuous and includes a plurality of unit information, wherein the buffer device includes,
a receiving unit which receives unit information from the server device;
a delivery destination information storage unit which stores delivery destination information that relates to a destination of a delivery of each delivery destination;
an additional information storage unit for storing additional information that is to be added to the unit information;
a transmission information creation unit that, based on the delivery destination information stored in the delivery destination information storage unit as well as unit attribute information that relates to time spans and attributes of the unit information received by the receiving unit, creates transmission information that instructs that the additional information stored in the additional information storage unit is to be added to the unit information received by the receiving unit and then transmitted; and
a transmitting unit that, based on the transmission information created by the transmission information creation unit, adds additional information stored in the additional information storage unit to the unit information received by the receiving unit and transmits the unit information to which the additional information has been added to the terminal device.

2. An information delivery system comprising:
a server device connected to at least one terminal device via a buffer device, wherein the server device delivers to the terminal device via the buffer device an information that is temporally continuous and includes a plurality of unit information, wherein the buffer device includes,
a receiving unit which receives unit information from the server device;
a delivery destination information storage unit which stores delivery destination information that relates to a destination of a delivery of each delivery destination;
an additional information storage unit for storing additional information that is to be added to the unit information;
a transmission information creation unit that, based on the delivery destination information stored in the delivery destination information storage unit as well as unit attribute information that relates to time spans and attributes of the unit information received by the receiving unit, creates transmission information that instructs that the additional information stored in the additional information storage unit is to be added to the unit information received by the receiving unit and then transmitted; and
a transmitting unit that transmits the transmission information created by the transmission information creation unit to the terminal device and, in accordance with a transmission request from the terminal device that is based on the transmission information, adds additional information stored in the additional information storage unit to the unit information received by the receiving unit and transmits the unit information to which the additional information has been added to the terminal device.

3. An information delivery system comprising:
a server device connected to at least one terminal device via a plurality of buffer devices, wherein the server device delivers to the terminal device via the buffer devices an information that is temporally continuous and includes a plurality of unit information, wherein a buffer device that transmits the unit information to an another buffer device includes,
a receiving unit which receives unit information from the server device;
a delivery destination information storage unit which stores delivery destination information that relates to a destination of a delivery of each delivery destination;
an additional information storage unit for storing additional information that is to be added to the unit information;
a transmission information creation unit that, based on the delivery destination information stored in the delivery destination information storage unit as well as unit attribute information that relates to time spans and attributes of the unit information received by the receiving unit, creates transmission information that instructs that the additional information stored in the additional information storage unit is to be added to the unit information received by the receiving unit and then transmitted;
an information-unit transmitting unit that, based on the transmission information created by the transmission information creation unit, adds additional information stored in the additional information storage unit to the unit information received by the receiving unit and transmits the unit information to which the additional information has been added to the another buffer device;
a new-unit attribute information creation unit which creates new unit attribute information that corresponds to unit information transmitted by the transmitting unit; and
a new-unit attribute information transmitting unit which transmits the new unit attribute information created by the new-unit attribute information creation unit to the another buffer device.

4. An information delivery system comprising:
a server device connected to at least one terminal device via a buffer device, wherein the server device delivers to the terminal device via the buffer device an information that is temporally continuous and includes a plurality of unit information, wherein the buffer device includes,
a receiving unit which receives unit information from the server device;
a delivery destination information storage unit which stores delivery destination information that relates to a destination of a delivery of each delivery destination;
a link information storage unit which stores link information used for forming a link to the additional information that is to be added to the unit information;
a transmission information creation unit that, based on the delivery destination information stored in the delivery destination information storage unit as well as unit attribute information that relates to time spans and attributes of the unit information received by the receiving unit, creates transmission information that instructs that the link information stored in the link information storage unit is to be added to the unit information received by the receiving unit and then transmitted; and
a transmitting unit that, based on the transmission information created by the transmission information creation unit, adds the link information stored in the link information storage unit to the unit information received by the receiving unit and transmits the unit information to which the link information has been added to the terminal device.

5. An information delivery system comprising:
a server device connected to at least one terminal device via a buffer device, wherein the server device delivers to the terminal device via the buffer device an information that is temporally continuous and includes a plurality of unit information, wherein the buffer device includes,
a receiving unit which receives unit information from the server device;
a delivery destination information storage unit which stores delivery destination information that relates to a destination of a delivery of each delivery destination;
a link information storage unit which stores link information used for forming a link to the additional information that is to be added to unit information;
a transmission information creation unit that, based on the delivery destination information stored in the delivery destination information storage unit as well as unit attribute information that relates to time spans and attributes of the unit information received by the receiving unit, creates transmission information that instructs that the link information stored in the link information storage unit is to be added to the unit information received by the receiving unit and then transmitted; and
a transmitting unit that transmits the transmission information created by the transmission information creation unit to the terminal device and, in accordance with a transmission request from the terminal device that is based on the transmission information, adds the link information stored in the link information storage unit to the unit information received by the receiving unit and transmits the unit information to which the link information has been added to the terminal device.

6. An information delivery system comprising:
a server device connected to at least one terminal device via a buffer device, wherein the server device delivers to the terminal device via the buffer device an information that is temporally continuous and includes a plurality of unit information, wherein a buffer device that transmits the unit information to an another buffer device includes,
a receiving unit which receives unit information from the server device;
a delivery destination information storage unit which stores delivery destination information that relates to a destination of a delivery of each delivery destination;
a link information storage unit which stores link information to additional information that is to be added to the unit information;
a transmission information creation unit that, based on the delivery destination information stored in the delivery destination information storage unit as well as unit attribute information that relates to time spans and attributes of the unit information received by the receiving unit, creates transmission information that instructs that the link information stored in the link information storage unit is to be added to the unit information received by the receiving unit and then transmitted;
an information-unit transmitting unit that, based on the transmission information created by the transmission information creation unit, adds the link information stored in the link information storage unit to the unit information received by the receiving unit and transmits the unit information to which the link information has been added to the another buffer device;
a new-unit attribute information creation unit which creates new unit attribute information that corresponds to unit information transmitted by the transmitting unit; and
a new-unit attribute information transmitting unit which transmits the new unit attribute information created by the new-unit attribute information creation unit to the another buffer device.

7. An information delivery system comprising:
a server device connected to at least one terminal device via a buffer device, wherein the server device delivers to the terminal device via the buffer device an information that is temporally continuous and includes a plurality of unit information, wherein the buffer device includes,
a receiving unit which receives unit information from the server device;
a delivery destination information storage unit which stores delivery destination information that relates to a destination of a delivery of each delivery destination;
a priority degree information creation unit that, based on the delivery destination information stored in the delivery destination information storage unit as well as unit attribute information that relates to time spans and attributes of the unit information received by the receiving unit, creates information about a degree of priority of the information unit received by the receiving unit;
a transmission information creation unit that, based on the priority degree information created by the priority degree creation unit, creates transmission information that instructs that only the unit information whose degree of priority meets predetermined conditions is to be transmitted; and
a transmitting unit that, based on the transmission information created by the transmission information creation unit, transmits only the unit information whose degree of priority meets the predetermined conditions.

8. An information delivery system comprising:
a server device connected to at least one terminal device via a buffer device, wherein the server device delivers to the terminal device via the buffer device an information that is temporally continuous and includes a plurality of unit information, wherein the buffer device includes,
a receiving unit which receives unit information from the server device;
a delivery destination information storage unit which stores delivery destination information that relates to a destination of a delivery of each delivery destination;
a priority degree information creation unit that, based on the delivery destination information stored in the delivery destination information storage unit as well as unit attribute information that relates to time spans and attributes of the unit information received by the receiving unit, creates information about a degree of priority of the information unit received by the receiving unit;
a transmission information creation unit that, based on the priority degree information created by the priority degree creation unit, creates transmission information showing a sequence for transmitting unit information received by the receiving unit; and
a transmitting unit that arranges and transmits unit information in a sequence that is based on the transmission information created by the transmission information creation unit.

9. An information delivery system comprising:
a server device connected to at least one terminal device via a buffer device, wherein the server device delivers to the terminal device via the buffer device an information that is temporally continuous and includes a plurality of unit information, wherein the buffer device includes,
a receiving unit which receives unit information from the server device;
a delivery destination information storage unit which stores delivery destination information that relates to a destination of a delivery of each delivery destination;
a priority degree information creation unit that, based on the delivery destination information stored in the delivery destination information storage unit as well as unit attribute information that relates to time spans and attributes of the unit information received by the receiving unit, creates information about a degree of priority of the information unit received by the receiving unit;
a transmission information creation unit that, based on the priority degree information created by the priority degree creation unit, creates transmission information that instructs that only the unit information whose degree of priority meets predetermined conditions is to be transmitted; and
a transmitting unit that transmits the transmission information created by the transmission information creation unit to the terminal device and, in accordance with a transmission request from the terminal device that is based on the transmission information, wherein the transmitting unit transmits only the unit information whose degree of priority meets the predetermined conditions.

10. An information delivery system comprising:
a server device connected to at least one terminal device via a buffer device, wherein the server device delivers to the terminal device via the buffer device an information that is temporally continuous and includes a plurality of unit information, wherein the buffer device includes,
a receiving unit which receives unit information from the server device;
a delivery destination information storage unit which stores delivery destination information that relates to a destination of a delivery of each delivery destination;
a priority degree information creation unit that, based on the delivery destination information stored in the delivery destination information storage unit as well as unit attribute information that relates to time spans and attributes of the unit information received by the receiving unit, creates information about a degree of priority of the information unit received by the receiving unit;
a transmission information creation unit that, based on the priority degree information created by the priority degree creation unit, creates transmission information showing a sequence for transmitting unit information received by the receiving unit; and
a transmitting unit that transmits the transmission information created by the transmission information creation unit to the terminal device and that arranges and transmits the unit information in a sequence that is in accordance with a transmission request from the terminal device that is based on the transmission information.

11. A method of delivering information that is temporally continuous and includes a plurality of unit information, the method comprising:
a receiving step of receiving unit information;
a delivery destination information storage step of storing delivery destination information that relates to a destination of a delivery of each delivery destination;
an additional information storage step of storing additional information that is to be added to the unit information;
a transmission information creation step of, based on the delivery destination information stored in the delivery destination information storage step as well as unit attribute information that relates to time spans and attributes of unit information received in the receiving step, creating transmission information that instructs that the additional information stored in the additional information storage step be added to the unit information received in the receiving step and then transmitted; and
a transmitting step of, based on the transmission information created in the transmission information creation step, adding the additional information stored in the additional information storage step to the unit information received in the receiving step and transmitting the unit information to which the additional information has been added.

12. A method of delivering information that is temporally continuous and includes a plurality of unit information, the method comprising:
a receiving step of receiving unit information;
a delivery destination information storage step of storing delivery destination information that relates to a destination of a delivery of each delivery destination;
an additional information storage step of storing additional information that is to be added to the unit information;
a transmission information creation step of, based on the delivery destination information stored in the delivery destination information storage step as well as unit attribute information that relates to time spans and attributes of unit information received in the receiving step, creating transmission information that instructs that the additional information stored in the additional information storage step be added to the unit information received in the receiving step and then transmitted; and
a transmitting step of transmitting transmission information created in the transmission information creation step to the delivery destination and, in accordance with a transmission request from the delivery destination that is based on the transmission information, adding the additional information stored in the additional information storage step to the unit information received in the receiving step and transmitting the unit information to which the additional information has been added.

13. A method of delivering information that is temporally continuous and includes a plurality of unit information, the method comprising:
a receiving step of receiving unit information;
a delivery destination information storage step of storing delivery destination information that relates to a destination of a delivery of each delivery destination;
an additional information storage step of storing additional information that is to be added to the unit information;
a transmission information creation step of, based on the delivery destination information stored in the delivery destination information storage step as well as unit attribute information that relates to time spans and attributes of unit information received in the receiving step, creating transmission information that instructs that the additional information stored in the additional information storage step be added to the unit information received in the receiving step and then transmitted;
an information unit transmitting step of, based on the transmission information created in the transmission information creation step, adding the additional information stored in the additional information storage step to the unit information received in the receiving step and transmitting the unit information to which the additional information has been added;
a new-unit attribute information creation step of creating new unit attribute information that corresponds to the unit information transmitted in the transmitting step; and
a new-unit attribute information transmitting step of transmitting the new unit attribute information created in the new-unit attribute information creation step.

14. A method of delivering information that is temporally continuous and includes a plurality of unit information, the method comprising:
a receiving step of receiving unit information;
a delivery destination information storage step of storing delivery destination information that relates to a destination of a delivery of each delivery destination;
a link information storage step of storing link information used for forming a link to the additional information that is to be added to the unit information;
a transmission information creation step of, based on the delivery destination information stored in the delivery destination information storage step as well as unit attribute information that relates to time spans and attributes of unit information received in the receiving step, creating transmission information that instructs that the link information stored in the link information storage step is to be added to the unit information received in the receiving step and then transmitted; and
a transmitting step of, based on the transmission information created in the transmission information creation step, adding the link information stored in the link information storage step to the unit information received in the receiving step and transmitting the unit information to which the link information has been added.

15. A method of delivering information that is temporally continuous and includes a plurality of unit information, the method comprising:
a receiving step of receiving unit information;
a delivery destination information storage step of storing delivery destination information that relates to a destination of a delivery of each delivery destination;
a link information storage step of storing link information used for forming a link to the additional information that is to be added to unit information;
a transmission information creation step of, based on the delivery destination information stored in the delivery destination information storage step as well as unit attribute information that relates to time spans and attributes of unit information received in the receiving step, creating transmission information that instructs that the link information stored in the link information storage step is to be added to the unit information received in the receiving step and then transmitted; and
a transmitting step of transmitting the transmission information created in the transmission information creation step to a delivery destination and, in accordance with a transmission request from the delivery destination that is based on the transmission information, adding the link information stored in the link information storage step to the unit information received in the receiving step and transmitting the unit information to which the link information has been added.

16. A method of delivering information that is temporally continuous and includes a plurality of unit information, the method comprising:
a receiving step of receiving unit information;
a delivery destination information storage step of storing delivery destination information that relates to a destination of a delivery of each delivery destination;
a link information storage step of storing link information to additional information that is to be added to the unit information;
a transmission information creation step of, based on the delivery destination information stored in the delivery destination information storage step as well as unit attribute information that relates to time spans and attributes of unit information received in the receiving step, creating transmission information that instructs that the link information stored in the link information storage step is to be added to the unit information received in the receiving step and then transmitted;
an information unit transmitting step of, based on the transmission information created in the transmission information creation step, adding the link information stored in the link information storage step to the unit information received in the receiving step and transmitting the unit information to which the link information has been added;
a new-unit attribute information creation step of creating new unit attribute information that corresponds to the unit information transmitted in the transmitting step; and
a new-unit attribute information transmitting step of transmitting the new unit attribute information created in the new-unit attribute information creation step.

17. A method of delivering information that is temporally continuous and includes a plurality of unit information, the method comprising:
a receiving step of receiving unit information;
a delivery destination information storage step of storing delivery destination information that relates to a destination of a delivery of each delivery destination;
a priority degree information creation step of, based on the delivery destination information stored in the delivery destination information storage step as well as unit attribute information that relates to time spans and attributes of unit information received in the receiving step, creating information about a degree of priority of the information unit received in the receiving step;
a transmission information creation step of, based on priority degree information created in the priority degree creation step, creating transmission information that instructs that only the unit information whose degree of priority meets predetermined conditions is to be transmitted; and
a transmitting step of, based on the transmission information created in the transmission information creation step, transmitting only the unit information whose degree of priority meets the predetermined conditions.

18. A method of delivering information that is temporally continuous and includes a plurality of unit information, the method comprising:
a receiving step of receiving unit information;
a delivery destination information storage step of storing delivery destination information that relates to a destination of a delivery of each delivery destination;
a priority degree information creation step of, based on the delivery destination information stored in the delivery destination information storage step as well as unit attribute information that relates to time spans and attributes of unit information received in the receiving step, creating information about a degree of priority of the information unit received in the receiving step;
a transmission information creation step of, based on priority degree information created in the priority degree creation step, creating transmission information showing a sequence for transmitting the unit information received in the receiving step; and
a transmitting step that arranges and transmits unit information in a sequence that is based on the transmission information created in the transmission information creation step.

19. A method of delivering information that is temporally continuous and includes a plurality of unit information, the method comprising:
a receiving step of receiving unit information;
a delivery destination information storage step of storing delivery destination information that relates to a destination of a delivery of each delivery destination;
a priority degree information creation step of, based on the delivery destination information stored in the delivery destination information storage step as well as unit attribute information that relates to time spans and attributes of unit information received in the receiving step, creating information about a degree of priority of the information unit received in the receiving step;
a transmission information creation step of, based on priority degree information created in the priority degree creation step, creating transmission information that instructs that only the unit information whose degree of priority meets predetermined conditions is to be transmitted; and
a transmitting step of transmitting the transmission information created in the transmission information creation step to a delivery destination and, in accordance with a transmission request from the delivery destination that is based on the transmission information, transmitting only the unit information whose degree of priority meets the predetermined conditions.

20. A method of delivering information that is temporally continuous and includes a plurality of unit information, the method comprising:
a receiving step of receiving unit information;
a delivery destination information storage step of storing delivery destination information that relates to a destination of a delivery of each delivery destination;
a priority degree information creation step of, based on the delivery destination information stored in the delivery destination information storage step as well as unit attribute information that relates to time spans and attributes of unit information received in the receiving step, creating information about a degree of priority of the information unit received in the receiving step;
a transmission information creation step of, based on priority degree information created in the priority degree creation step, creating transmission information showing a sequence for transmitting the unit information received in the receiving step; and
a transmitting step of transmitting the transmission information created in the transmission information creation step to the delivery destination and arranging and transmitting the unit information in a sequence that is in accordance with a transmission request from the delivery destination that is based on the transmission information.

21. A computer program containing instructions which when executed on a computer causes the computer to realize a method of delivering information that is temporally continuous and includes a plurality of unit information, the method comprising:
a receiving process of receiving unit information;
a delivery destination information storage process of storing delivery destination information that relates to a destination of a delivery of each delivery destination;
an additional information storage process of storing additional information that is to be added to the unit information;
a transmission information creation process of, based on the delivery destination information stored in the delivery destination information storage process as well as unit attribute information that relates to time spans and attributes of unit information received in the receiving process, creating transmission information that instructs that the additional information stored in the additional information storage process is to be added to the unit information received in the receiving process and then transmitted; and
a transmitting process of, based on the transmission information created in the transmission information creation process, adding additional information stored in the additional information storage process to the unit information received in the receiving process and transmitting the unit information to which the additional information has been added.

22. A computer program containing instructions which when executed on a computer causes the computer to realize a method of delivering information that is temporally continuous and includes a plurality of unit information, the method comprising:
a receiving process of receiving unit information;
a delivery destination information storage process of storing delivery destination information that relates to a destination of a delivery of each delivery destination;
an additional information storage process of storing additional information that is to be added to the unit information;
a transmission information creation process of, based on the delivery destination information stored in the delivery destination information storage process as well as unit attribute information that relates to time spans and attributes of unit information received in the receiving process, creating transmission information that instructs that the additional information stored in the additional information storage process is to be added to the unit information received in the receiving process and then transmitted; and
a transmitting process of transmitting the transmission information created in the transmission information creation process to the delivery destination and, in accordance with a transmission request from the delivery destination that is based on the transmission information, adding the additional information stored in the additional information storage process to the unit information received in the receiving process and transmitting the unit information to which the additional information has been added.

23. A computer program containing instructions which when executed on a computer causes the computer to realize a method of delivering information that is temporally continuous and includes a plurality of unit information, the method comprising:
a receiving process of receiving unit information;
a delivery destination information storage process of storing delivery destination information that relates to a destination of a delivery of each delivery destination;
an additional information storage process of storing additional information that is to be added to the unit information;
a transmission information creation process of, based on the delivery destination information stored in the delivery destination information storage process as well as unit attribute information that relates to time spans and attributes of unit information received in the receiving process, creating transmission information that instructs that the additional information stored in the additional information storage process is to be added to the unit information received in the receiving process and then transmitted;
an information unit transmitting process of, based on the transmission information created in the transmission information creation process, adding additional information stored in the additional information storage process to the unit information received in the receiving process and transmitting the unit information to which the additional information has been added;
a new-unit attribute information creation process of creating new unit attribute information that corresponds to the unit information transmitted in the transmitting process; and
anew-unit attribute information transmitting process of transmitting the new unit attribute information created in the new-unit attribute information creation process.

24. A computer program containing instructions which when executed on a computer causes the computer to realize amethod of delivering information that is temporally continuous and includes a plurality of unit information, the method comprising:
a receiving process of receiving unit information;
a delivery destination information storage process of storing delivery destination information that relates to a destination of a delivery of each delivery destination;
a link information storage process of storing link information used for forming a link to the additional information that is to be added to the unit information;
a transmission information creation process of, based on the delivery destination information stored in the delivery destination information storage process as well as unit attribute information that relates to time spans and attributes of unit information received in the receiving process, creating transmission information that instructs that the link information stored in the link information storage process is to be added to the unit information received in the receiving process and then transmitted; and
a transmitting process of, based on the transmission information created in the transmission information creation process, adding the link information stored in the link information storage process to the unit information received in the receiving process and transmits the unit information to which the link information has been added.

25. A computer program containing instructions which when executed on a computer causes the computer to realize a method of delivering information that is temporally continuous and includes a plurality of unit information, the method comprising:
a receiving process of receiving unit information;
a delivery destination information storage process of storing delivery destination information that relates to a destination of a delivery of each delivery destination;
a link information storage process of storing link information used for forming a link to the additional information that is to be added to unit information;
a transmission information creation process of, based on the delivery destination information stored in the delivery destination information storage process as well as unit attribute information that relates to time spans and attributes of unit information received in the receiving process, creating transmission information that instructs that the link information stored in the link information storage process is to be added to the unit information received in the receiving process and then transmitted; and
a transmitting process of transmitting the transmission information created in the transmission information creation process to a delivery destination and, in accordance with a transmission request from the delivery destination that is based on the transmission information, adding the link information stored in the link information storage process to the unit information received in the receiving process and transmits the unit information to which the link information has been added.

26. A computer program containing instructions which when executed on a computer causes the computer to realize a method of delivering information that is temporally continuous and includes a plurality of unit information, the method comprising:
a receiving process of receiving unit information;
a delivery destination information storage process of storing delivery destination information that relates to a destination of a delivery of each delivery destination;
a link information storage process of storing link information to additional information that is to be added to the unit information;
a transmission information creation process of, based on the delivery destination information stored in the delivery destination information storage process as well as unit attribute information that relates to time spans and attributes of unit information received in the receiving process, creating transmission information that instructs that the link information stored in the link information storage process is to be added to the unit information received in the receiving process and then transmitted;
an information unit transmitting process of, based on the transmission information created in the transmission information creation process, adding the link information stored in the link information storage process to the unit information received in the receiving process and transmitting the unit information to which the link information has been added;
a new-unit attribute information creation process of creating new unit attribute information that corresponds to the unit information transmitted in the transmitting process; and
a new-unit attribute information transmitting process of transmitting the new unit attribute information created in the new-unit attribute information creation process.

27. A computer program containing instructions which when executed on a computer causes the computer to realize a method of delivering information that is temporally continuous and includes a plurality of unit information, the method comprising:
a receiving process of receiving unit information;
a delivery destination information storage process of storing delivery destination information that relates to a destination of a delivery of each delivery destination;
a priority degree information creation process that, based on the delivery destination information stored in the delivery destination information storage process as well as unit attribute information that relates to time spans and attributes of unit information received in the receiving process, creates information about a degree of priority of the information unit received in the receiving process;
a transmission information creation process of, based on priority degree information created in the priority degree creation process, creating transmission information that instructs that only the unit information whose degree of priority meets predetermined conditions is to be transmitted; and
a transmitting process of, based on the transmission information created in the transmission information creation process, transmitting only the unit information whose degree of priority meets the predetermined conditions.

28. A computer program containing instructions which when executed on a computer causes the computer to realize amethod of delivering information that is temporally continuous and includes a plurality of unit information, the method comprising:
a receiving process of receiving unit information;
a delivery destination information storage process of storing delivery destination information that relates to a destination of a delivery of each delivery destination;
a priority degree information creation process of, based on the delivery destination information stored in the delivery destination information storage process as well as unit attribute information that relates to time spans and attributes of unit information received in the receiving process, creating information about a degree of priority of the information unit received in the receiving process;
a transmission information creation process of, based on priority degree information created in the priority degree creation process, creating transmission information showing a sequence for transmitting the unit information received in the receiving process; and
a transmitting process of arranging and transmitting the unit information in a sequence that is based on the transmission information created in the transmission information creation process.

29. A computer program containing instructions which when executed on a computer causes the computer to realize a method of delivering information that is temporally continuous and includes a plurality of unit information, the method comprising:
a receiving process of receiving unit information;
a delivery destination information storage process of storing delivery destination information that relates to a destination of a delivery of each delivery destination;
a priority degree information creation process of, based on the delivery destination information stored in the delivery destination information storage process as well as unit attribute information that relates to time spans and attributes of unit information received in the receiving process, creating information about a degree of priority of the information unit received in the receiving process;
a transmission information creation process of, based on priority degree information created in the priority degree creation process, creating transmission information that instructs that only the unit information whose degree of priority meets predetermined conditions is to be transmitted; and
a transmitting process of transmitting the transmission information created in the transmission information creation process to a delivery destination and, in accordance with a transmission request from the delivery destination that is based on the transmission information, transmitting only the unit information whose degree of priority meets the predetermined conditions.

30. A computer program containing instructions which when executed on a computer causes the computer to realize a method of delivering information that is temporally continuous and includes a plurality of unit information, the method comprising:
a receiving process of receiving unit information;
a delivery destination information storage process of storing delivery destination information that relates to a destination of a delivery of each delivery destination;
a priority degree information creation process of, based on the delivery destination information stored in the delivery destination information storage process as well as unit attribute information that relates to time spans and attributes of unit information received in the receiving process, creating information about a degree of priority of the information unit received in the receiving process;
a transmission information creation process of, based on priority degree information created in the priority degree creation process, creating transmission information showing a sequence for transmitting the unit information received in the receiving process; and
a transmitting process of transmitting the transmission information created in the transmission information creation process to the delivery destination and arranging and transmitting the unit information in a sequence that is in accordance with a transmission request from the delivery destination that is based on the transmission information.
